# EUROPEAN PATENT APPLICATION

(11) **EP 4 455 778 A1**
(43) Date of publication of application: **30.10.2024**
(21) Application number: 23746738.6
(22) Date of filing: 16.01.2023
(51) Int. Cl.: G02F 1/37, G02F 1/39

(54) **OPTICAL DEVICE AND LIGHT PRODUCTION METHOD**

(30) Priority: 28.01.2022 JP 2022011485
(71) Applicant: Hamamatsu Photonics K.K., Hamamatsu-shi, Shizuoka 435-8558 (JP)
(72) Inventor: MORITA Takaaki, Hamamatsu-shi, Shizuoka 435-8558 (JP); KATO Yoshinori, Hamamatsu-shi, Shizuoka 435-8558 (JP); IGUCHI Takuto, Hamamatsu-shi, Shizuoka 435-8558 (JP); KAWAI Kazuki, Hamamatsu-shi, Shizuoka 435-8558 (JP)
(74) Representative: Grünecker Patent- und Rechtsanwälte PartG mbB
(86) International application number: PCT/JP2023/001057
(87) International publication number: WO 2023/145524

(57) **Abstract**

An optical device 1 includes a light emitting unit 2, a phase adjustment unit 3, and a light generation unit 4. The light emitting unit 2 emits first light L1 and second light L2 having different polarization states. The light generation unit 4 generates third light L3 on the basis of the first light L1 and the second light L2 whose phase difference has been adjusted by the phase adjustment unit 3. The first light L1 and the second light L2 are incident on a birefringent element 14. A control unit 15 controls at least one of a temperature of the birefringent element 14 and a voltage applied to the birefringent element 14. The light generation unit 4 includes a nonlinear optical element 17 generating the third light L3 on the basis of at least one of the first light L1 and the second light L2. The first light L1 and the second light L2 emitted from the birefringent element 14 are incident on the nonlinear optical element 17 of the light generation unit 4.

## Description

### Technical Field

The present invention relates to an optical device and a light generation method.

### Background Art

A technology is known that converts a wavelength of light using a nonlinear optical medium and outputs light having a desired wavelength (for example, Patent Literature 1). When light satisfying a predetermined condition is incident on a nonlinear optical medium, light having a wavelength different from that of the incident light is emitted from the nonlinear optical medium by a nonlinear optical effect.

### Citation List

### Patent Literature

Patent Literature 1: Japanese Unexamined Patent Publication No. 2020-79939

### Summary of Invention

### Technical Problem

An optical technique is used for various purposes, and the output of light having a wavelength suitable for the purpose is required. However, the wavelength of light output by laser oscillation is limited. Therefore, optical devices have been developed that output light having a desired wavelength through wavelength conversion. For example, when laser light is emitted into water in processing using the laser light, a fundamental wave of a YAG laser in a wavelength band of about 1 µm is relatively likely to be absorbed by water. In this regard, laser light in a wavelength band of about 532 nm is less likely to be absorbed by water, and energy loss can be reduced. The wavelength of 532 nm corresponds to a second harmonic of a fundamental wave of a Nd:YAG laser. In addition, as the wavelength of the laser light is shorter, a focal point can be more reduced. Therefore, a third harmonic or a fourth harmonic of the YAG laser makes it possible to achieve finer processing.

As described above, light having a desired wavelength can be generated by wavelength conversion using nonlinear optical phenomena such as a sum frequency, a difference frequency, and optical parametric generation. These nonlinear optical phenomena can be produced by making light incident on a nonlinear optical medium such that a predetermined condition, such as a phase matching condition, is satisfied. It is important to control a phase relationship of light incident on the nonlinear optical medium so as to satisfy the phase matching condition, in order to ensure the wavelength conversion efficiency of the nonlinear optical medium. It is important to control a phase relationship of light emitted from the nonlinear optical medium in order to ensure the intensity of the light emitted from the nonlinear optical medium.

For example, the intensity of the light output by wavelength conversion using a plurality of nonlinear optical media depends on the phase relationship of light generated by each of the nonlinear optical media. For example, when two nonlinear optical media are used and the phase of light generated by a first nonlinear optical medium is opposite to the phase of light generated by a second nonlinear optical medium, the intensity of light obtained by combining these light components is reduced.

As described above, the output of desired light with a desired intensity from the nonlinear optical medium is related to the phase of light related to a nonlinear optical process. In this regard, the phase of light is modulated during propagation. For example, when light propagates in the air, the phase of the light is modulated by the wavelength dispersion of the air. Therefore, it has been difficult to control the phase of light in the nonlinear optical medium so as to satisfy a desired condition.

It is also considered to adjust the phase of light incident on the nonlinear optical medium using a delay mechanism. However, in the adjustment resolution of the delay mechanism using a micrometer, it is difficult to achieve fine adjustment corresponding to a desired wavelength. The adjustment resolution of the delay mechanism using a piezo element is higher than that using the micrometer. However, the delay mechanism using the piezo element has low robustness, and positional deviation is likely to occur due to vibration.

It is also considered that a dispersion medium is disposed on the upstream side of a nonlinear optical medium and a working length of the dispersion medium is adjusted to adjust the phase of light incident on the nonlinear optical medium. The working length of the dispersion medium is the distance that light incident on the dispersion medium travels in the dispersion medium, that is, an optical path length in the dispersion medium. For example, the incident position and incident angle of light on the dispersion medium can be changed to adjust the working length of the dispersion medium and to adjust the phase of the incident light. However, when the phase of light related to the nonlinear optical process is adjusted by adjusting the working length of the dispersion medium, the working length of the dispersion medium needs to be strictly adjusted. Therefore, in an optical system making light incident on the nonlinear optical medium, a complex structure, a precise design, and strict disposition of optical elements are required.

An object of an aspect of the present invention is to provide an optical device that can easily and reliably generate light having a desired wavelength and a desired intensity. An object of another aspect of the present invention is to provide a light generation method that can easily and reliably generate light having a desired wavelength and a desired intensity.

### Solution to Problem

According to an aspect of the present invention, an optical device includes a light emitting unit, a phase adjustment unit, and a light generation unit. The light emitting unit emits first light and second light having different polarization states. The phase adjustment unit adjusts a phase difference between the first light and the second light emitted from the light emitting unit. The light generation unit generates third light on the basis of the first light and the second light whose phase difference has been adjusted by the phase adjustment unit. The phase adjustment unit includes a birefringent element and a control unit. The first light and the second light are incident on the birefringent element. The control unit controls at least one of a temperature of the birefringent element and a voltage applied to the birefringent element. The light generation unit includes a nonlinear optical element generating the third light on the basis of at least one of the first light and the second light. The first light and the second light emitted from the birefringent element are incident on the nonlinear optical element of the light generation unit.

In the above-described aspect, the first light and the second light are incident on the birefringent element. The control unit controls at least one of the temperature of the birefringent element and the voltage applied to the birefringent element. The phase difference between the first light and the second light incident on the birefringent element can be adjusted by controlling at least one of the temperature of the birefringent element and the voltage applied to the birefringent element. The first light and the second light emitted from the birefringent element are incident on the nonlinear optical element. According to this configuration, it is possible to control the phase difference between the first light and the second light incident on the nonlinear optical element with higher accuracy. As a result, it is possible to easily and reliably generate light having a desired wavelength and a desired intensity.

In the above-described aspect, the birefringent element may be disposed such that a propagation direction of at least one of the first light and the second light in the birefringent element and an optical axis of the birefringent element intersect each other. In this case, the phase difference between the first light and the second light having different polarization states can be adjusted with higher accuracy and over a wider range by controlling at least one of the temperature of the birefringent element and the voltage applied to the birefringent element.

In the above-described aspect, the nonlinear optical element of the light generation unit may be disposed such that an optical axis of the nonlinear optical element of the light generation unit is parallel to a first virtual plane or is parallel to a second virtual plane. The first virtual plane is parallel to the optical axis of the birefringent element and the propagation direction of the at least one of the first light and the second light in the birefringent element. The second virtual plane is orthogonal to the first virtual plane and is parallel to the propagation direction of the at least one light component. In this case, it is possible to control the phase difference between the first light and the second light incident on the nonlinear optical element with higher accuracy and over a wider range.

In the above-described aspect, the polarization state of one of the first light and the second light incident on the birefringent element may be linearly polarized light that is parallel to a virtual plane parallel to the propagation direction of the one light component and the optical axis of the birefringent element. In this case, it is possible to control the phase difference between the first light and the second light with higher accuracy and over a wider range.

In the above-described aspect, the polarization state of one of the first light and the second light incident on the birefringent element may be linearly polarized light that is orthogonal to a virtual plane parallel to the propagation direction of the one light component and the optical axis of the birefringent element. In this case, it is possible to control the phase difference between the first light and the second light with higher accuracy and over a wider range.

In the above-described aspect, the first light and the second light may have different frequencies. In this case, it is possible to easily and reliably generate light having a desired wavelength and a desired intensity.

In the above-described aspect, the nonlinear optical element of the light generation unit may have an incident surface on which the first light and the second light are incident. The control unit may control at least one of the temperature of the birefringent element and the voltage applied to the birefringent element to adjust the phase difference between the first light and the second light in the incident surface of the nonlinear optical element of the light generation unit. In this case, the intensity of the third light generated in the nonlinear optical element is adjusted.

In the above-described aspect, the nonlinear optical element of the light generation unit may include an incident surface on which the first light and the second light are incident. The control unit may control at least one of the temperature of the birefringent element and the voltage applied to the birefringent element such that phases of the first light and the second light are matched with each other in the incident surface of the nonlinear optical element of the light generation unit. In this case, the intensity of the third light generated in the nonlinear optical element can be improved.

In the above-described aspect, the third light may have a frequency different from the frequencies of the first light and the second light. In this case, it is possible to easily generate light having a desired wavelength and a desired intensity.

In the above-described aspect, the nonlinear optical element of the light generation unit may generate the third light using a nonlinear optical effect according to the first light and the second light. In this case, it is possible to easily generate light having a desired wavelength and a desired intensity.

In the above-described aspect, the frequency of the third light may be a sum of the frequency of the first light and the frequency of the second light. In this case, it is possible to easily generate light having a desired wavelength and a desired intensity.

In the above-described aspect, the frequency of the third light may be a difference between the frequency of the first light and the frequency of the second light. In this case, it is possible to easily generate light having a desired wavelength and a desired intensity.

In the above-described aspect, the first light incident on the nonlinear optical element of the light generation unit may be pump light. The second light incident on the nonlinear optical element of the light generation unit may be signal light having a lower intensity than the pump light. The nonlinear optical element of the light generation unit may emit, as the third light, light obtained by adjusting the intensity of the signal light on the basis of the incident first light and second light. In this case, the intensity of the signal light output from the light generation unit is adjusted by adjusting the phase difference.

In the above-described aspect, the light emitting unit may include a nonlinear optical element emitting the first light and the second light. In this case, it is possible to easily generate light having a desired wavelength and a desired intensity.

In the above-described aspect, the light emitting unit may include a nonlinear optical element. The nonlinear optical element of the light emitting unit may generate, as the second light, a second harmonic having a polarization state different from a polarization state of a fundamental wave on the basis of the fundamental wave and emit the fundamental wave as the first light together with the second light. The nonlinear optical element of the light generation unit may generate a second harmonic as the third light on the basis of the incident first light and combine the second light and the third light. In this case, the intensity of the second harmonic output from the light generation unit can be adjusted by adjusting the phase difference.

In the above-described aspect, the light emitting unit may include a nonlinear optical element. The nonlinear optical element of the light emitting unit may generate fourth light having a polarization state different from the polarization state of the first light or the second light on the basis of the first light and the second light and emit the first light and the second light together with the fourth light. The nonlinear optical element of the light generation unit may be disposed such that the first light, the second light, and the fourth light emitted from the birefringent element are incident thereon and combine the third light and the fourth light. In this case, it is possible to adjust the intensity of light generated by combining the third light and the fourth light.

In the above-described aspect, the frequency of the third light and the frequency of the fourth light may be the sum of the frequency of the first light and the frequency of the second light. In this case, the intensity of the sum frequency output from the light generation unit is adjusted by adjusting the phase difference.

In the above-described aspect, the frequency of the third light and the frequency of the fourth light may be the difference between the frequency of the first light and the frequency of the second light. In this case, the intensity of the difference frequency output from the light generation unit is adjusted by adjusting the phase difference.

In the above-described aspect, the light emitting unit may include a nonlinear optical element. The nonlinear optical element of the light emitting unit may generate, as the second light, light having a polarization state different from the polarization state of the first light or fourth light having the same polarization state as the first light on the basis of the first light and the fourth light and emit the first light, the second light, and the fourth light together. The nonlinear optical element of the light generation unit may be disposed such that the first light, the second light, and the fourth light emitted from the birefringent element are incident thereon and combine the second light and the third light. In this case, it is possible to adjust the intensity of the light generated by combining the second light and the third light.

In the above-described aspect, the frequency of the second light and the frequency of the third light may be a sum of the frequency of the first light and a frequency of the fourth light. In this case, the intensity of the sum frequency output from the light generation unit is adjusted by adjusting the phase difference.

In the above-described aspect, the frequency of the second light and the frequency of the third light may be a difference between the frequency of the first light and a frequency of the fourth light. In this case, the intensity of the difference frequency output from the light generation unit is adjusted by adjusting the phase difference.

In the above-described aspect, the light emitting unit may include a nonlinear optical element. The nonlinear optical element of the light emitting unit may generate a second harmonic as fourth light on the basis of a fundamental wave. The fundamental wave may include polarized components in first and second directions orthogonal to each other. The nonlinear optical element of the light emitting unit may emit the polarized component of the fundamental wave in the first direction as the first light and the polarized component of the fundamental wave in the second direction as the second light together with the fourth light. The nonlinear optical element of the light generation unit may be disposed such that the first light, the second light, and the fourth light emitted from the birefringent element are incident thereon, generate a second harmonic as the third light on the basis of the incident first light and second light, and combine the third light and the fourth light. In this case, the intensity of the second harmonic output from the light generation unit is adjusted by adjusting the phase difference.

In the above-described aspect, the light emitting unit may include a nonlinear optical element. The nonlinear optical element of the light emitting unit may generate the second light and fourth light on the basis of pump light and emit the pump light as the first light together with the second light and the fourth light. The second light may have a polarization state different from a polarization state of the pump light. The fourth light may have a polarization state different from the polarization state of the pump light and have a frequency different from the frequency of the second light. The nonlinear optical element of the light generation unit may be disposed such that the first light, the second light, and the fourth light emitted from the birefringent element are incident thereon, generate fifth light and sixth light on the basis of the incident first light, second light, and fourth light, combine the second light and the fifth light and combine the fourth light and the sixth light to amplify an intensity of at least one of the second light and the fourth light, and emit the combined light as the third light. The fifth light may have the same polarization state and frequency as the second light. The sixth light may have the same polarization state and frequency as the fourth light. In this case, it is possible to select which of the combination of the second light and the fifth light and the combination of the fourth light and the sixth light is to be improved in light intensity.

In the above-described aspect, the light emitting unit may include a nonlinear optical element. The nonlinear optical element of the light emitting unit may generate the second light and fourth light on the basis of pump light and emit the pump light as the first light together with the second light and the fourth light. The fourth light may have the same polarization state as the pump light. The second light may have a polarization state different from the polarization state of the pump light and have a frequency different from a frequency of the fourth light. The nonlinear optical element of the light generation unit may be disposed such that the first light, the second light, and the fourth light emitted from the birefringent element are incident thereon, generate fifth light and sixth light on the basis of the incident first light, second light, and fourth light, combine the second light and the fifth light and combine the fourth light and the sixth light to amplify an intensity of at least one of the fifth light and the sixth light, and emit the combined light as the third light. The fifth light may have the same polarization state and frequency as the second light. The sixth light may have the same polarization state and frequency as the fourth light. In this case, it is possible to select which of the combination of the second light and the fifth light and the combination of the fourth light and the sixth light is to be improved in light intensity.

In the above-described aspect, the control unit may control at least one of the temperature of the birefringent element and the voltage applied to the birefringent element such that the phases of the first light and the second light are matched with each other and the phase of the first light and the phase of the fourth light deviate from each other. In this case, the light intensity of the combination of the second light and the fifth light is improved, and the light intensity of the combination of the fourth light and the sixth light is reduced.

In the above-described aspect, the nonlinear optical element of the light emitting unit and the nonlinear optical element of the light generation unit may be made of the same material. A direction of an optical axis of the nonlinear optical element of the light emitting unit with respect to incident light may be opposite to a direction of the optical axis of the nonlinear optical element of the light generation unit with respect to incident light. In this case, the influence of walk-off is reduced by a simple configuration.

In the above-described aspect, the birefringent element may include an incident surface on which the first light and the second light are incident. The optical axis of the birefringent element may be inclined with respect to the incident surface of the birefringent element such that walk-off occurring in the nonlinear optical element of the light emitting unit is reduced. In this case, the influence of the walk-off is reduced without depending on the disposition of the nonlinear optical element.

In the above-described aspect, the nonlinear optical element of the light generation unit and the birefringent element may be joined to each other. In this case, a propagation path in the air is reduced, and the deviation between the phases caused by air dispersion is reduced.

In the above-described aspect, the optical device may further include a light detection unit detecting the light emitted from the nonlinear optical element of the light generation unit. The control unit may perform feedback control on at least one of the temperature of the birefringent element and the voltage applied to the birefringent element on the basis of a detection result of the light detection unit. In this case, it is possible to generate light having a desired wavelength with higher accuracy and stability.

In the above-described aspect, the control unit may acquire a target value of an intensity of light and perform the feedback control on at least one of the temperature of the birefringent element and the voltage applied to the birefringent element such that the intensity of the light detected by the light detection unit is matched with the acquired target value. In this case, light having a desired wavelength and a desired intensity can be output more stably.

According to another aspect of the present invention, an optical device includes a light emitting unit, a phase adjustment unit, and a light generation unit. The light emitting unit emits first light and second light having different frequencies. The phase adjustment unit adjusts a phase difference between the first light and the second light emitted from the light emitting unit. The light generation unit generates third light on the basis of the first light and the second light whose phase difference has been adjusted by the phase adjustment unit. The phase adjustment unit includes a phase control element and a control unit. The first light and the second light are incident. The control unit controls at least one of a temperature of the phase control element and a voltage applied to the phase control element. The light generation unit includes a nonlinear optical element generating the third light on the basis of at least one of the first light and the second light. The first light and the second light emitted from the phase control element are incident on the nonlinear optical element of the light generation unit.

In the above-described aspect, the first light and the second light are incident on the phase control element. The control unit controls at least one of the temperature of the phase control element and the voltage applied to the phase control element. The phase difference between the first light and the second light incident on the phase control element can be adjusted by controlling at least one of the temperature of the phase control element and the voltage applied to the phase control element. The first light and the second light emitted from the phase control element are incident on the nonlinear optical element. According to this configuration, it is possible to control the phase difference between the first light and the second light incident on the nonlinear optical element with higher accuracy. As a result, it is possible to easily and reliably generate light having a desired wavelength and a desired intensity.

According to still another aspect of the present invention, a light generation method includes: allowing first light and second light to be incident on a birefringent element; allowing the first light and the second light to be incident on a nonlinear optical element; and controlling at least one of a temperature of the birefringent element and a voltage applied to the birefringent element to adjust a phase difference between the first light and the second light. The first light and the second light have different polarization states. The first light and the second light emitted from the birefringent element are incident on the nonlinear optical element.

In the above-described aspect, the first light and the second light emitted from the birefringent element are incident on the nonlinear optical element. At least one of the temperature of the birefringent element and the voltage applied to the birefringent element is controlled to adjust the phase difference between the first light and the second light. According to this method, it is possible to control the phase difference between the first light and the second light incident on the nonlinear optical element with higher accuracy. As a result, it is possible to easily and reliably generate light having a desired wavelength and a desired intensity.

According to yet another aspect of the present invention, a light generation method includes: allowing first light and second light to be incident on a phase control element; allowing the first light and the second light to be incident on a nonlinear optical element; and controlling at least one of a temperature of the phase control element and a voltage applied to the phase control element to adjust a phase difference between the first light and the second light. The first light and the second light have different frequencies. The first light and the second light emitted from the phase control element are incident on the nonlinear optical element.

In the above-described aspect, the first light and the second light emitted from the phase control element are incident on the nonlinear optical element. At least one of the temperature of the phase control element and the voltage applied to the phase control element is controlled to adjust the phase difference between the first light and the second light. According to this method, it is possible to control the phase difference between the first light and the second light incident on the nonlinear optical element with higher accuracy. As a result, it is possible to easily and reliably generate light having a desired wavelength and a desired intensity.

### Advantageous Effects of Invention

An aspect and another aspect of the present invention provide an optical device that can easily and reliably generate light having a desired wavelength and a desired intensity. Still another aspect of the present invention provides a light generation method that can easily and reliably generate light having a desired wavelength and a desired intensity.

### Brief Description of Drawings

FIG. 1 is a schematic diagram illustrating an example of a configuration of an optical device according to an embodiment.
FIG. 2 is a partially enlarged view illustrating an optical system of the optical device.
FIG. 3 is a partially enlarged view illustrating an optical system of an optical device according to a modification example of this embodiment.
FIG. 4 is a partially enlarged view illustrating an optical system of an optical device according to a modification example of this embodiment.
FIG. 5 is a partially enlarged view illustrating an optical system of an optical device according to a modification example of this embodiment.
FIG. 6 is a partially enlarged view illustrating an optical system of an optical device according to a modification example of this embodiment.
FIG. 7 is a partially enlarged view illustrating an optical system of an optical device according to a modification example of this embodiment.
FIG. 8 is a partially enlarged view illustrating an optical system of an optical device according to a modification example of this embodiment.
FIGS. 9(a) and 9(b) are diagrams illustrating portions of optical systems according to this embodiment and a modification example.
FIG. 10 is a diagram illustrating a portion of an optical system according to a modification example of this embodiment.
FIGS. 11(a) and 11(b) are diagrams illustrating birefringent elements according to this embodiment and a modification example.
FIG. 12 is a schematic diagram illustrating a configuration of an optical device according to a modification example of this embodiment.
FIGS. 13(a) to 13(c) are diagrams illustrating portions of optical systems of optical devices according to modification examples of this embodiment.
FIG. 14 is a schematic diagram illustrating a configuration of an optical device according to a modification example of this embodiment.
FIG. 15 is a schematic diagram illustrating a configuration of an optical device according to a modification example of this embodiment.
FIG. 16 is a flowchart illustrating a control data acquisition method.
FIG. 17 is a diagram illustrating an example of control data.
FIG. 18 is a flowchart illustrating an example of a light generation method.
FIG. 19 is a partially enlarged view illustrating an optical system of an optical device according to a modification example of this embodiment.
FIG. 20 is a partially enlarged view illustrating an example of an optical device according to this embodiment and a modification example.

### Description of Embodiments

Hereinafter, an embodiment of the present invention will be described in detail with reference to the accompanying drawings. In addition, in the description, the same elements or elements having the same functions are denoted by the same reference numerals, and a description thereof will not be repeated.

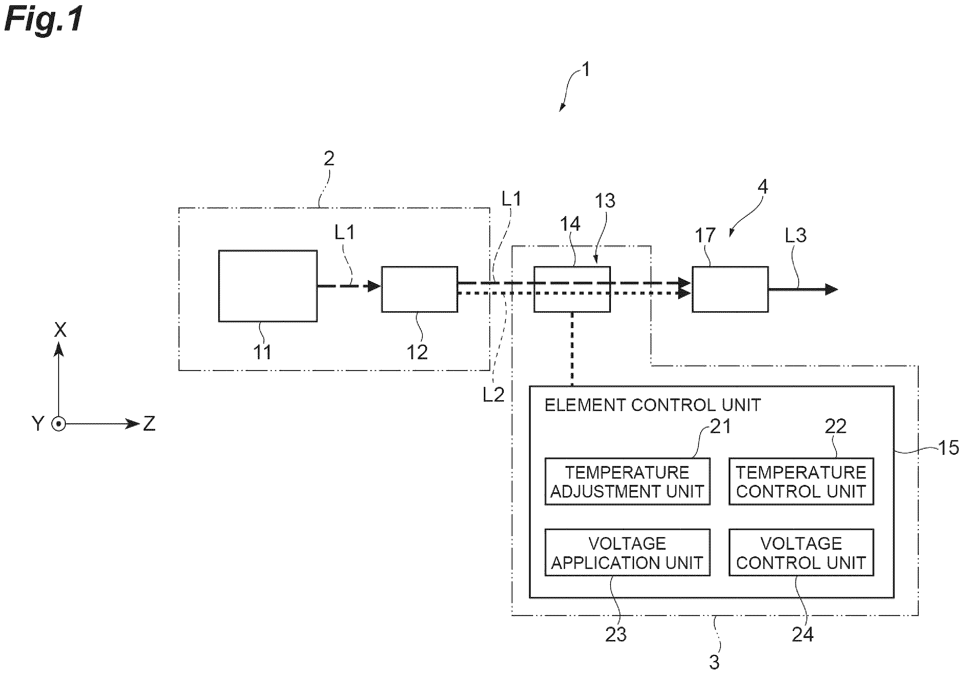

First, a schematic configuration of an optical device according to this embodiment will be described with reference to FIG. 1. FIG. 1 is a schematic diagram illustrating an example of the configuration of the optical device according to this embodiment. The X-axis, the Y-axis, and the Z-axis are orthogonal to one another. An optical device 1 generates light having a desired wavelength. The optical device 1 converts the wavelength of incident light into a desired wavelength using a nonlinear optical phenomenon and outputs the converted light. The optical device 1 includes a light emitting unit 2, a phase adjustment unit 3, and a light generation unit 4. In the following explanation, the "wavelength" is partially replaced with a "frequency".

The light emitting unit 2 emits light. The light emitted from the light emitting unit 2 is, for example, coherent light. The light emitted from the light emitting unit 2 is, for example, laser light. In this embodiment, the light emitting unit 2 includes a light source 11 emitting light L1. The light source 11 emits a fundamental wave as the light L1. The light source 11 includes, for example, a laser light source emitting laser light. The light source 11 includes, for example, a laser oscillator and emits the light L1 using laser oscillation.

In this embodiment, the light emitting unit 2 emits a plurality of light components. In the present specification, "the plurality of light components" mean light components different from each other in at least one of a polarization state and a frequency. In other words, the plurality of light components mean a plurality of polarized components having different polarization states or a plurality of frequency components having different frequencies. The plurality of light components emitted by the light emitting unit 2 have, for example, different polarization states and different frequencies.

The light source 11 emits, for example, linearly polarized light. The light source 11 includes, for example, a polarizing element and emits light transmitted through the polarizing element. As a modification example of this embodiment, the light source 11 may emit a plurality of light components having different polarization states. The light source 11 may emit, for example, circularly polarized light or elliptically polarized light. The light source 11 may emit, for example, a plurality of light components including polarized components orthogonal to each other.

In this embodiment, the light source 11 emits, for example, light having a single frequency component. The light having the single frequency component is, for example, coherent light and means light having a single spectrum. As a modification example of this embodiment, the light source 11 may emit light components having different frequency components. For example, the light source 11 may emit light having a discrete spectrum.

In this embodiment, the light emitting unit 2 further includes a nonlinear optical element 12. The nonlinear optical element 12 generates light having a frequency different from the frequency of light incident on the nonlinear optical element 12 on the basis of the incident light using a nonlinear optical phenomenon. The nonlinear optical element 12 converts a portion of the energy of the incident light into energy of light having a frequency different from the frequency of the incident light.

For example, the nonlinear optical element 12 generates light L2 using a nonlinear optical effect according to the incidence of the light L 1. The nonlinear optical element 12 generates the light L2 on the basis of the light L1 emitted from the light source 11 and emits the light L1 transmitted through the nonlinear optical element 12 together with the light L2. A material forming the nonlinear optical element 12 includes a nonlinear optical medium and varies depending on the nonlinear optical phenomenon occurring when light is generated. The material forming the nonlinear optical element 12 is selected according to the light incident on the nonlinear optical element 12 and the light emitted from the nonlinear optical element 12. The nonlinear optical element 12 is made of, for example, an LBO crystal. The LBO crystal is made of, for example, LiB₃O₅. The nonlinear optical element 12 may be made of, for example, a KTP crystal, a BBO crystal, a KDP crystal, or a DKDP crystal. The same crystal as the crystal forming the nonlinear optical element 12 can be used for a nonlinear optical element corresponding to the nonlinear optical element 12 in a modification example which will be described below.

The light L1 incident on the nonlinear optical element 12 and the light L2 emitted from the nonlinear optical element 12 satisfy phase matching or quasi-phase matching. The nonlinear optical element 12 generates a second harmonic using, for example, TYPE-1 phase matching. When the phase matching or the quasi-phase matching is satisfied, the nonlinear optical element 12 generates the light L2 as the second harmonic as the light L1 is incident.

The light L1 and the light L2 have different polarization states. The light L1 and the light L2 include polarized components orthogonal to each other. In this embodiment, the light L1 and the light L2 are linearly polarized light components having polarization directions orthogonal to each other.

The light L1 and the light L2 have different frequencies. The light L1 incident on the nonlinear optical element 12 and the light L2 emitted from the nonlinear optical element 12 satisfy the phase matching or the quasi-phase matching. The light L1 and the light L2 are emitted from the light emitting unit 2 and are incident on the phase adjustment unit 3.

The phase adjustment unit 3 adjusts a phase difference between a plurality of light components. The phase adjustment unit 3 adjusts the phase of the light incident on the phase adjustment unit 3. For example, the light L1 and the light L2 emitted from the light emitting unit 2 are incident on the phase adjustment unit 3. The phase adjustment unit 3 adjusts the phase difference between the light L1 and the light L2 emitted from the light emitting unit 2. For example, the phase adjustment unit 3 adjusts the phase difference between the light L1 and the light L2 according to the intensity of the light output from the optical device 1. The phase adjustment unit 3 includes a phase control element 13 and an element control unit 15.

The phase control element 13 is an optical element, modulates the phase of the light incident on the phase control element 13, and outputs the modulated light. The phase control element 13 has a refractive index varying depending on the frequency of the light transmitted through the phase control element 13. The refractive index of the phase control element 13 changes according to a change in the temperature of the phase control element 13 and a change in the voltage applied to the phase control element 13.

The phase control element 13 is, for example, a dispersion medium. The phase control element 13 includes at least one of an optical element without birefringence and an optical element with birefringence. The phase control element 13 includes at least one of an amorphous substance and a crystalline substance. Examples of the crystalline substance include isotropic crystals and anisotropic crystals. An amorphous material, such as glass, is given as an example of the amorphous substance. The phase control element 13 is made of, for example, a crystal having birefringence and axiality, a crystal that has birefringence but does not have axiality, or an amorphous material such as glass. An example of the optical element not having birefringence is an isotropic crystal in a normal state. Examples of the optical element having birefringence include isotropic crystals and anisotropic crystals to which stress, an electric field, or a magnetic field has been applied. In this embodiment, the phase control element 13 is configured by a birefringent element 14.

The birefringent element 14 is an optical element having birefringence. The light L1 and the light L2 are incident on the birefringent element 14. The birefringent element 14 emits the light L1 and the light L2 to be incident on a nonlinear optical element 17. The birefringent element 14 is made of a birefringent material. In this embodiment, the light L1 is ordinary light with respect to the birefringent element 14, and the light L2 is extraordinary light with respect to the birefringent element 14.

The refractive index of the birefringent material varies depending on the frequency and polarization state of the transmitted light. For example, in the birefringent element 14, the refractive index of ordinary light is different from the refractive index of extraordinary light. The refractive index of the birefringent material changes according to a change in the temperature of a medium and a change in the voltage applied to the medium. Therefore, the refractive index of the birefringent element 14 changes according to a change in the temperature of the birefringent element 14 and a change in the voltage applied to the birefringent element 14. For example, in the birefringent element 14, the rate of change in the refractive index according to the change in the temperature of the birefringent element 14 and the change in the voltage applied to the birefringent element 14 is different between the ordinary light and the extraordinary light.

The birefringent element 14 includes a crystal having axiality. In this embodiment, the birefringent element 14 is a uniaxial crystal and has one optical axis. The uniaxial crystal used for the birefringent element 14 is, for example, a YVO₄ crystal, a TiO₂ crystal, a sapphire crystal, a SiO₂ single crystal, or a MgF₂ crystal. As a modification example of this embodiment, the birefringent element 14 may be a biaxial crystal. The biaxial crystal used for the birefringent element 14 is made of, for example, YAP (YAlO₃).

The element control unit 15 controls the refractive index of the phase control element 13. The element control unit 15 controls the birefringence of the birefringent element 14. For example, the element control unit 15 controls the refractive index of each of the ordinary light and the extraordinary light in the birefringent element 14 according to the intensity of the light output from the optical device 1. For example, the element control unit 15 controls the refractive index of each of the ordinary light and the extraordinary light in the birefringent element 14 such that the intensity of the light output from the optical device 1 is maximized. Hereinafter, the "control of the refractive index of each of the ordinary light and the extraordinary light in the birefringent element" is simply referred to as "control of the birefringence of the birefringent element".

The element control unit 15 controls at least one of the temperature of the phase control element 13 and the voltage applied to the phase control element 13. The element control unit 15 controls at least one of the temperature of the birefringent element 14 and the voltage applied to the birefringent element 14. Therefore, the birefringence of the birefringent element 14 is controlled. The element control unit 15 includes, for example, a temperature regulator and a voltage application device. The element control unit 15 includes, for example, a temperature adjustment unit 21 and a temperature control unit 22 as the temperature regulator. The element control unit 15 includes, for example, a voltage application unit 23 and a voltage control unit 24 as the voltage application device.

The temperature control unit 22 and the voltage control unit 24 include, for example, a processor, a main storage device, an auxiliary storage device, and an input device. The element control unit 15 includes one or more computers configured by these hardware components and software such as a program. The processor executes an operating system, application programs, and the like. The main storage device is configured by a read only memory (ROM) and a random access memory (RAM). The auxiliary storage device is a storage medium configured by a hard disk, a flash memory, and the like. The input device is configured by a terminal, a button, a touch panel, and the like for data input from the outside.

The temperature adjustment unit 21 adjusts the temperature of the birefringent element 14. The temperature adjustment unit 21 includes, for example, a heating element directly or indirectly heating the birefringent element 14 and a cooling element directly or indirectly cooling the birefringent element 14. The heating element includes, for example, a Peltier element, a heater, and the like. The cooling element includes, for example, a Peltier element, a chiller, and the like. For example, the temperature adjustment unit 21 is in contact with the birefringent element 14. For example, at least one of the heating element and the cooling element is in contact with the birefringent element 14. The temperature adjustment unit 21 may include a heat transfer member connected to at least one of the heating element and the cooling element. The heat transfer member may be in contact with the birefringent element 14. As a result, the birefringent element 14 is heated or cooled. As a modification example of this embodiment, for example, the birefringent element 14 may be accommodated in a housing, and the temperature adjustment unit 21 may heat or cool the inside of the housing. This housing is transparent to the light emitted from the light emitting unit 2. In this modification example, the birefringent element 14 may be heated or cooled through the atmosphere inside the housing.

The temperature control unit 22 controls the temperature adjustment unit 21. The temperature control unit 22 is connected to the temperature adjustment unit 21 wirelessly or in a wired manner. The temperature adjustment unit 21 heats or cools the birefringent element 14 in response to a control signal from the temperature control unit 22.

The temperature control unit 22 controls the temperature adjustment unit 21, for example, with reference to control data stored in advance. The control data is, for example, a control table. The temperature control unit 22 includes, for example, a temperature detector. For example, the temperature detector is disposed to be in contact with a surface of the birefringent element 14. The temperature detector may be disposed apart from the birefringent element 14 so as to measure the environmental temperature around the birefringent element 14.

The voltage application unit 23 applies a voltage to the birefringent element 14. In the voltage application unit 23, for example, a pair of electrodes are attached to a pair of opposite surfaces of the birefringent element 14. The voltage application unit 23 applies a voltage between the pair of electrodes. The pair of electrodes are, for example, transparent electrodes.

The voltage control unit 24 controls the voltage application unit 23. The voltage control unit 24 is connected to the voltage application unit 23 wirelessly or in a wired manner. The voltage application unit 23 applies a voltage to the birefringent element 14 in response to a control signal from the voltage control unit 24. The voltage control unit 24 controls the voltage application unit 23, for example, on the basis of control data stored in advance.

The temperature control unit 22 and the voltage control unit 24 are configured by one or more computers. This computer executes control according to a program stored in advance in a storage medium. The temperature control unit 22 and the voltage control unit 24 may control the temperature adjustment unit 21 and the voltage application unit 23 according to the user's input, respectively. For example, the temperature control unit 22 controls the temperature adjustment unit 21 on the basis of a target temperature input by the user and the above-described control data. For example, the voltage control unit 24 controls the voltage application unit 23 on the basis of a voltage value input by the user and the above-described control data.

In this embodiment, the birefringence of the birefringent element 14 is controlled by both the adjustment of the temperature of the birefringent element 14 and the adjustment of the voltage applied to the birefringent element 14. As a modification example of this embodiment, the birefringence of the birefringent element 14 may be controlled by only one of the adjustment of the temperature of the birefringent element 14 and the adjustment of the voltage applied to the birefringent element 14. When the temperature of the birefringent element 14 is not adjusted, the element control unit 15 may not include the temperature adjustment unit 21 and the temperature control unit 22. When the application of the voltage to the birefringent element 14 is not performed, the element control unit 15 may not include the voltage application unit 23 and the voltage control unit 24.

The light generation unit 4 generates output light on the basis of the input light. The "output light" is light output to the outside of the optical device. The light generation unit 4 converts at least some of a plurality of input light components into light having a different frequency using the nonlinear optical phenomenon and outputs the converted light. The light emitted from the phase adjustment unit 3 is input to the light generation unit 4. The light generation unit 4 includes the nonlinear optical element 17.

The nonlinear optical element 17 of the light generation unit 4 generates light on the basis of the light incident on the nonlinear optical element 17 using the nonlinear optical phenomenon. For example, the nonlinear optical element 17 generates light having a frequency different from the frequency of the light incident on the nonlinear optical element 17. The nonlinear optical element 17 converts the energy of the light incident on the nonlinear optical element 17 into energy of light having a frequency different from the frequency of the light incident on the nonlinear optical element 17. In this embodiment, the light emitted from the light emitting unit 2 is incident on the birefringent element 14, and the light emitted from the birefringent element 14 is incident on the nonlinear optical element 17. A material forming the nonlinear optical element 17 includes a nonlinear optical medium and varies depending on the nonlinear optical effect produced when light is generated. The material forming the nonlinear optical element 17 is selected according to the light incident on the nonlinear optical element 17 and the light emitted from the nonlinear optical element 17.

In this embodiment, the light L1 and the light L2 whose phase difference has been adjusted by the phase adjustment unit 3 are incident on the nonlinear optical element 17. The nonlinear optical element 17 generates light L3 on the basis of at least one of the incident light L1 and light L2 and emits the light L3. The light L3 has a frequency different from the frequency of at least one of the light L1 and the light L2. At this time, the nonlinear optical element 17 transmits the incident light L1 and light L2 and emits the light L1 and the light L2 together with the light L3, which is not illustrated in FIG. 1.

At least one of the light L1 and the light L2 and the light L3 have different polarization states. For example, one of the light L1 and the light L2 and the light L3 include polarized components orthogonal to each other. In this embodiment, the light L1, the light L2, and the light L3 emitted from the nonlinear optical element 17 are linearly polarized light components. One of the light L1 and the light L2 and the light L3 are linearly polarized light components having polarization directions orthogonal to each other.

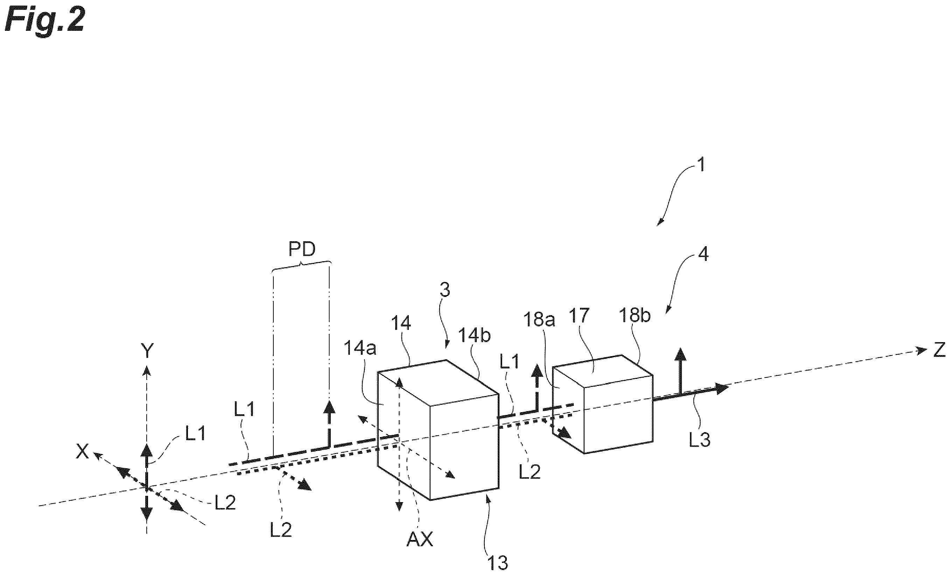

Next, the optical device 1 according to this embodiment will be described in more detail with reference to FIG. 2. FIG. 2 is a partially enlarged view illustrating an optical system of the optical device 1.

The birefringent element 14 includes an incident surface 14a on which light is incident and an emission surface 14b from which light is emitted. The incident surface 14a and the emission surface 14b are opposite to each other. The incident surface 14a and the emission surface 14b are, for example, parallel to each other. The birefringent element 14 includes an optical axis AX along the incident surface 14a. The incident surface 14a is parallel to an XY-axis plane. A direction normal to the incident surface 14a is parallel to the Z-axis direction. The direction normal to the incident surface 14a and the optical axis AX of the birefringent element 14 intersect each other. In this embodiment, the optical axis AX is parallel to the incident surface 14a and is orthogonal to the direction normal to the incident surface 14a. In this embodiment, the optical axis AX extends in the X-axis direction. The optical axis AX is parallel to the X-axis direction. In the present specification, the terms "parallel", "perpendicular", and "orthogonal" include a range of manufacturing tolerance. The range of the manufacturing tolerance is, for example, about ±10 degrees.

In this embodiment, since the birefringent element 14 is a uniaxial crystal, it includes only one optical axis AX. The birefringent element 14 illustrated in FIG. 2 is, for example, a YVO₄ crystal. Crystals other than the YVO₄ crystal may be used as the birefringent element 14 illustrated in FIG. 2. The optical axis AX of the birefringent element 14 is, for example, a crystal axis of the birefringent element 14. The c-axis of the birefringent element 14 is parallel to the X-axis direction and is matched with the optical axis AX. Two a-axes of the birefringent element 14 are parallel to the Y-axis direction and the Z-axis direction, respectively, and are orthogonal to the optical axis AX.

The light L1 and the light L2 are incident on the incident surface 14a of the birefringent element 14. In this embodiment, the light L1 and the light L2 are incident on the incident surface 14a of the birefringent element 14. The light L1 and the light L2 are incident perpendicularly to the incident surface 14a. An incident optical axis of the birefringent element 14 is parallel to the Z-axis direction. For example, the polarization state of one of the light L1 and the light L2 incident on the birefringent element 14 is directly polarized light parallel to the optical axis AX of the birefringent element 14 as viewed from the direction normal to the incident surface 14a. In this case, one of the light L1 and the light L2 incident on the birefringent element 14 is directly polarized light having a polarized component in the direction of the optical axis AX of the birefringent element 14. The polarization state of the other of the light L1 and the light L2 incident on the birefringent element 14 is, for example, linearly polarized light orthogonal to the optical axis AX of the birefringent element 14. In the example illustrated in FIG. 2, the light L1 corresponds to first light, the light L2 corresponds to second light, and the light L3 corresponds to third light.

The birefringent element 14 is disposed such that a propagation direction of the light incident on the birefringent element 14 in the birefringent element 14 and the optical axis AX intersect each other. For example, the birefringent element 14 is disposed such that the propagation direction of at least one of the first light and the second light in the birefringent element 14 and the optical axis AX intersect each other. Hereinafter, the "propagation direction" is also referred to as a "traveling direction". As a modification example of this embodiment, when the birefringent element 14 is a biaxial crystal, the birefringent element 14 is disposed such that the propagation direction of at least one of the light L1 and the light L2 intersects two optical axes of the birefringent element 14. In the optical device 1, the birefringent element 14 is disposed such that the propagation directions of the light L1 and the light L2 in the birefringent element 14 and the optical axis AX intersect each other.

The polarization state of at least one of the first light and the second light incident on the birefringent element 14 is linearly polarized light parallel to a virtual plane parallel to the propagation direction of the at least one light component and the optical axis AX of the birefringent element 14. The polarization state of at least one of the first light and the second light incident on the birefringent element 14 may be linearly polarized light orthogonal to the virtual plane parallel to the propagation direction of the at least one light component and the optical axis AX of the birefringent element 14. In this embodiment, one of the first light and the second light is linearly polarized light orthogonal to an XZ plane parallel to the traveling direction and the optical axis AX, and the other of the first light and the second light is linearly polarized light parallel to the XZ plane parallel to the traveling direction and the optical axis AX.

In the optical device 1, the light L2 is linearly polarized light parallel to the optical axis AX and the incident surface 14a of the birefringent element 14, and the light L1 is linearly polarized light that is orthogonal to the optical axis AX of the birefringent element 14 and is parallel to the incident surface 14a. The light L1 is linearly polarized light orthogonal to the XZ plane parallel to the traveling direction and the optical axis AX. The light L2 is linearly polarized light parallel to the XZ plane parallel to the traveling direction and the optical axis AX. In other words, the optical axis AX extends in the X-axis direction, and an electric field direction of the light L2 is matched with the X-axis direction.

The phase of the light emitted from the emission surface 14b of the birefringent element 14 changes depending on the temperature of the birefringent element 14. The phase of the light emitted from the emission surface 14b of the birefringent element 14 changes depending on the voltage applied to the birefringent element 14. Therefore, the phases of the light L 1 and the light L2 emitted from the emission surface 14b of the birefringent element 14 change depending on the temperature of the birefringent element 14 and the voltage applied to the birefringent element 14.

In the birefringent element 14, the refractive indexes of light components having different frequencies are different from each other. Since the frequency of the light L1 and the frequency of the light L2 are different from each other, a phase difference PD between the light L1 and the light L2 changes depending on transmission through the birefringent element 14 in a direction intersecting the optical axis AX. A change in the phase difference between the light L1 and the light L2 caused by the transmission through the birefringent element 14 changes depending on the difference between the frequency of the light L 1 and the frequency of the light L2.

In the birefringent element 14, the refractive index of ordinary light and the refractive index of extraordinary light are different from each other. The light L1 is ordinary light with respect to the birefringent element 14, and the light L2 is extraordinary light with respect to the birefringent element 14. Therefore, the phase difference PD between the light L1 and the light L2 changes depending on the transmission through the birefringent element 14 in the direction intersecting the optical axis AX. The phase difference between the light L1 and the light L2 changing depending on the transmission through the birefringent element 14 also changes depending on the difference between the refractive index of the ordinary light and the refractive index of the extraordinary light in the birefringent element 14.

The difference between the refractive index of the ordinary light and the refractive index of the extraordinary light changes according to a change in the temperature of the birefringent element 14. The difference between the refractive index of the ordinary light and the refractive index of the extraordinary light changes according to a change in the voltage applied to the birefringent element 14. Therefore, the phase difference between the light components emitted from the emission surface 14b of the birefringent element 14 also changes according to the change in the temperature of the birefringent element 14 and the change in the voltage applied to the birefringent element 14. In this embodiment, the phase difference between the light L1 and the light L2 transmitted through the birefringent element 14 also changes according to the change in the temperature of the birefringent element 14 and the change in the voltage applied to the birefringent element 14.

Based on this principle, the element control unit 15 controls at least one of the temperature of the birefringent element 14 and the voltage applied to the birefringent element 14 to adjust the phase difference between the first light and the second light transmitted through the birefringent element 14. The element control unit 15 controls at least one of the temperature of the birefringent element 14 and the voltage applied to the birefringent element 14 to control the phase difference between the light L1 and the light L2 to a desired value. The element control unit 15 can control at least one of the temperature of the birefringent element 14 and the voltage applied to the birefringent element 14 such that the phase difference between the light L1 and the light L2 is zero or such that the phase difference between the light L1 and the light L2 increases.

The Light L1 and the light L2 emitted from the birefringent element 14 are incident on the nonlinear optical element 17. For example, the nonlinear optical element 17 of the light generation unit 4 is disposed such that the optical axis of the nonlinear optical element 17 is parallel to a first virtual plane or a second virtual plane. The first virtual plane is, for example, parallel to the optical axis AX of the birefringent element 14 and the propagation direction of at least one of the first light and the second light in the birefringent element 14. The second virtual plane is orthogonal to the first virtual plane and is parallel to the propagation direction of at least one of the first light and the second light in the birefringent element 14. The first virtual plane is, for example, parallel to the optical axis AX of the birefringent element 14 and the propagation directions of the light L1 and the light L2 in the birefringent element 14. The second virtual plane is orthogonal to the first virtual plane and is parallel to the propagation directions of the light L1 and the light L2 in the birefringent element 14. In the configuration illustrated in FIG. 2, the first virtual plane is parallel to the optical axis AX of the birefringent element 14 and is orthogonal to the incident surface 14a. The optical axis of the nonlinear optical element 17 of the light generation unit 4 may be parallel to the second virtual surface orthogonal to the first virtual surface and the incident surface 14a. The first virtual plane is, for example, the XZ plane or the YZ plane. The second virtual surface is the YZ plane when the first virtual surface is the XZ plane and is the XZ plane when the first plane is the YZ plane. In the configuration illustrated in FIG. 2, for example, the optical axis of the nonlinear optical element 17 is inclined with respect to an incident surface 18a.

The nonlinear optical element 17 generates a sum frequency using the phase matching or the quasi-phase matching. The nonlinear optical element 17 is made of, for example, an LBO crystal. The LBO crystal is made of, for example, LiB₃O₅. The nonlinear optical element 17 is not limited to the LBO crystal. The same crystal as that forming the nonlinear optical element 12 can be used for the nonlinear optical element 17 and a nonlinear optical element corresponding to the nonlinear optical element 17 in a modification example which will be described below. As the light L1 and the light L2 are incident, the nonlinear optical element 17 generates the sum frequency on the basis of TYPE-2 phase matching. When the phase matching or the quasi-phase matching is satisfied, the nonlinear optical element 17 generates the light L3 as the sum frequency as the light L1 and the light L2 are incident on the incident surface 18a and emits the generated light L3 from an emission surface 18b. The nonlinear optical element 17 transmits a portion of the incident light L1 and light L2 and emits the transmitted light together with the light L3 from the emission surface 18b, which is not illustrated in FIG. 2.

For example, the light L1 is ordinary light with respect to the nonlinear optical element 17, and the light L2 is extraordinary light for nonlinear optical element 17. The light L3 is ordinary light with respect to the nonlinear optical element 17. When an angular frequency of the light L1 is "ω₁", an angular frequency of the light L2 is "ω₂", and an angular frequency of the light L3 is "ω₃", Expression (1): ω₃ = ω₂ + ω₁ is satisfied. This corresponds to the law of conservation of energy. That is, the frequency of the light L3 is the sum of the frequency of the light L1 and the frequency of the light L2.

For example, the light L1 is the fundamental wave, and the light L2 is the second harmonic. Therefore, the light L3 is a third harmonic. The frequency of the light L2 is twice the frequency of the light L1, and the frequency of the light L3 is three times the frequency of the light L1. The light L1 is, for example, the fundamental wave of a Nd:YAG laser. The light L2 is, for example, the second harmonic of the Nd:YAG laser. In this embodiment, the light L2 is the second harmonic generated by the incidence of the fundamental wave of the Nd:YAG laser on the nonlinear optical element 12. For example, the wavelength of the light L1 is 1064 nm, the wavelength of the light L2 is 532 nm, and the wavelength of the light L3 is 355 nm.

When the phase of the light L1 in the nonlinear optical element 17 is "φ_{ω1}", the phase of the light L2 in the nonlinear optical element 17 is "φ_{ω2}", and the phase of the light L3 in the nonlinear optical element 17 is "φ_{ω3}" , Expression (2): φ_{ω3} = φ_{ω2} + φ_{ω1} is satisfied. When a wave number vector of the light L1 in the nonlinear optical element 17 is "k₁", a wave number vector of the light L2 is "k₂", and a wave number vector of the light L3 is "k₃", a phase matching condition is represented by Expression (3): Δk = k₃ - k₂ - k₁ = 0. When the phase matching condition is satisfied, the intensity of the light L3 is ensured. When the phase matching condition is satisfied, the phase difference between the light L1, the light L2, and the light L3 satisfies Expression (4) Δφ = φ_{ω3} - φ_{ω2} - φ_{ω1} = |k₃ - k₂ - k₁| * L = 0. A working length "L" is, for example, the length of the nonlinear optical element 17.

When the phase difference between the light L1 and the light L2 incident on the incident surface 18a of the nonlinear optical element 17 is "Δφ'", a relational expression of the phase difference between the light L1, the light L2, and the light L3 in the nonlinear optical element 17 is represented by Expression (5): Δφ = φ_{ω3} - φ_{ω2} - φ_{ω1} = |Δk| * L - Δφ' from Expression (4). Therefore, when Δφ' = 0 is established, the phase matching condition is satisfied, and the light L3 having a relatively high intensity is generated.

In this embodiment, the element control unit 15 controls at least one of the temperature of the birefringent element 14 and the voltage applied to the birefringent element 14 such that "Δφ'" is reduced, in order to satisfy the above-described phase matching condition. The element control unit 15 controls the birefringence of the birefringent element 14 such that the phase matching or the quasi-phase matching is satisfied in the above-described phase matching condition. The element control unit 15 controls at least one of the temperature of the birefringent element 14 and the voltage applied to the birefringent element 14 such that the phase difference PD between the light L1 and the light L2 is reduced in the incident surface 18a of the nonlinear optical element 17 of the light generation unit 4. For example, the element control unit 15 controls the birefringence of the birefringent element 14 such that the phase difference between the light L1 and the light L2 is reduced in the incident surface 18a of the nonlinear optical element 17 of the light generation unit 4.

The phase difference occurring between the light L1 and the light L2 due to the transmission through the birefringent element 14 whose temperature has been adjusted satisfies Expression (6): Δ_{φtotal} = Δφ_{ΔT} × ΔT + Δφ_{N} + Δφ_{AR}. In this case, "Δφₜₒₜₐₗ" is the sum of the phase differences occurring due to the transmission through the birefringent element 14 whose temperature has been adjusted, "Δφ_{ΔT}" is the rate of change in the phase difference caused by a change in the temperature of the birefringent element 14, "ΔT" is a temperature difference from a reference temperature, "Δφ_{N}" is a phase difference occurring due to the transmission through the birefringent element 14 at the reference temperature, and "Δφ_{AR}" is a phase difference occurring due to coating films on the incident surface 14a and the emission surface 14b of the birefringent element 14. Therefore, for example, when only the temperature of the birefringent element 14 is controlled, the element control unit 15 may derive the temperature to be changed using Equation (7): Δφ_{ΔT} × ΔT = Δφₜₒₜₐₗ - Δφ_{N} - Δφ_{AR}.

The phase difference occurring between the light L1 and the light L2 due to the transmission through the birefringent element 14 to which the voltage has been applied satisfies Expression (8): Δφₜₒₜₐₗ = Δφ_{ΔE} × V + Δφ_{N} + Δφ_{AR}. In this case, "Δφₜₒₜₐₗ" is the sum of the phase differences occurring due to the transmission through the birefringent element 14 to which the voltage has been applied, "Δφ_{ΔE}" is the rate of change in the phase difference caused by a change in the voltage applied to the birefringent element 14, and "V" is a voltage value applied to the birefringent element 14. Therefore, for example, when only the voltage applied to the birefringent element 14 is controlled, the element control unit 15 may derive the voltage to be applied to the birefringent element 14 using Expression (9): Δφ_{ΔE} × V = Δφₜₒₜₐₗ - Δφ_{N} - Δφ_{AR}. When both the adjustment of the temperature and the application of the voltage are performed, Expressions (6) and (8) can be combined to derive the sum of the phase differences occurring due to the transmission through the birefringent element 14.

In this embodiment, the element control unit 15 controls at least one of the temperature of the birefringent element 14 and the voltage applied to the birefringent element 14 to adjust the phase difference between the first light and the second light in the incident surface 18a of the nonlinear optical element 17 of the light generation unit 4. For example, the element control unit 15 controls the birefringence of the birefringent element 14 on the basis of at least one of Expression (7) and Expression (9) such that the phases of the light L1 and the light L2 are matched with each other in the incident surface 18a of the nonlinear optical element 17 of the light generation unit 4. In the present specification, "the phases are matched with each other" means that the phase difference is 2 mπ (rad). Here, "m" is an integer. "The phases are matched with each other" includes not only a state in which the phase difference does not strictly deviate from 2 mπ (rad), but also a state including an error with respect to 2 mπ (rad). For example, for the phase of light, the "state including an error" means a state in which the stability and the like of the light source and the optical system are considered.

For example, the element control unit 15 controls the birefringence of the birefringent element 14 such that the phase difference between the light L1 and the light L2 is reduced in the incident surface 18a of the nonlinear optical element 17 of the light generation unit 4. For example, the element control unit 15 controls the refractive index of the birefringent element 14 such that the phase difference between the light L1 and the light L2 is zero in the incident surface 18a of the nonlinear optical element 17 of the light generation unit 4. Further, in the present specification, "zero" includes not only exact zero but also the range of an error. For example, for the phase difference, the "range of an error" may be a value considering the stability and the like of the light source and the optical system. "Controlling the refractive index such that the phase difference is zero" includes, for example, controlling the refractive index such that the phase difference is close to zero. In other words, the refractive index of the birefringent element 14 is controlled such that the phase of the light L1 and the phase of the light L2 are matched with each other in the incident surface 18a of the nonlinear optical element 17 of the light generation unit 4. In the present specification, "matching" means not only a state in which there is strictly no deviation, but also a state including an error.

As a modification example of this embodiment, the element control unit 15 may control the birefringence of the birefringent element 14 such that the intensity of the light L3 is reduced. In other words, the element control unit 15 may control the birefringence of the birefringent element 14 such that the intensity of the light L3 is lower than the intensity of the light L3 in a state in which the phases of the light L1 and the light L2 are matched with each other. In this case, for example, the element control unit 15 controls the birefringence of the birefringent element 14 on the basis of at least one of Expression (7) and Expression (9) such that the phases of the light L1 and the light L2 deviate from each other in the incident surface 18a of the nonlinear optical element 17 of the light generation unit 4. In the present specification, "the phases deviate from each other" means a state in which the phases are not matched with each other.

For example, the element control unit 15 may control the birefringence of the birefringent element 14 on the basis of at least one of Expression (7) and Expression (9) such that the phase difference between the light L1 and the light L2 is nπ (rad) in the incident surface 18a of the nonlinear optical element 17 of the light generation unit 4. Here, "n" is an odd number. In this case, the phase difference may be not only in a state in which it does not strictly deviate from nπ (rad), but also in a state including an error with respect to nπ (rad).

As a modification example of this embodiment, the element control unit 15 may control the birefringence of the birefringent element 14 such that the intensity of the light L3 is maximized or minimized. In this case, the intensity of the light L3 may be detected by a light detection unit (not illustrated). For example, the element control unit 15 may control the birefringence of the birefringent element 14 on the basis of a detection result of the light detection unit such that the intensity of the light L3 is maximized or minimized.

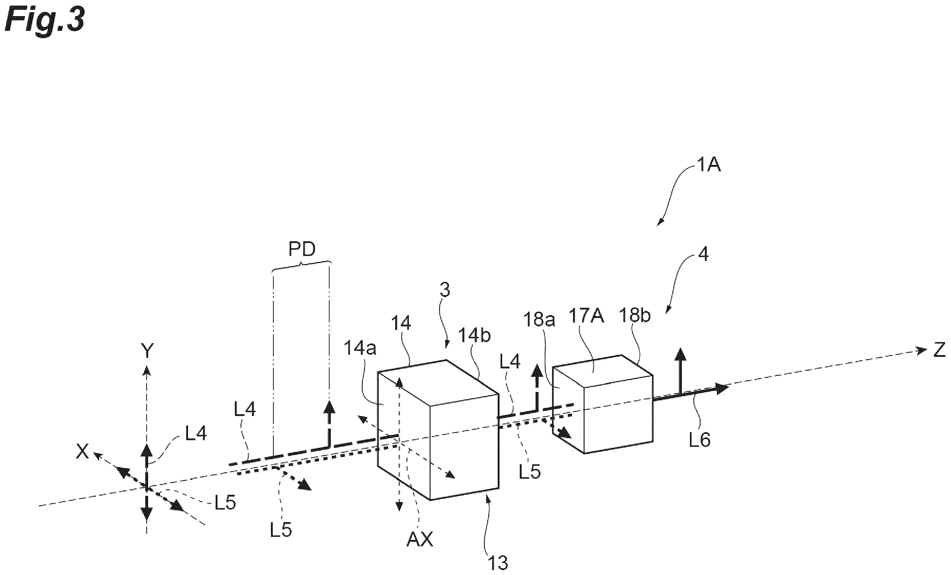

Next, an optical device 1A according to a modification example of this embodiment will be described in more detail with reference to FIG. 3. FIG. 3 is a partially enlarged view illustrating an optical system of the optical device 1A. This modification example is substantially similar to or the same as the above-described embodiment. This modification example differs from the above-described embodiment in that a difference frequency is generated instead of the sum frequency. Hereinafter, the differences from the above-described embodiment will be described.

In this modification example, the light generation unit 4 includes a nonlinear optical element 17A instead of the nonlinear optical element 17. Light L4 and light L5 are incident on the incident surface 14a of the birefringent element 14. The light L4 has the same configuration as the light L1 except for the frequency and the configuration for the nonlinear optical element 17A. The light L5 has the same configuration as the light L2 except for the frequency and the configuration for the nonlinear optical element 17A. In this modification example, the light L4 and the light L5 have different frequencies.

The light L4 and the light L5 emitted from the birefringent element 14 are incident on the nonlinear optical element 17A. For example, the nonlinear optical element 17A of the light generation unit 4 is disposed such that an optical axis of the nonlinear optical element 17A is parallel to the first virtual plane or the second virtual plane. The first virtual plane is parallel to the optical axis AX of the birefringent element 14 and the propagation directions of the light L1 and the light L2. The second virtual plane is orthogonal to the first virtual plane and is parallel to the propagation directions of the light L1 and the light L2. For example, in the configuration illustrated in FIG. 2, the optical axis of the nonlinear optical element 17A of the light generation unit 4 is parallel to the first virtual plane that is parallel to the optical axis AX of the birefringent element 14 and is orthogonal to the incident surface 14a. As a further modification example of this modification example, the optical axis of the nonlinear optical element 17A of the light generation unit 4 may be parallel to the second virtual surface orthogonal to the first virtual surface and the incident surface 14a.

The nonlinear optical element 17A generates a difference frequency using the phase matching or the quasi-phase matching. The nonlinear optical element 17A is made of, for example, a KTP crystal. The KTP crystal is made of, for example, KTiOPO₄. The nonlinear optical element 17A generates the difference frequency on the basis of TYPE-2 phase matching. When the phase matching or the quasi-phase matching is satisfied, the nonlinear optical element 17A generates light L6 as the difference frequency as the light L4 and the light L5 are incident on an incident surface 18a and emits the generated light L6 from an emission surface 18b. The nonlinear optical element 17A transmits a portion of the incident light L4 and light L5 and emits the transmitted light together with the light L6 from the emission surface 18b, which is not illustrated in FIG. 3. The light L6 has a frequency different from the frequency of at least one of the light L4 and the light L5. In the example illustrated in FIG. 3, the light L4 corresponds to the first light, the light L5 corresponds to the second light, and the light L6 corresponds to the third light.

For example, the light L4 is linearly polarized light that is orthogonal to the optical axis AX of the birefringent element 14 and is parallel to the incident surface 14a. The light L5 is linearly polarized light parallel to the optical axis AX and the incident surface 14a of the birefringent element 14. When an angular frequency of the light L4 is "ω₁", an angular frequency of the light L5 is "ω₂", and an angular frequency of the light L6 is "ω₃", Expression (10): ω₃ = ω₁ - ω₂ is satisfied. This corresponds to the law of conservation of energy. That is, the frequency of the light L6 is the difference between the frequency of the light L4 and the frequency of the light L5. The light L6 corresponds to an electromagnetic wave having a frequency different from the frequency of the light L4.

The light L4 is, for example, a second harmonic generated by the incidence of the fundamental wave of the Nd:YAG laser on the nonlinear optical element 12. The light L5 is, for example, laser light separately acquired from a semiconductor laser. For example, the wavelength of the light L4 is 532 nm, the wavelength of the light L5 is 810 nm, and the wavelength of the light L6 is 1550 nm. As a modification example of this embodiment, the light L6 may be a so-called terahertz wave. In this case, the light L4 and the light L5 are set appropriately.

When the phase of the light L4 in the nonlinear optical element 17A is "φ_{ω1}", the phase of the light L5 in the nonlinear optical element 17 is "φ_{ω2}", and the phase of the light L6 in the nonlinear optical element 17 is "φ_{ω3}" , Expression (11): φ_{ω3} = φ_{ω1} - φ_{ω2} is satisfied. When a wave number vector of the light L4 in the nonlinear optical element 17A is "k₁", a wave number vector of the light L5 is "k₂", and a wave number vector of the light L6 is "k₃", the phase matching condition is represented by Expression (13): Δk = k₃ + k₂ - k₁ = 0. When the phase matching condition is satisfied, the intensity of the light L6 is ensured. When the phase matching condition is satisfied, the phase difference between the light L4, the light L5, and the light L6 satisfies Expression (14) Δφ = φ_{ω3} + φ_{ω2} - φ_{ω1} = |k₃ + k₂ - k₁| * L = 0. The working length "L" is, for example, the length of the nonlinear optical element 17A.

When the phase difference between the light L4 and the light L5 incident on the incident surface 18a of the nonlinear optical element 17A is "Δφ'", a relational expression of the phase difference between the light L4, the light L5, and the light L6 in the nonlinear optical element 17A is represented by Expression (15): Δφ = φ_{ω3} + φ_{ω2} - φ_{ω1} = |Δk| * L - Δφ' from Expression (14). Therefore, when Δφ' = 0 is established, the phase matching condition is satisfied, and the light L6 having a relatively high intensity is generated.

Even in this modification example, the element control unit 15 controls at least one of the temperature of the birefringent element 14 and the voltage applied to the birefringent element 14 such that "Δφ'" is reduced, in order to satisfy the above-described phase matching condition. The element control unit 15 controls the birefringence of the birefringent element 14 such that the phase matching or the quasi-phase matching is satisfied in the above-described phase matching condition. The element control unit 15 controls at least one of the temperature of the birefringent element 14 and the voltage applied to the birefringent element 14 such that a phase difference PD between the light L4 and the light L5 is reduced in the incident surface 18a of the nonlinear optical element 17A of the light generation unit 4. For example, the element control unit 15 controls the birefringence of the birefringent element 14 such that the phases of the light L4 and the light L5 are matched with each other in the incident surface 18a of the nonlinear optical element 17A of the light generation unit 4.

The phase difference occurring between the light L4 and the light L5 due to the transmission through the birefringent element 14 whose temperature has been adjusted or to which the voltage has been applied satisfies Expression (6) and Expression (8). In this modification example, the element control unit 15 controls the birefringence of the birefringent element 14 on the basis of at least one of Expression (7) and Expression (9) such that the phases of the light L4 and the light L5 are matched with each other in the incident surface 18a of the nonlinear optical element 17A of the light generation unit 4.

For example, the element control unit 15 controls the refractive index of the birefringent element 14 such that the phase difference between the light L4 and the light L5 is reduced in the incident surface 18a of the nonlinear optical element 17A of the light generation unit 4. For example, the element control unit 15 controls the refractive index of the birefringent element 14 such that the phase difference between the light L4 and the light L5 is zero in the incident surface 18a of the nonlinear optical element 17A of the light generation unit 4.

As a further modification example of this modification example, the element control unit 15 may control the birefringence of the birefringent element 14 such that the intensity of the light L6 is reduced. In this case, for example, the element control unit 15 controls the birefringence of the birefringent element 14 on the basis of at least one of Expression (7) and Expression (9) such that the phases of the light L4 and the light L5 deviate from each other in the incident surface 18a of the nonlinear optical element 17A of the light generation unit 4.

As a further modification example of this modification example, the element control unit 15 may control the birefringence of the birefringent element 14 such that the intensity of the light L6 is maximized or minimized. In this case, the intensity of the light L6 may be detected by a light detection unit (not illustrated). For example, the element control unit 15 may control the birefringence of the birefringent element 14 on the basis of a detection result of the light detection unit such that the intensity of the light L6 is maximized or minimized.

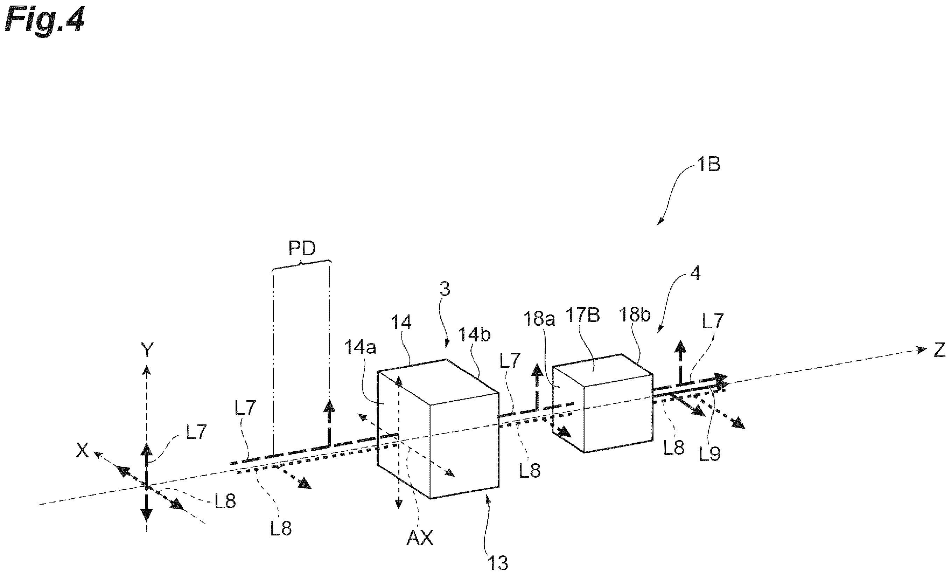

Next, an optical device 1B according to a modification example of this embodiment will be described in more detail with reference to FIG. 4. FIG. 4 is a partially enlarged view illustrating an optical system of the optical device 1B. This modification example is substantially similar to or the same as the above-described embodiment. This modification example differs from the above-described embodiment in that the sum frequency is not generated and optical parametric amplification is performed. Hereinafter, the differences from the above-described embodiment will be described.

In this modification example, the light generation unit 4 includes a nonlinear optical element 17B instead of the nonlinear optical element 17. Light L7 and light L8 are incident on the incident surface 14a of the birefringent element 14. The light L7 has the same configuration as the light L1 except for the frequency and the configuration for the nonlinear optical element 17B. The light L8 has the same configuration as the light L2 except for the frequency and the configuration for the nonlinear optical element 17B. In this modification example, the light L7 and the light L8 have different frequencies.

The light L7 and the light L8 emitted from the birefringent element 14 are incident on the nonlinear optical element 17B. For example, the nonlinear optical element 17B of the light generation unit 4 is disposed such that an optical axis of the nonlinear optical element 17B is parallel to the first virtual plane or the second virtual plane. The first virtual plane is parallel to the optical axis AX of the birefringent element 14 and the propagation directions of the light L7 and the light L8. The second virtual plane is orthogonal to the first virtual plane and is parallel to the propagation directions of the light L7 and the light L8. For example, in the configuration illustrated in FIG. 4, the first virtual plane is parallel to the optical axis AX of the birefringent element 14 and is orthogonal to the incident surface 14a. The optical axis of the nonlinear optical element 17B of the light generation unit 4 may be parallel to the second virtual surface orthogonal to the first virtual surface and the incident surface 14a.

The nonlinear optical element 17B generates optical parametric amplification using the phase matching or the quasi-phase matching. The nonlinear optical element 17B is made of, for example, a KTP crystal. In the nonlinear optical element 17B, the optical parametric amplification occurs on the basis of TYPE-1 phase matching. The light L7 is pump light, and the light L8 is signal light. The light L8 has a lower intensity than the light L7 which is the pump light. In the configuration illustrated in FIG. 4, the light L8 and light L9 correspond to light to be amplified. The "pump light" is also referred to as "excitation light".

The nonlinear optical element 17B outputs light obtained by adjusting the intensity of the light L8 as the light L7 and the light L8 are incident on the incident surface 18a. When the phase matching or the quasi-phase matching is satisfied, as the light L7 and the light L8 are incident on the incident surface 18a, the nonlinear optical element 17B amplifies the intensity of the light L8 and emits the light L8. In addition, the nonlinear optical element 17B generates the light 9 as idler light. The nonlinear optical element 17B generates light having the same frequency as the light L8 on the basis of the incident light L7 and light L8 and combines the generated light and the light L8 incident on the nonlinear optical element 17B. As a result, amplified light obtained by amplifying the intensity of light L8 is generated. The nonlinear optical element 17B emits the light L8 whose intensity has been amplified and the generated light L9 from the emission surface 18b. The nonlinear optical element 17B transmits a portion of the incident light L7 and emits the transmitted light together with the light L8 and the light L9 from the emission surface 18b. In addition, when the light L9 is incident on the nonlinear optical element 17B instead of the light L8, the intensity of the light L9 is amplified. For example, the light L9 has a frequency different from the frequencies of the light L7 and the light L8. For example, the light L7 incident on the nonlinear optical element 17B corresponds to the first light, the light L8 incident on the nonlinear optical element 17B corresponds to the second light, and the light L8 or the light L9 emitted from the nonlinear optical element 17B corresponds to the third light.

The light L9 corresponds to a difference frequency generated in the nonlinear optical element 17B on the basis of the light L7 and the light L8. In the optical device 1B, the light L7 and the light L8 incident on the nonlinear optical element 17B correspond to the light L4 and the light L5 of the optical device 1A, respectively. The light L9 of the optical device 1B corresponds to the light L6 of the optical device 1A.

For example, the light L7 is linearly polarized light that is orthogonal to the optical axis AX of the birefringent element 14 and is parallel to the incident surface 14a and is ordinary light with respect to the nonlinear optical element 17B. The light L8 is linearly polarized light parallel to the optical axis AX and the incident surface 14a of the birefringent element 14 and is extraordinary light with respect to the nonlinear optical element 17B. The light L9 is linearly polarized light parallel to the optical axis AX and the incident surface 14a of the birefringent element 14 and is extraordinary light with respect to the nonlinear optical element 17. When an angular frequency of the light L7 is "ω₁", an angular frequency of the light L8 is "ω₂", and an angular frequency of the light L9 is "ω₃", Expression (21): ω₁ = ω₂ + ω₃ is satisfied. This corresponds to the law of conservation of energy. That is, the frequency of the light L7 is the sum of the frequency of the light L8 and the frequency of the light L9. In other words, a portion of the energy of the light L7, which is the excitation light, is separated into energy for amplifying the intensity of the light L8 and energy for generating the light L9.

The light L7 is, for example, the fundamental wave of the Nd:YAG laser. The light L8 is, for example, laser light separately acquired from the outside by optical parametric oscillation, a semiconductor laser, or the like. For example, the wavelength of the light L7 is 1064 nm, the wavelength of the light L8 is 1570 nm, and the wavelength of the light L9 is 3300 nm. The wavelengths of the light L7, the light L8, and the light L9 are not limited thereto.

When the phase of the light L7 in the nonlinear optical element 17B is "φ_{ω1}", the phase of the light L8 in the nonlinear optical element 17B is "φ_{ω2}", and the phase of the light L9 in the nonlinear optical element 17B is "φ_{ω3}". Expression (22): φ_{ω1} = φ_{ω2} + φ_{ω3} is satisfied. When a wave number vector of the light L7 in the nonlinear optical element 17B is "k₁", a wave number vector of the light L8 is "k₂", and a wave number vector of the light L9 is "k₃", the phase matching condition is represented by Expression (23): Δk = k₁ - k₂ - k₃ = 0. When the phase matching condition is satisfied, the intensity of the light L9 is ensured. When the phase matching condition is satisfied, the phase difference between the light L7, the light L8, and the light L9 satisfies Expression (24): Δφ = φ_{ω1} - φ_{ω2} - φ_{ω3} = |k₁ - k₂ - k₃| * L = 0. The working length "L" is, for example, the length of the nonlinear optical element 17B. When the phase difference between the light L7 and the light L8 incident on the incident surface 18a of the nonlinear optical element 17B is "Δφ'", a relational expression of the phase difference between the light L7 and the light L8 in the nonlinear optical element 17B is represented by Expression (25): Δφ = φ_{ω1} - φ_{ω2} - φ_{ω3} = |Δk| * L - Δφ' from Expression (24). When Δφ' = 0 is established, the phase matching condition is satisfied.

Even in this modification example, the element control unit 15 controls at least one of the temperature of the birefringent element 14 and the voltage applied to the birefringent element 14 such that "Δφ'" is reduced, in order to satisfy the above-described phase matching condition. The element control unit 15 controls the birefringence of the birefringent element 14 such that the phase matching or the quasi-phase matching is satisfied in the above-described phase matching condition. The element control unit 15 controls at least one of the temperature of the birefringent element 14 and the voltage applied to the birefringent element 14 such that a phase difference PD between the light L7 and the light L8 is reduced in the incident surface 18a of the nonlinear optical element 17B of the light generation unit 4.

For example, the element control unit 15 controls the birefringence of the birefringent element 14 such that the phase difference between the light L7 and the light L8 is reduced in the incident surface 18a of the nonlinear optical element 17B of the light generation unit 4. The phase difference occurring between the light L7 and the light L8 due to the transmission through the birefringent element 14 whose temperature has been adjusted or to which the voltage has been applied satisfies Expression (6) and Expression (8). For example, the element control unit 15 controls the refractive index of the birefringent element 14 such that the phases of the light L7 and the light L8 are matched with each other in the incident surface 18a of the nonlinear optical element 17B of the light generation unit 4.

In this modification example, the element control unit 15 controls the birefringence of the birefringent element 14 on the basis of at least one of Expression (7) and Expression (9) such that the phases of the light L7 and the light L8 are matched with each other. For example, the element control unit 15 controls the refractive index of the birefringent element 14 such that the phase difference between the light L7 and the light L8 is reduced in the incident surface 18a of the nonlinear optical element 17B of the light generation unit 4. For example, the element control unit 15 controls the refractive index of the birefringent element 14 such that the phase difference between the light L7 and the light L8 is zero in the incident surface 18a of the nonlinear optical element 17B of the light generation unit 4.

As a further modification example of this modification example, the element control unit 15 may control the birefringence of the birefringent element 14 such that the intensity of the light L8 and the light 9 is reduced. In this case, for example, the element control unit 15 controls the birefringence of the birefringent element 14 on the basis of at least one of Expression (7) and Expression (9) such that the phases of the light L7 and the light L8 deviate from each other in the incident surface 18a of the nonlinear optical element 17B of the light generation unit 4.

As a further modification example of this modification example, the element control unit 15 may control the birefringence of the birefringent element 14 such that the intensity of at least one of the light L8 and the light L9 emitted from the nonlinear optical element 17B is maximized or minimized. In this case, the intensity of at least one of the light L8 and the light L9 may be detected by a light detection unit (not illustrated).

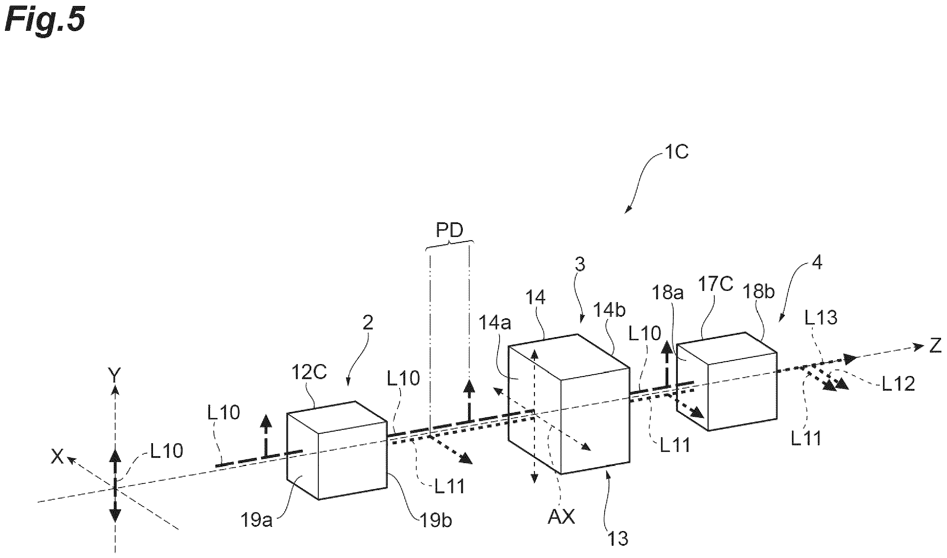

Next, an optical device 1C according to a modification example of this embodiment will be described in more detail with reference to FIG. 5. FIG. 5 is a partially enlarged view illustrating an optical system of the optical device 1C. This modification example is substantially similar to or the same as the above-described embodiment. This modification example differs from the above-described embodiment in that the birefringent element 14 adjusts a phase relationship between light generated in a nonlinear optical element 12C and light generated in a nonlinear optical element 17C. Hereinafter, the differences from the above-described embodiment will be described.

In this modification, the light emitting unit 2 includes the nonlinear optical element 12C instead of the nonlinear optical element 12. The light generation unit 4 includes the nonlinear optical element 17C instead of the nonlinear optical element 17. FIG. 5 also illustrates the nonlinear optical element 12C of the light emitting unit 2 emitting light to be incident on the birefringent element 14. The nonlinear optical element 12C generates light L11 on the basis of light L10 emitted from the light source 11 and emits the light L10 transmitted through the nonlinear optical element 12C together with the light L 11. The nonlinear optical element 12C generates the light L11 using the nonlinear optical phenomenon as the light L10 is incident. The nonlinear optical element 12C is made of, for example, an LBO crystal. For example, the nonlinear optical element 12C generates a second harmonic on the basis of TYPE-1 phase matching as the light L10 is incident. The light L10 and the light L11 have different frequencies. The light L10 incident on the nonlinear optical element 12C and the light L11 emitted from the nonlinear optical element 12C satisfy the phase matching or the quasi-phase matching. The nonlinear optical element 12 and the nonlinear optical element 12C produce the same nonlinear optical phenomena.

The light L10 and the light L11 have different polarization states. For example, the light L10 is ordinary light with respect to the nonlinear optical element 12C, and the light L11 is extraordinary light with respect to the nonlinear optical element 12C. When an angular frequency of the light L10 is "ω₁" and an angular frequency of the light L11 is "ω₂", Expression (31): ω₂ = ω₁ + ω₁ is satisfied. This corresponds to the law of conservation of energy. That is, the light L10 is a fundamental wave, and the light L11 is a second harmonic. The nonlinear optical element 12C generates the second harmonic as the light L11 on the basis of the light L10. The light L10 is, for example, the fundamental wave of the Nd:YAG laser. For example, the wavelength of the light L10 is 1064 nm, and the wavelength of the light L11 is 532 nm.

When a wave number vector of the light L10 is "k₁" and a wave number vector of the light L11 is "k₂", the phase matching condition is represented by Expression (32): Δk = k₂ - k₁ - k₁ = 0. In this case, when the working length of the nonlinear optical element 12C is "L", the phase of the light L10 in the nonlinear optical element 12C is "φ_{ω1}", and the phase of the light L11 in the nonlinear optical element 12C is "φ_{ω2}", Expression (33): Δφ = φ_{ω2} - φ_{ω1} - φ_{ω1} = |Δk| * L = 0 is satisfied. The working length "L" is, for example, the length of the nonlinear optical element 12C.

The light L10 and the light L11 are transmitted through the birefringent element 14. The light L10 and the light L11 are incident on the incident surface 14a of the birefringent element 14. The light L10 has the same configuration as the light L1 except for the frequency and the configuration for the nonlinear optical element 17C. The light L11 has the same configuration as the light L2 except for the frequency and the configuration for the nonlinear optical element 17C.

The light L10 and the light L11 emitted from the birefringent element 14 are incident on the nonlinear optical element 17C. The nonlinear optical element 17C generates a sum frequency using the phase matching or the quasi-phase matching. The nonlinear optical element 17C is made of, for example, an LBO crystal. For example, as the light L10 is incident, the nonlinear optical element 17C generates a second harmonic on the basis of TYPE-1 phase matching. When the phase matching or the quasi-phase matching is satisfied, the nonlinear optical element 17C generates light L12 having the same frequency as the light L11 on the basis of the incident light L10 and emits the light L10 transmitted through the nonlinear optical element 12C together with the light L12. The nonlinear optical element 17C generates the light L12 having the same frequency as the light L11 on the basis of the incident light L10 and light 11, combines the generated light L12 and the light L11 incident on the nonlinear optical element 17C, and emits the combined light as light L13 from the emission surface 18b. The nonlinear optical element 17C transmits a portion of the incident light L10 and emits the transmitted light together with the light L13 from the emission surface 18b, which is not illustrated in FIG. 5. The light L12 has a frequency different from the frequency of the light L10. In the example illustrated in FIG. 5, the light L10 corresponds to the first light, the light L11 corresponds to the second light, and the light L12 corresponds to the third light.

For example, the light L10 is linearly polarized light that is orthogonal to the optical axis AX of the birefringent element 14 and is parallel to the incident surface 14a and is ordinary light with respect to the nonlinear optical element 17C. The light L11 is linearly polarized light parallel to the optical axis AX and the incident surface 14a of the birefringent element 14 and is extraordinary light with respect to the nonlinear optical element 17C. The light L12 is linearly polarized light parallel to the optical axis AX and the incident surface 14a of the birefringent element 14 and is extraordinary light with respect to the nonlinear optical element 17C. When the angular frequency of the light L10 is "ω₁" and the angular frequency of the light L12 is "ω₂", Expression (34): ω₂ = ω₁ + ω₁ is satisfied. This corresponds to the law of conservation of energy. Therefore, the light L12 is a second harmonic. The nonlinear optical element 17C generates the second harmonic as the light L12 on the basis of the incident light L10. The wavelength of the light L12 is 532 nm.

When the phase of the light L10 in the nonlinear optical element 17C is "φ_{ω1}" and the phase of the light L12 in the nonlinear optical element 17C is "φ_{ω2}", Expression (35): φ_{ω2} = φ_{ω1} + φ_{ω1} is satisfied. When a wave number vector of the light L10 in the nonlinear optical element 17C is "k₁" and a wave number vector of the light L12 generated in the nonlinear optical element 17C is "k₂", the phase matching condition is represented by Expression (36): Δk = k₂ - k₁ - k₁ = 0. When the phase matching condition is satisfied, the intensity of the light L12 is ensured. When the phase matching condition is satisfied, the phase difference between the light L10 and the light L12 satisfies Expression (37) Δφ = φ_{ω2} - φ_{ω1} - φ_{ω1} = |k₂ - k₁ - k₁| * L = 0. The working length "L" is, for example, the length of the nonlinear optical element 17C.

When the phase difference between the light L10 and the light L12 incident on the incident surface 18a of the nonlinear optical element 17C is "Δφ'", a relational expression of the phase difference between the light L10 and the light L12 in the nonlinear optical element 17C is represented by Expression (38): Δφ = φ_{ω2} - φ_{ω1} - φ_{ω1} = |Δk| * L - Δφ' from Expression (37). Therefore, when Δφ' = 0 is established, the phase matching condition is satisfied, and the light L12 having a relatively high intensity is generated.

In this modification example, the element control unit 15 controls at least one of the temperature of the birefringent element 14 and the voltage applied to the birefringent element 14 such that, in the birefringent element 14, the phase of the light generated by a nonlinear optical element 12C and the phase of the light generated by the nonlinear optical element 17C are matched with each other. Therefore, the phases of the light L10 and the light L11 are matched with each other in the incident surface 18a of the nonlinear optical element 17C of the light generation unit 4.

For example, the element control unit 15 controls at least one of the temperature of the birefringent element 14 and the voltage applied to the birefringent element 14 such that the phase difference between the light L11 and the light L12 in the nonlinear optical element 17C is reduced. For example, with this configuration, the phase difference PD between the light L10 and the light L11 is reduced in the incident surface 18a of the nonlinear optical element 17C of the light generation unit 4. For example, the element control unit 15 controls the refractive index of the birefringent element 14 such that the phase difference between the light L11 and the light L12 in the nonlinear optical element 17C is zero.

The light L11 generated in the nonlinear optical element 12C is transmitted through the birefringent element 14 whose temperature has been adjusted and is then incident on the nonlinear optical element 17C. Therefore, a phase "φ_{L11}" of the light L 11 in the nonlinear optical element 17C is represented by Expression (39): φ_{L11} = φ_{N_L11} + φ_{ΔT_L11} × ΔT + φ_{AIR_L11} + φ_{AR_L11}. "φ_{N_L11}" is a phase change occurring when the light L11 is transmitted through the birefringent element 14 at the reference temperature, "φ_{ΔT_L11}" is the rate of change in the phase of the light L11 caused by a change in the temperature of the birefringent element 14, "ΔT" is a temperature difference from the reference temperature, "φ_{AIR_L11}" is a phase change occurring when the light L11 propagates in the air, and "φ_{AR_L11}" is a phase change occurring when the light L11 is transmitted through coating films on the incident surface 14a and the emission surface 14b of the birefringent element 14 and the incident surface 18a of the nonlinear optical element 17C.

A phase "φ_{L12}" of the light L12, which has been generated in the nonlinear optical element 17C, in the nonlinear optical element 17C corresponds to "φ_{ω2}" in Expression (35). A phase "φ_{L10}" of the light L10 in the nonlinear optical element 17C corresponds to "φ_{ω1}" in Expression (35). Expression (40): φ_{L12} = 2φ_{L10} is derived from Expression (35). Therefore, Expression (41): φ_{L12} = 2φ_{L10} = 2(φ_{N_L10} + φ_{ΔT_L10} × ΔT + φ_{AIR_L10} + φ_{AR_L10}) is established. "φ_{N_L10}" is a phase generated when the light L10 is transmitted through the birefringent element 14 at the reference temperature, "φ_{ΔT_L10}" is the rate of change in the phase of the light L10 caused by a change in the temperature of the birefringent element 14, "ΔT" is a temperature difference from the reference temperature, "φ_{AIR_L10}" is a phase generated when the light L10 propagates in the air, and "φ_{AR_L10}" is a phase generated when the light L10 is transmitted through the coating films on the incident surface 14a and the emission surface 14b of the birefringent element 14 and the incident surface 18a of the nonlinear optical element 17C.

A phase difference "Δφₜₒₜₐₗ" occurring between the light L11 and the light L12 is represented by Expression (42): Δφₜₒₜₐₗ = φ_{L11} - φ_{L12} = φ_{L11} - 2φ_{L10}. The phase difference occurring between the light L11 and the light L12 due to the adjustment of the temperature of the birefringent element depends on the phase difference occurring between the light L11 and the light L10 due to the transmission through the birefringent element 14 whose temperature has been adjusted.

The phase difference occurring between the light L10 and the light L11 due to the adjustment of the temperature of the birefringent element satisfies Expression (43): Δφₜₒₜₐₗ = Δφ_{ΔT} × ΔT + Δφ_{N} + Δφ_{AIR} + Δφ_{AR}. In this case, "Δφₜₒₜₐₗ" is the sum of the phase differences caused by the transmission through the birefringent element 14 whose temperature has been adjusted, "Δφ_{ΔT}" is the rate of change in the phase difference caused by a change in the temperature of the birefringent element 14, "ΔT" is a temperature difference from the reference temperature, "Δφ_{N}" is a phase difference caused by the transmission through the birefringent element 14 at the reference temperature, "Δφ_{AIR}" is a phase difference caused by propagation in the air, and "Δφ_{AR}" is a phase difference caused by the coating films on the incident surface 14a and the emission surface 14b of the birefringent element 14 and the incident surface 18a of the nonlinear optical element 17C. Therefore, for example, when only the temperature of the birefringent element 14 is controlled, the element control unit 15 may derive the temperature to be changed using Expression (44): Δφ_{ΔT} × ΔT = Δφₜₒₜₐₗ - Δφ_{N} - Δφ_{AIR} - Δφ_{AR}.

The phase difference occurring between the light L10 and the light L11 due to the transmission through the birefringent element 14 to which the voltage has been applied satisfies Expression (45): Δφₜₒₜₐₗ = Δφ_{ΔE} × V + Δφ_{N} + Δφ_{AIR} + Δφ_{AR}. In this case, "Δφₜₒₜₐₗ" is the sum of the phase differences occurring due to the transmission through the birefringent element 14 to which the voltage has been applied, "Δφ_{ΔE}" is the rate of change in the phase difference caused by a change in the voltage applied to the birefringent element 14, and "V" is a voltage value applied to the birefringent element 14. Therefore, for example, when only the voltage applied to the birefringent element 14 is controlled, the element control unit 15 may derive the voltage to be applied to the birefringent element 14 using Expression (46): Δφ_{ΔE} × V = Δφₜₒₜₐₗ - Δφ_{N}-Δφ_{AIR} - Δφ_{AR}. When both the adjustment of the temperature and the application of the voltage are performed, Expressions (43) and (45) can be combined to derive the sum of the phase differences occurring due to the transmission through the birefringent element 14.

In this modification example, the element control unit 15 controls the birefringence of the birefringent element 14 on the basis of at least one of Expression (44) and Expression (46) such that the phases of the light L11 and the light L12 in the nonlinear optical element 17C are matched with each other. As a result, the relatively high intensity of the light L13 obtained by combining the light L11 and the light L12 is ensured.

As a further modification example of this modification example, the element control unit 15 may control the birefringence of the birefringent element 14 such that the intensity of the light L 1 3 is reduced. In this case, for example, the element control unit 15 controls the birefringence of the birefringent element 14 on the basis of at least one of Expression (44) and Expression (46) such that the phases of the light L11 and the light L12 in the nonlinear optical element 17C are matched with each other.

As a further modification example of this modification example, the element control unit 15 may control the birefringence of the birefringent element 14 such that the intensity of the light L13 obtained by combining the light L11 and the light L12 is maximized or minimized. In this case, the intensity of the light L13 may be detected by a light detection unit (not illustrated).

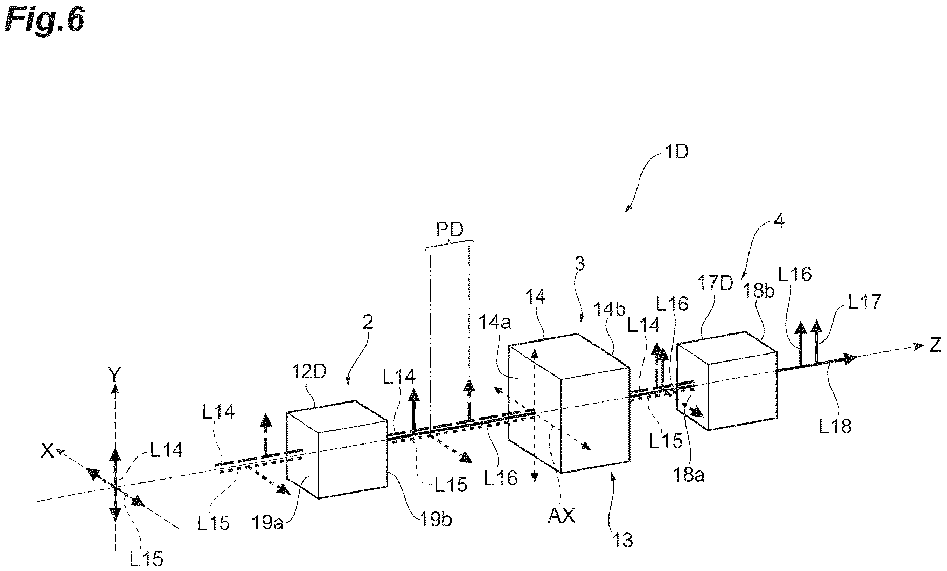

Next, an optical device 1D according to a modification example of this embodiment will be described in more detail with reference to FIG. 6. FIG. 6 is a partially enlarged view illustrating an optical system of the optical device 1D. This modification example is substantially similar to or the same as the modification example illustrated in FIG. 5. This modification example differs from the configuration illustrated in FIG. 5 in that a sum frequency based on TYPE-2 phase matching is generated in nonlinear optical elements 12D and 17D. Hereinafter, the differences from the configuration illustrated in FIG. 5 will be described.

In this modification example, the light emitting unit 2 includes the nonlinear optical element 12D instead of the nonlinear optical element 12C. The light generation unit 4 includes the nonlinear optical element 17D instead of the nonlinear optical element 17C. The nonlinear optical element 12D generates light L16 on the basis of light L14 and light 15 emitted from the light source 11 and emits the light L14 and the light 15 transmitted through the nonlinear optical element 12D together with the light L16. The nonlinear optical element 12D generates the light L16 using the nonlinear optical phenomenon as the light L14 and the light L15 are incident on an incident surface 19a. The nonlinear optical element 12D generates a sum frequency using the phase matching or the quasi-phase matching. The nonlinear optical element 12D is made of, for example, an LBO crystal. The nonlinear optical element 12D generates the sum frequency as the light L16 on the basis of TYPE-2 phase matching. The light L14 and the light L15 have different frequencies. The light L14 and the light L15 incident on the nonlinear optical element 12D and the light L16 emitted from the nonlinear optical element 12D satisfy the phase matching or the quasi-phase matching.

The light L14 and the light L15 have different polarization states. The light L16 has a polarization state different from the polarization state of the light L14 or the light L15. For example, the light L14 is ordinary light with respect to the nonlinear optical element 12D, and the light L15 is extraordinary light with respect to the nonlinear optical element 12D. The light L16 is ordinary light with respect to the nonlinear optical element 12D. The light L14, the light L15, and the light L16 have different frequencies. When an angular frequency of the light L14 is "ω₁", an angular frequency of the light L15 is "ω₂", and an angular frequency of the light L16 is "ω₃". Expression (51): ω₃ = ω₂ + ω₁ is satisfied. This corresponds to the law of conservation of energy. That is, the frequency of the light L16 is the sum of the frequency of the light L14 and the frequency of the light L15.

For example, the light L14 is a fundamental wave, the light L15 is a second harmonic, and the light L16 is a third harmonic. The light L15 has a frequency that is twice the frequency of the light L14, and the light L16 has a frequency that is three times the frequency of the light L14. The light L14 is, for example, the fundamental wave of the Nd:YAG laser. The light L15 is, for example, the second harmonic of the Nd: YAG laser. For example, the wavelength of the light L14 is 1064 nm, the wavelength of the light L15 is 532 nm, and the wavelength of the light L16 is 355 nm.

When a wave number vector of the light L14 is "k₁", a wave number vector of the light L15 is "k₂", and a wave number vector of the light L16 is "k₃", the phase matching condition is represented by Expression (52): Δk = k₃ - k₂ - k₁ = 0. In this case, when the working length of the nonlinear optical element 12D is "L", the phase of the light L14 in the nonlinear optical element 12D is "φ_{ω1}", the phase of the light L15 in the nonlinear optical element 12D is "φ_{ω2}", and the phase of the light L16 in the nonlinear optical element 12D is "φ_{ω3}". Expression (53): Δφ = φ_{ω3} - φ_{ω2} - φ_{ω1} = |Δk| * L = 0 is satisfied. The working length "L" is, for example, the length of the nonlinear optical element 12D.

The light L14, the light L15, and the light L16 are transmitted through the birefringent element 14. The light L14, the light L15, and the light L16 are incident on the incident surface 14a of the birefringent element 14. The phase adjustment unit 3 adjusts the phases of at least two of the light L14, the light L15, and the light L16 incident on the birefringent element 14. The light L14 has the same configuration as the light L1 except for the frequency and the configuration for the nonlinear optical element 17D. The light L15 has the same configuration as the light L2 except for the frequency and the configuration for the nonlinear optical element 17D. In this modification example, the birefringent element 14 is, for example, a sapphire crystal.

The nonlinear optical element 17D is disposed such that the light L14, the light L15, and the light L16 emitted from the birefringent element 14 are incident thereon. Therefore, the light L14, the light L15, and the light L16 emitted from the birefringent element 14 are incident on the nonlinear optical element 17D. The nonlinear optical element 17D generates a sum frequency using the phase matching or the quasi-phase matching. The nonlinear optical element 17D is made of, for example, an LBO crystal. For example, the nonlinear optical element 17D generates the sum frequency on the basis of TYPE-2 phase matching as the light L14 and the light L15 are incident on the incident surface 18a. The nonlinear optical element 17D generates light L17 having the same frequency as the light L 16 on the basis of the incident light L14 and light L15, combines the generated light L17 and the light L16 incident on the nonlinear optical element 17D, and emits the combined light as light L18 from the emission surface 18b. The nonlinear optical element 17D transmits a portion of the incident light L14 and light L15 and emits the transmitted light together with the light L18 from the emission surface 18b, which is not illustrated in FIG. 6. The light L18 has a frequency different from the frequencies of the light L14 and the light L15. In the example illustrated in FIG. 6, the light L14 corresponds to the first light, the light L15 corresponds to the second light, the light L17 corresponds to the third light, and the light L16 corresponds to fourth light.

For example, the light L14 is linearly polarized light that is orthogonal to the optical axis AX of the birefringent element 14 and is parallel to the incident surface 14a and is ordinary light with respect to the nonlinear optical element 17D. The light L15 is linearly polarized light parallel to the optical axis AX and the incident surface 14a of the birefringent element 14 and is extraordinary light with respect to the nonlinear optical element 17D. The light L16 is linearly polarized light that is orthogonal to the optical axis AX of the birefringent element 14 and is parallel to the incident surface 14a and is ordinary light with respect to the nonlinear optical element 17D. The light L17 is linearly polarized light that is orthogonal to the optical axis AX of the birefringent element 14 and is parallel to the incident surface 14a and is ordinary light with respect to the nonlinear optical element 17D. When an angular frequency of the light L14 is "ω₁", an angular frequency of the light L15 is "ω₂", and an angular frequency of the light L17 is "ω₃", Expression (54): ω₃ = ω₂ + ω₁ is satisfied. This corresponds to the law of conservation of energy.

The frequency of the light L17 is the sum of the frequency of the light L14 and the frequency of the light L15. The light L14 is a fundamental wave, and the light L15 is a second harmonic of the fundamental wave. Therefore, the light L17 is a third harmonic of the fundamental wave. The nonlinear optical element 17D generates a sum frequency as the light L17 on the basis of the incident light L14 and light L15. For example, the wavelength of the light L17 is 355 nm.

When the phase of the light L14 in the nonlinear optical element 17D is "φ_{ω1}", the phase of the light L15 in the nonlinear optical element 17D is "φ_{ω2}", and the phase of the light L17 in the nonlinear optical element 17D is "φ_{ω3}". Expression (55): φ_{ω3} = φ_{ω2} + φ_{ω1} is satisfied. A wave number vector of the light L14 in the nonlinear optical element 17D is "k₁", a wave number vector of the light L15 in the nonlinear optical element 17D is "k₂", and a wave number vector of the light L17, which is generated in the nonlinear optical element 17D, in the nonlinear optical element 17D is "k₃". In this case, the phase matching condition is represented by Expression (56): Δk = k₃ - k₂ - k₁ = 0. When the phase matching condition is satisfied, the intensity of the light L17 is ensured. When the phase matching condition is satisfied, the phase difference between the light L14, the light L15, and the light L16 satisfies Expression (57): Δφ = φ_{ω3} - φ_{ω2} - φ_{ω1} = |k₃ - k₂ - k₁| * L = 0. The working length "L" is, for example, the length of the nonlinear optical element 17D.

In this modification example, the element control unit 15 controls at least one of the temperature of the birefringent element 14 and the voltage applied to the birefringent element 14 such that, in the birefringent element 14, the phase of the light generated by a nonlinear optical elements 12D and the phase of the light generated by the nonlinear optical element 17D are matched with each other. Therefore, the phases of the light L14, the light L15, and the light L16 are matched with each other in the incident surface 18a of the nonlinear optical element 17D of the light generation unit 4.

For example, the element control unit 15 controls at least one of the temperature of the birefringent element 14 and the voltage applied to the birefringent element 14 such that the phase difference between the light L16 and the light L17 in the nonlinear optical element 17D is reduced. For example, a phase difference PD between the light L14 and the light L15 in the incident surface 18a of the nonlinear optical element 17D of the light generation unit 4 is reduced by this configuration. For example, the element control unit 15 controls the refractive index of the birefringent element 14 such that the phase difference between the light L16 and the light L17 in the nonlinear optical element 17D is zero.

The light L16 generated in the nonlinear optical element 12D is transmitted through the birefringent element 14 whose temperature has been adjusted and is then incident on the nonlinear optical element 17D. Therefore, a phase "φ_{L16}" of the light L 1 6 in the nonlinear optical element 17D is represented by Expression (58): φ_{L16} = φ_{N_L16} + φ_{ΔT_L16} × ΔT + φ_{AIR_L16} + φ_{AR_L16}. "φ_{N_L16}" is a phase generated when the light L16 is transmitted through the birefringent element 14 at the reference temperature, "φ_{ΔT_L16}" is the rate of change in the phase of the light L16 caused by a change in the temperature of the birefringent element 14, "ΔT" is a temperature difference from the reference temperature, "φ_{AIR_L16}" is a phase generated when the light L16 propagates in the air, and "φ_{AR_L16}" is a phase generated when the light L16 is transmitted through the coating films on the incident surface 14a and the emission surface 14b of the birefringent element 14 and the incident surface 18a of the nonlinear optical element 17D.

A phase "φ_{L17}" of the light L17, which has been generated in the nonlinear optical element 17D, in the nonlinear optical element 17D corresponds to "φ_{ω3}" in Expression (55). Aphase "φ_{L15}" of the light L15 in the nonlinear optical element 17D corresponds to "φ_{ω2}" in Expression (55). A phase "φ_{L14}" of the light L14 in the nonlinear optical element 17D corresponds to "φ_{ω1}" in Expression (55). Expression (59): φ_{L17} = φ_{L15} + φ_{L14} is derived from Expression (55). Therefore, Expression (60): φ_{L17} = φ_{L15} + φ_{L14} = (φ_{N_L15} + φ_{ΔT_L15} × ΔT + φ_{AIR_L15} + φ_{AR_L15}) + (φ_{N_L14} + φ_{ΔT_L14} × ΔT + φ_{AIR_L14} + φ_{AR_L14}) is established.

"φ_{N_L15}" is a phase generated when the light L15 is transmitted through the birefringent element 14 at the reference temperature, "φ_{ΔT_L15}" is the rate of change in the phase of the light L15 caused by a change in the temperature of the birefringent element 14, "ΔT" is a temperature difference from the reference temperature, "φ_{AIR_L15}" is a phase generated when the light L15 propagates in the air, and "φ_{AR_L15}" is a phase generated when the light L15 is transmitted through the coating films on the incident surface 14a and the emission surface 14b of the birefringent element 14 and the incident surface 18a of the nonlinear optical element 17D.

"φ_{N_L14}" is a phase generated when the light L14 is transmitted through the birefringent element 14 at the reference temperature, "φ_{ΔT_L14}" is the rate of change in the phase of the light L14 caused by a change in the temperature of the birefringent element 14, "ΔT" is a temperature difference from the reference temperature, "φ_{AIR_L14}" is a phase generated when the light L14 propagates in the air, and "φ_{AR_L14}" is a phase generated when the light L14 is transmitted through the coating films on the incident surface 14a and the emission surface 14b of the birefringent element 14 and the incident surface 18a of the nonlinear optical element 17D.

A phase difference "Δφₜₒₜₐₗ" occurring between the light L16 and the light L17 is represented by Expression (61): Δφₜₒₜₐₗ = φ_{L16} - φ_{L17} = φ_{L16} - φ_{L15} - φ_{L14}. The phase difference occurring between the light L16 and the light L17 due to the transmission through the birefringent element 14 whose temperature has been adjusted or to which the voltage has been applied satisfies Expression (43) or Expression (45).

In this modification example, the element control unit 15 controls the birefringence of the birefringent element 14 on the basis of at least one of Expression (44) and Expression (46) such that the phases of the light L16 and the light L17 in the nonlinear optical element 17D are matched with each other. As a result, the relatively high intensity of the light L18 obtained by combining the light L16 and the light L17 is ensured.

As a further modification example of this modification example, the element control unit 15 may control the birefringence of the birefringent element 14 such that the intensity of the light L18 is reduced. In this case, for example, the element control unit 15 controls the birefringence of the birefringent element 14 on the basis of at least one of Expression (44) and Expression (46) such that the phases of the light L16 and the light L17 in the nonlinear optical element 17D deviate from each other.

As a further modification example of this modification example, the element control unit 15 may control the birefringence of the birefringent element 14 such that the intensity of the light L18 obtained by combining the light L16 with the light L17 is maximized or minimized. In this case, the intensity of the light L18 may be detected by a light detection unit (not illustrated).

As a further modification example of this modification example, the optical device 1D may generate a difference frequency based on TYPE-2 phase matching in the nonlinear optical elements 12D and 17D. In this case, the frequency of the light L17 and the frequency of the light L16 are the difference between the frequency of the light L14 and the frequency of the light L15. In this case, the law of conservation of energy and the phase matching condition for the nonlinear optical phenomena occurring in the nonlinear optical elements 12D and 17D are the same as the law of conservation of energy and the phase matching condition for the light L4, the light L5, and the light L6 in the optical device 1A. The nonlinear optical element 12D has, for example, the same structure as the nonlinear optical element 17A. The nonlinear optical element 17D has, for example, the same structure as the nonlinear optical element 17A.

In the above-described configuration in which the optical device 1D generates the difference frequency based on the TYPE-2 phase matching, for example, as the light L14 and the light L15 are incident, the nonlinear optical element 12D generates the difference frequency as the light L16 on the basis of the TYPE-2 phase matching. In this case, the light L14 corresponds to the light L4, the light L15 corresponds to the light L5, and the light L16 corresponds to the light L6. For example, as the light L14 and the light L15 are incident, the nonlinear optical element 17D generates a difference frequency as the light L17 on the basis of the TYPE-2 phase matching, combines the generated light L17 and the light L16 incident on the nonlinear optical element 17D, and emits the combined light as the light L18 from the emission surface 18b. In this case, the light L14 corresponds to the light L4, the light L15 corresponds to the light L5, and the light L17 corresponds to the light L6. When the phase matching condition is satisfied, the phase difference between the light L14, the light L15, and the light L16 in the nonlinear optical element 17D satisfies Expression (14). The phase difference "Δφₜₒₜₐₗ" occurring between the light L 16 and the light L17 is represented by Expression (62): Δφₜₒₜₐₗ = φ_{L16} - φ_{L17} = φ_{L16} - φ_{L14} + φ_{L15}.

As a further modification example of this modification example, the optical device 1D may generate a sum frequency or a difference frequency based on TYPE-1 phase matching in the nonlinear optical elements 12D and 17D. In this case, the light L14 and the light L15 have the same polarization state. The light L16 has a polarization state different from the polarization state of the light L14 or the light L15. The light L17 has a polarization state different from the polarization state of the light L14 or the light L15. For example, the light L14 and the light L15 are ordinary lights with respect to the nonlinear optical element 12D, and the light L16 is extraordinary light with respect to the nonlinear optical element 12D. For example, the light L14 and the L15 are ordinary light with respect to the nonlinear optical element 17D, and the light L17 is extraordinary light with respect to the nonlinear optical element 17D. In this case, for example, the light L14 corresponds to the first light, the light L15 corresponds to the fourth light, the light L16 corresponds to the second light, and the light L17 corresponds to the third light.

With the above-described configuration, when the optical device 1D generates the sum frequency based on the TYPE-1 phase matching in the nonlinear optical elements 12D and 17D, the frequency of the light L16 and the frequency of the light L17 are the sum of the frequency of the light L14 and the frequency of the light L15.

With the above-described configuration, when the optical device 1D generates the difference frequency based on the TYPE-1 phase matching in the nonlinear optical elements 12D and 17D, the frequency of the light L16 and the frequency of the light L17 are the difference between the frequency of the light L14 and the frequency of the light L15.

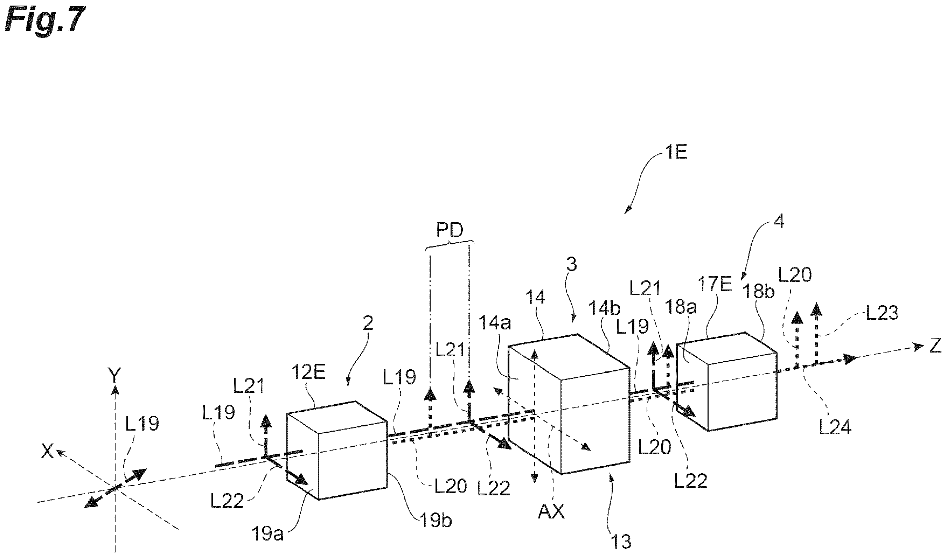

Next, an optical device 1E according to a modification example of this embodiment will be described in more detail with reference to FIG. 7. FIG. 7 is a partially enlarged view illustrating an optical system of the optical device 1E. This modification example is substantially similar to or the same as the modification example illustrated in FIG. 5. This modification example differs from the modification example illustrated in FIG. 5 in that nonlinear optical elements 12E and 17E using TYPE-2 phase matching are used instead of the nonlinear optical elements 12C and 17C. Hereinafter, the differences from the modification example illustrated in FIG. 5 will be described.

In this modification example, the light emitting unit 2 includes the nonlinear optical element 12E instead of the nonlinear optical element 12C. The light generation unit 4 includes the nonlinear optical element 17E instead of the nonlinear optical element 17C. The nonlinear optical element 12E generates light L20 on the basis of light L19 emitted from the light source 11 and emits the light L19 transmitted through the nonlinear optical element 12E together with the light L20. The nonlinear optical element 12E generates the light L20 using the nonlinear optical phenomenon as the light L19 is incident. The nonlinear optical element 12E is made of, for example, an LBO crystal. For example, the nonlinear optical element 12E generates a second harmonic on the basis of TYPE-2 phase matching as the light L19 is incident. The light L19 and the light L20 have different frequencies. The light L19 incident on the nonlinear optical element 12E and the light L20 emitted from the nonlinear optical element 12E satisfy the phase matching or the quasi-phase matching.

The light L19 and the light L20 have different polarization states. The light L19 includes a polarized component L21 parallel to the X-axis direction and a polarized component L22 parallel to the Y-axis direction. The light L19 has, for example, linearly polarized light that is parallel to the XY plane and is inclined at 45 degrees with respect to the X-axis direction. The light L20 is linearly polarized light parallel to the Y-axis direction. The nonlinear optical element 12E emits the polarized component L21 and the polarized component L22 of the light L19 together with the light L20. In addition, hereinafter, the polarized component L21 and the polarized component L22 are also referred to as light L22 and light L23.

For example, the polarized component L21 of the light L19 is ordinary light with respect to the nonlinear optical element 12E, and the polarized component L22 of the light L19 is extraordinary light with respect to the nonlinear optical element 12E. The light L20 is ordinary light with respect to the nonlinear optical element 12E. When an angular frequency of the light L19 is "ω₁" and an angular frequency of the light L20 is "ω₂", Expression (71): ω₂ = ω₁ + ω₁ is satisfied. This corresponds to the law of conservation of energy.

For example, the light L19 is a fundamental wave, and the light L20 is a second harmonic. The light L20 has a frequency that is twice the frequency of the light L19. The nonlinear optical element 12E generates a second harmonic as the light L20 on the basis of the polarized components L21 and L22 of the light L19. The light L19 is, for example, the fundamental wave of the NdYAG laser. For example, the wavelength of the light L19 is 1064 nm, and the wavelength of the light L20 is 532 nm.

When a wave number vector of the polarized component L21 of the light L19 is "k₁", a wave number vector of the polarized component L22 of the light L19 is "k₁", and a wave number vector of the light L20 is "k₂", the phase matching condition is represented by Expression (72): Δk = k₂ - k₁ - k₁ = 0. When the working length of the nonlinear optical element 12E is "L", the phase of the light L19 emitted from the nonlinear optical element 12E "φ_{ω1}", and the phase of the light L20 emitted from the nonlinear optical element 12E is "φ_{ω2}", Expression (73): Δφ = φ_{ω2}-φ_{ω1} - φ_{ω1} = |Δk| * L = 0 is satisfied. The working length "L" is, for example, the length of the nonlinear optical element 12E.

The light L19 is transmitted through the birefringent element 14. The polarized components L21 and L22 of the light L19 and the light L20 are incident on the incident surface 14a of the birefringent element 14. The phase adjustment unit 3 adjusts the phases of at least two of the polarized component L21, the polarized component L22, and the light L20 incident on the birefringent element 14. The polarized component L21 has the same configuration as the light L1 except for the frequency and the configuration for the nonlinear optical element 17E. The polarized component L22 has the same configuration as the light L2 except for the frequency and the configuration for the nonlinear optical element 17E.

The nonlinear optical element 17E is disposed such that the polarized components L21 and L22 and the light L20 emitted from the birefringent element 14 are incident on the nonlinear optical element 17E. Therefore, the light L19 and the light L20 emitted from the birefringent element 14 are incident on the nonlinear optical element 17E. The nonlinear optical element 17E produces the same nonlinear optical phenomenon as the nonlinear optical element 12E. The nonlinear optical element 17E generates a sum frequency using the phase matching or the quasi-phase matching. The nonlinear optical element 17E is made of, for example, an LBO crystal. For example, as the polarized components L21 and L22 of the light L19 are incident on the incident surface 18a, the nonlinear optical element 17E generates a second harmonic as light L23 on the basis of the TYPE-2 phase matching. The nonlinear optical element 17E generates the light L23 having the same frequency as the light L20 on the basis of the incident polarized components L21 and L22. The nonlinear optical element 17E combines the generated light L23 and the light L20 incident on the nonlinear optical element 17E and emits the combined light as light L24 from the emission surface 18b. The nonlinear optical element 17E transmits a portion of the incident light L19 and emits the transmitted light together with the light L24 from the emission surface 18b, which is not illustrated in FIG. 7. The light L24 has a frequency different from the frequencies of the polarized components L21 and L22. In the configuration illustrated in FIG. 7, the polarized component L21 corresponds to the first light, the polarized component L22 corresponds to the second light, the light L23 corresponds to the third light, and the light L24 corresponds to the fourth light.

For example, the polarized component L21 of the light L19 is linearly polarized light that is orthogonal to the optical axis AX of the birefringent element 14 and is parallel to the incident surface 14a and is ordinary light with respect to the nonlinear optical element 17E. The polarized component L22 of the light L19 is linearly polarized light parallel to the optical axis AX and the incident surface 14a of the birefringent element 14 and is extraordinary light with respect to the nonlinear optical element 17E. The light L23 is linearly polarized light that is orthogonal to the optical axis AX of the birefringent element 14 and is parallel to the incident surface 14a and is ordinary light with respect to the nonlinear optical element 17E. When an angular frequency of the light L19 is "ω₁" and an angular frequency of the light L23 is "ω₂", Expression (74): ω₂ = ω₁ + ω₁ is satisfied. This corresponds to the law of conservation of energy. Therefore, the light L23 is a second harmonic. The nonlinear optical element 17E generates the second harmonic as the light L23 on the basis of the incident light L19. The wavelength of the light L23 is 532 nm.

When the phases of the polarized components L21 and L22 in the nonlinear optical element 17E is "φ_{ω1}" and the phase of the light L23 in the nonlinear optical element 17E is "φ_{ω2}", Expression (75): φ_{ω2} = φ_{ω1} + φ_{ω1} is satisfied. When wave number vectors of the polarized components L21 and L22 of the light L19 is "k₁" and a wave number vector of the light L23 generated in the nonlinear optical element 17E is "k₂", the phase matching condition is represented by Expression (76): Δk = k₂ - k₁ - k₁ = 0. When the phase matching condition is satisfied, the intensity of the light L23 is ensured. When the phase matching condition is satisfied, the phase difference between the light L19 and the light L23 satisfies Expression (77): Δφ = φ_{ω2} - φ_{ω1} - φ_{ω1} = |Δk| * L = 0. The working length "L" is, for example, the length of the nonlinear optical element 17E.

In this modification example, the element control unit 15 controls at least one of the temperature of the birefringent element 14 and the voltage applied to the birefringent element 14 such that, in the birefringent element 14, the phase of the light generated by a nonlinear optical elements 12E and the phase of the light generated by the nonlinear optical element 17E are matched with each other. Therefore, the phases of the polarized components L21 and L22 and the light L20 are matched with each other in the incident surface 18a of the nonlinear optical element 17E of the light generation unit 4.

For example, the element control unit 15 controls at least one of the temperature of the birefringent element 14 and the voltage applied to the birefringent element 14 such that the phase between the light L20 and the light L23 in the nonlinear optical element 17E is reduced. For example, with this configuration, a phase difference PD between the polarized components L21 and L22 and the light L20 is reduced in the incident surface 18a of the nonlinear optical element 17E of the light generation unit 4. For example, the element control unit 15 controls the refractive index of the birefringent element 14 such that the phase difference between the light L20 and the light L23 in the nonlinear optical element 17E is zero.

The light L20 generated in the nonlinear optical element 12E is transmitted through the birefringent element 14 whose temperature has been adjusted and is then incident on the nonlinear optical element 17E. Therefore, a phase "φ_{L20}" of the light L20 in the nonlinear optical element 17E is represented by Expression (78): φ_{L20} = φ_{N_L20} + φ_{ΔT_L20} × ΔT + φ_{AIR_L20} + φ_{AR_L20}. "φ_{N_L20}" is a phase generated when the light L20 is transmitted through the birefringent element 14 at the reference temperature, "φ_{ΔT_L20}" is the rate of change in the phase of the light L20 caused by a change in the temperature of the birefringent element 14, "ΔT" is a temperature difference from the reference temperature, "φ_{AIR_L20}" is a phase generated when the light L20 propagates in the air, and "φ_{AR_L20}" is a phase generated when the light L20 is transmitted through coating films on the incident surface 14a and the emission surface 14b of the birefringent element 14 and the incident surface 18a of the nonlinear optical element 17E.

A phase "φ_{L23}" of the light L23, which has been generated in the nonlinear optical element 17E, in the nonlinear optical element 17E corresponds to "φ_{ω2}" in Expression (75). A phase "φ_{L21}" of the polarized component L21 of the light L19 in the nonlinear optical element 17E corresponds to "φ_{ω1}" in Expression (75). Aphase "φ_{L22}" of the polarized component L22 of the light L19 in the nonlinear optical element 17E corresponds to "φ_{ω1}" in Expression (75). Expression (79): φ_{L23} = φ_{L21} + φ_{L22} is derived from Expression (75). Therefore, Expression (80): φ_{L23} = φ_{L21} + φ_{L22} = φ_{N_L21} + φ_{ΔT_L21} × ΔT + φ_{AIR_L21} + φ_{AR_L21}) + φ_{N_L22} + φ_{ΔT_22} × ΔT + φ_{AIR_L22} + φ_{AR_L22}) is established.

"φ_{N_L21}" is a phase generated when the polarized component L21 is transmitted through the birefringent element 14 at the reference temperature, "φ_{ΔT_L21}" is the rate of change in the phase of the polarized component L21 caused by a change in the temperature of the birefringent element 14, "ΔT" is a temperature difference from the reference temperature, "φ_{AIR_L21}" is a phase generated when the polarized component L21 propagates in the air, and "φ_{AR_L21}" is a phase generated when the polarized component L21 is transmitted through the coating films on the incident surface 14a and the emission surface 14b of the birefringent element 14 and the incident surface 18a of the nonlinear optical element 17E.

"φ_{N_L22}" is a phase generated when the polarized component L22 is transmitted through the birefringent element 14 at the reference temperature, "φ_{ΔT_L22}" is the rate of change in the phase of the polarized component L22 caused by a change in the temperature of the birefringent element 14, "ΔT" is a temperature difference from the reference temperature, "φ_{AIR_L22}" is a phase generated when the polarized component L22 propagates in the air, and "φ_{AR_L22}" is a phase generated when the polarized component L22 is transmitted through the coating films on the incident surface 14a and the emission surface 14b of the birefringent element 14 and the incident surface 18a of the nonlinear optical element 17E.

A phase difference "Δφₜₒₜₐₗ" occurring between the light L20 and the light L23 is represented by Expression (81): Δφₜₒₜₐₗ = φ_{L20} - φ_{L23}. The phase difference occurring between the light L20 and the light L23 due to the transmission through the birefringent element 14 whose temperature has been adjusted or to which the voltage has been applied satisfies Expression (43) and Expression (45).

In this modification example, the element control unit 15 controls the birefringence of the birefringent element 14 on the basis of at least one of Expression (44) and Expression (46) such that the phases of the light L20 and the light L23 in the nonlinear optical element 17E are matched with each other. As a result, the relatively high intensity of the light L24 obtained by combining the light L20 and the light L23 is ensured.

As a further modification example of this modification example, the element control unit 15 may control the birefringence of the birefringent element 14 such that the intensity of the light L24 is reduced. In this case, for example, the element control unit 15 controls the birefringence of the birefringent element 14 on the basis of at least one of Expression (44) and Expression (46) such that the phases of the light L20 and the light L23 in the nonlinear optical element 17E deviate from each other.

As a further modification example of this modification example, the element control unit 15 may control the birefringence of the birefringent element 14 such that the intensity of the light L24 obtained by combining the light L20 and the light L23 is maximized or minimized. In this case, the intensity of the light L24 may be detected by a light detection unit (not illustrated).

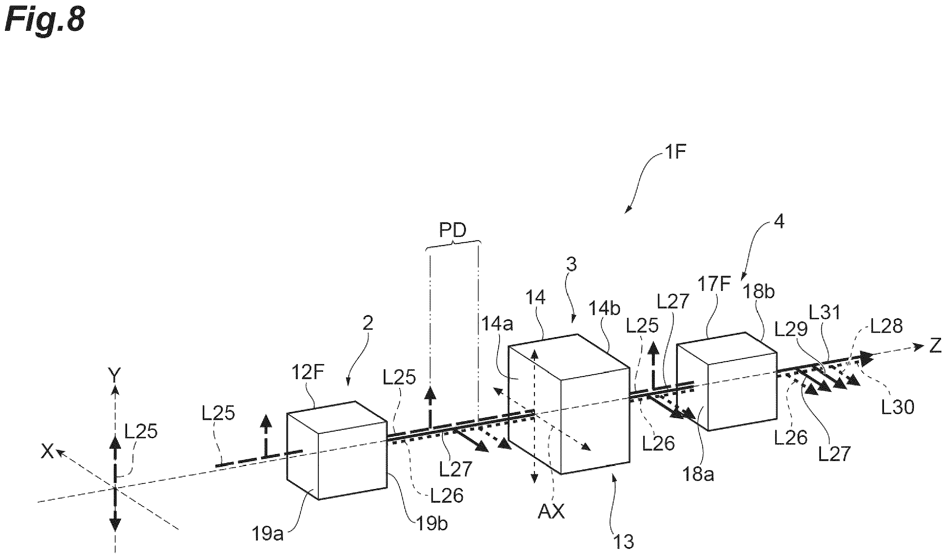

Next, an optical device 1F according to a modification example of this embodiment will be described in more detail with reference to FIG. 8. FIG. 8 is a partially enlarged view illustrating an optical system of the optical device 1F. This modification example is substantially similar to or the same as the modification example illustrated in FIG. 5. This modification example differs from the configuration illustrated in FIG. 5 in that an optical parametric process is generated in nonlinear optical elements 12F and 17F. Hereinafter, the differences from the configuration illustrated in Figure will be described.

In this modification example, the light emitting unit 2 includes the nonlinear optical element 12F instead of the nonlinear optical element 12C. The light generation unit 4 includes the nonlinear optical element 17F instead of the nonlinear optical element 17C. The nonlinear optical element 12F generates light L26 and light L27 on the basis of light L25 emitted from the light source 11 and emits the light L25 transmitted through the nonlinear optical element 12F together with the light L26 and the light L27. The nonlinear optical element 12F generates the light L26 and the light L27 using the nonlinear optical phenomenon as the light L25 is incident on an incident surface 19a. The nonlinear optical element 12F generates the optical parametric process using the phase matching or the quasi-phase matching. The nonlinear optical element 12F is made of, for example, an LBO crystal. For example, the light L25, the light L26, and the light 27 have different frequencies. The light L25 incident on the nonlinear optical element 12F, and the light L26 and the light L27 emitted from the nonlinear optical element 12F satisfy the phase matching or the quasi-phase matching. The nonlinear optical element 12F generates the optical parametric process on the basis of TYPE-1 phase matching and generates the light L26 and the light L27. The light L25 is pump light, the light L26 is signal light, and the light L27 is idler light.

The light L25 and the light L26 have different polarization states. The light L25 and the light L27 have different polarization states. The light L25 is, for example, linearly polarized light parallel to the Y-axis direction. The light L26 and the light L27 are, for example, linearly polarized light parallel to the X-axis direction. For example, the light L25 is ordinary light with respect to the nonlinear optical element 12F, and the light L26 and the light L27 are extraordinary light with respect to the nonlinear optical element 12F. The light L25, the light L26, and the light L27 have different frequencies. When an angular frequency of the light L25 is "ω₁", an angular frequency of the light L26 is "ω₂", and an angular frequency of the light L27 is "ω₃", Expression (91): ω₁ = ω₂ + ω₃ is satisfied. This corresponds to the law of conservation of energy. The frequency of the light L25 is the sum of the frequency of the light L26 and the frequency of the light L27. In other words, a portion of the energy of the light L25, which is the pump light, is separated into energy for generating the light L26 and the light L27. The light L25 is, for example, the fundamental wave of the Nd:YAG laser. For example, the wavelength of the light L25 is 1064 nm, the wavelength of the light L26 is 1570 nm, and the wavelength of the light L27 is 3300 nm.

When a wave number vector of the light L25 is "k₁", a wave number vector of the light L26 is "k₂", and a wave number vector of the light L27 is "k₃", the phase matching condition is represented by Expression (92): Δk = k₁ - k₂ - k₃ = 0. In this case, when the working length of the nonlinear optical element 12F is "L", the phase of the light L25 in the nonlinear optical element 12F is "φ_{ω1}", the phase of the light L26 in the nonlinear optical element 12F is "φ_{ω2}", and the phase of the light L27 in the nonlinear optical element 12F is "φ_{ω3}", Expression (93): Δφ = φ_{ω1} - φ_{ω2} - φ_{ω3} = |Δk| * L = 0 is satisfied. The working length "L" is, for example, the length of the nonlinear optical element 17F.

The light L25, the light L26, and the light L27 are incident on the incident surface 14a of the birefringent element 14. The phase adjustment unit 3 adjusts the phases of at least two of the light L25, the light L26, and the light L27 incident on the birefringent element 14. The light L25 has the same configuration as the light L1 except for the frequency and the configuration for the nonlinear optical element 17F. The light L26 and the light L27 have the same configuration as the light L2 except for the frequency and the configuration for the nonlinear optical element 17F.

The light L25, the light L26, and the light L27 are transmitted through the birefringent element 14. The nonlinear optical element 17F is disposed such that the light L25, the light L26, and the light L27 emitted from the birefringent element 14 are incident thereon. Therefore, the light L25, the light L26, and the light L27 emitted from the birefringent element 14 are incident on the nonlinear optical element 17F. The nonlinear optical element 17F produces the same nonlinear optical phenomenon as the nonlinear optical element 12F. The nonlinear optical element 17F generates light L28 and light L29 on the basis of the incident light L25, light L26, and light L27. The light L26 and the light L28 have the same polarization state and frequency. The light L27 and the light L29 have the same polarization state and frequency. The nonlinear optical element 17F combines the generated light L28 and the light L26 incident on the nonlinear optical element 17F and emits the combined light as light L30 from the emission surface 18b. The nonlinear optical element 17F combines the generated light L29 and the light L27 incident on the nonlinear optical element 17F and emits the combined light as light L31 from the emission surface 18b. The nonlinear optical element 17F adjusts the intensity of at least one of the light L26 and the light L27 by combining the light L26 and the light L28 and by combining the light L27 and the light L29.

In the example illustrated in FIG. 8, the light L25 incident on the nonlinear optical elements 12F and 17F corresponds to the first light, the light L26 generated in the nonlinear optical element 12F corresponds to the second light, and the light L27 generated in the nonlinear optical element 12F corresponds to the fourth light. The light L28 having the same polarization state and frequency as the light L26 generated in the nonlinear optical element 17F corresponds to fifth light, and the light L29 having the same polarization state and frequency as the light L27 generated in the nonlinear optical element 17F corresponds to sixth light. The light L30 and the light L31 emitted from the nonlinear optical element 17F correspond to the third light.

The nonlinear optical element 17F generates the optical parametric process using the phase matching or the quasi-phase matching. The nonlinear optical element 17F is made of, for example, a KTP crystal. As the light L25 is incident on the incident surface 18a, the nonlinear optical element 17F generates the optical parametric process on the basis of the phase matching or the quasi-phase matching to generate the light L28 and the light L29. The light L25 is pump light, the light L26 and the light L28 are signal light, and the light L27 and the light L29 are idler light. For example, the light L26 has a lower intensity than the light L25 which is the pump light. The nonlinear optical element 17F emits the incident light L25 from the emission surface 18b together with the light L30 and the light L31, which is not illustrated in FIG. 8. For example, the light L26 or the light L27 corresponds to the light to be amplified.

For example, the light L25 is linearly polarized light that is orthogonal to the optical axis AX of the birefringent element 14 and is parallel to the incident surface 14a and is ordinary light with respect to the nonlinear optical element 17F. The light L26 is linearly polarized light parallel to the optical axis AX and the incident surface 14a of the birefringent element 14 and is extraordinary light with respect to the nonlinear optical element 17F. The light L27 is linearly polarized light parallel to the optical axis AX and the incident surface 14a of the birefringent element 14 and is extraordinary light with respect to the nonlinear optical element 17F. When an angular frequency of the light L25 is "ω₁", an angular frequency of the light L28 is "ω₂", and an angular frequency of the light L29 is "ω₃". Expression (94): ω₁ = ω₂ + ω₃ is satisfied. This corresponds to the law of conservation of energy. That is, the frequency of the light L25 is the sum of the frequency of the light L28 and the frequency of the light L29. In other words, a portion of the energy of the light L25, which is the pump light, is separated into energy for generating the light L28 and the light L29.

When the phase of the light L25 in the nonlinear optical element 17F is "φ_{ω1}", the phase of the light L28 in the nonlinear optical element 17F is "φ_{ω2}", and the phase of the light L29 in the nonlinear optical element 17F is "φ_{ω3}". Expression (95): φ_{ω1} = φ_{ω2} + φ_{ω3} is satisfied. When a wave number vector of the light L25 in the nonlinear optical element 17F is "k₁", a wave number vector of the light L28 in the nonlinear optical element 17F is "k₂", and a wave number vector of the light L29 in the nonlinear optical element 17F is "k₃", the phase matching condition is represented by Expression (96): Δk = k₁ - k₂ - k₃ = 0. When the phase matching condition is satisfied, the phase difference between the light L25, the light L28, and the light L29 satisfies Expression (97): Δφ = φ_{ω1} - φ_{ω2} - φ_{ω3} = |k₁ - k₂ - k₃| * L = 0. The working length "L" is, for example, the length of the nonlinear optical element 17F.

In this modification example, when amplifying the intensity of the light L26, the element control unit 15 controls at least one of the temperature of the birefringent element 14 and the voltage applied to the birefringent element 14 such that, in the birefringent element 14, the phase of the light L26 generated by a plurality of nonlinear optical elements 12F and the phase of the light L28 generated by the nonlinear optical element 17F are matched with each other. For example, the element control unit 15 controls the birefringence of the birefringent element 14 such that the phase difference between the light L26 and the light L28 in the nonlinear optical element 17F is reduced. For example, the element control unit 15 controls the refractive index of the birefringent element 14 such that the phase difference between the light L26 and the light L28 in the nonlinear optical element 17F is zero.

In this modification example, when amplifying the intensity of the light L27, the element control unit 15 controls at least one of the temperature of the birefringent element 14 and the voltage applied to the birefringent element 14 such that, in the birefringent element 14, the phase of the light L27 generated by the plurality of nonlinear optical elements 12F and the phase of the light L29 generated by the nonlinear optical element 17F are matched with each other. For example, the element control unit 15 controls the birefringence of the birefringent element 14 such that the phase difference between the light L27 and the light L29 in the nonlinear optical element 17F is reduced. In other words, the element control unit 15 performs control such that at least one of the phase difference between the light L26 and the light L28 in the nonlinear optical element 17F and the phase difference between the light L27 and the light L29 in the nonlinear optical element 17F is reduced.

For example, when amplifying the intensity of both the light L26 and the light L27 emitted from the nonlinear optical element 17F, the element control unit 15 controls at least one of the temperature of the birefringent element 14 and the voltage applied to the birefringent element 14 such that the phases of the light L26 and the light L28 are matched with each other and the phases of the light L27 and the light L29 are matched with each other. For example, when amplifying the intensity of the light L26 emitted from the nonlinear optical element 17F and reducing the intensity of the light L27 emitted from the nonlinear optical element 17F, the element control unit 15 controls at least one of the temperature of the birefringent element 14 and the voltage applied to the birefringent element 14 such that the phases of the light L26 and the light L28 are matched with each other and the phases of the light L27 and the light L29 deviate from each other.

The light L26 generated in the nonlinear optical element 12F is transmitted through the birefringent element 14 whose temperature has been adjusted and is then incident on the nonlinear optical element 17F. Therefore, a phase "φ_{L26}" of the light L26 in the nonlinear optical element 17F is represented by Expression (98): φ_{L26} = φ_{N_L26} + φ_{ΔT_L26} × ΔT + φ_{AIR_L26} + φ_{AR_L26}. "φ_{N_L26}" is a phase generated when the light L26 is transmitted through the birefringent element 14 at the reference temperature, "φ_{ΔT_L26}" is the rate of change in the phase of the light L26 caused by a change in the temperature of the birefringent element 14, "ΔT" is a temperature difference from the reference temperature, "φ_{AIR_L26}" is a phase generated when the light L26 propagates in the air, and "φ_{AR_L26}" is a phase generated when the light L26 is transmitted through coating films on the incident surface 14a and the emission surface 14b of the birefringent element 14 and the incident surface 18a of the nonlinear optical element 17F.

A phase "φ_{L28}" of the light L28, which has been generated in the nonlinear optical element 17F, in the nonlinear optical element 17F corresponds to "φ_{ω2}" in Expression (95). Aphase "φ_{L29}" of the light L29, which has been generated in the nonlinear optical element 17F, in the nonlinear optical element 17F corresponds to "φ_{ω3}" in Expression (95). A phase "φ_{L25}" of the light L25 in the nonlinear optical element 17F corresponds to "φ_{ω1}" in Expression (95). Expression (99): φ_{L25} = φ_{L28} + φ_{L29} is derived from Expression (95). Therefore, Expression (100): φ_{L28} + φ_{L29} = φ_{L25} = (φ_{N_L25} + φ_{ΔT_L25} × ΔT + φ_{AIR_L25} + φ_{AR_L25}) is established. "φ_{N_L25}" is a phase generated when the light L25 is transmitted through the birefringent element 14 at the reference temperature, "φ_{ΔT_L25}" is the rate of change in the phase of the light L25 caused by a change in the temperature of the birefringent element 14, "ΔT" is a temperature difference from the reference temperature, "φ_{AIR_L25}" is a phase generated when the light L25 propagates in the air, and "φ_{AR_L25}" is a phase generated when the light L25 is transmitted through the coating films on the incident surface 14a and the emission surface 14b of the birefringent element 14 and the incident surface 18a of the nonlinear optical element 17F.

The light L28 is generated in synchronization with the light L25. The phase of the light L28 is close to the phase of the light L25. Therefore, a phase difference "Δφₜₒₜₐₗ" occurring between the light L26 and the light L28 is represented by Expression (101): Δφₜₒₜₐₗ = φ_{L26} - φ_{L28} ≈ φ_{L26} - φ_{L25}. The phase difference occurring between the light L26 and the light L28 due to the transmission through the birefringent element 14 whose temperature has been adjusted or to which the voltage has been applied satisfies Expression (43) and Expression (45).

Similarly, the light L29 is generated in synchronization with the light L25. The phase of the light L29 is close to the phase of the light L25. Therefore, a phase difference "Δφₜₒₜₐₗ" occurring between the light L27 and the light L29 is represented by Expression (102): Δφₜₒₜₐₗ = φ_{L27}-φ_{L29} ≈ φ_{L27} - φ_{L25}. The phase difference occurring between the light L27 and the light L29 due to the transmission through the birefringent element 14 whose temperature has been adjusted or to which the voltage has been applied satisfies Expression (43) and Expression (45).

In this modification example, when amplifying the intensity of the light L26 in the nonlinear optical element 17F to ensure the intensity of the light L30, the element control unit 15 controls the birefringence of the birefringent element 14 on the basis of at least one of Expression (44) and Expression (46) such that the phases of the light L26 and the light L28 are matched with each other. As a further modification example of this modification example, the element control unit 15 may control the birefringence of the birefringent element 14 such that the intensity of the light L30 obtained by combining the light L26 and the light L28 is maximized. In this case, the intensity of the light L30 may be detected by a light detection unit (not illustrated).

In this modification example, when reducing the intensity of light L30 emitted from nonlinear optical element 17F, the element control unit 15 controls the birefringence of the birefringent element 14 on the basis of at least one of Expression (44) and Expression (46) such that the phases of the light L26 and the light L28 deviate from each other. As a further modification example of this modification example, the element control unit 15 may control the birefringence of the birefringent element 14 such that the intensity of the light L30 obtained by combining the light L26 and the light L28 is minimized. In this case, the intensity of the light L30 may also be detected by the light detection unit (not illustrated).

Similarly, in this modification example, when amplifying the intensity of the light L27 in the nonlinear optical element 17F to ensure the intensity of the light L31, the element control unit 15 controls the birefringence of the birefringent element 14 on the basis of at least one of Expression (43) and Expression (44) such that the phases of the light L27 and the light L29 are matched with each other. As a further modification example of this modification example, when reducing the intensity of the light L31, the element control unit 15 controls the birefringence of the birefringent element 14 on the basis of at least one of Expression (43) and Expression (44) such that the phases of the light L27 and the light L29 deviate from each other. In this case, the element control unit 15 may control the birefringence of the birefringent element 14 such that the intensity of the light L31 obtained by combining the light L27 and the light L29 is maximized or minimized. In this case, the intensity of the light L31 may be detected by the light detection unit (not illustrated).

In this modification example, for example, the element control unit 15 may amplify the intensity of the light L30 emitted from the nonlinear optical element 17F and reduce the intensity of the light L31 emitted from the nonlinear optical element 17F. In this case, for example, the element control unit 15 controls the birefringence of the birefringent element 14 on the basis of at least one of Expression (43) and Expression (44) such that the phases of the light L26 and the light L28 are matched with each other and the phases of the light L27 and the light L29 deviate from each other. In this modification example, for example, the element control unit 15 may amplify the intensity of the light L31 emitted from the nonlinear optical element 17F and reduce the intensity of the light L30 emitted from the nonlinear optical element 17F. In this case, for example, the element control unit 15 controls the birefringence of the birefringent element 14 on the basis of at least one of Expression (43) and Expression (44) such that the phases of the light L27 and the light L29 are matched with each other and the phases of the light L26 and the light L28 deviate from each other.

As a further modification example of this modification example, the nonlinear optical element 12F and the nonlinear optical element 17F may generate the optical parametric process on the basis of the TYPE-2 phase matching. In this case, for example, the light L25 and the light L26 have the same polarization state, and the light L25 and the light L27 have different polarization states. As a further modification example, the light L25 and the light L26 may have different polarization states, and the light L25 and the light L27 may have the same polarization state. The light L25 is pump light, the light L26 is signal light, and the light L27 is idler light. In this case, the light L25 incident on the nonlinear optical elements 12F and 17F corresponds to the first light, the light L26 generated in the nonlinear optical element 12F corresponds to the fourth light, and the light L27 generated in the nonlinear optical element 12F corresponds to the second light. The light L28 having the same polarization state and frequency as the light L26 generated in the nonlinear optical element 17F corresponds to the fifth light, and the light L29 having the same polarization state and frequency as the light L27 generated in the nonlinear optical element 17F corresponds to the sixth light. The light L30 and the light L31 emitted from the nonlinear optical element 17F correspond to the third light.

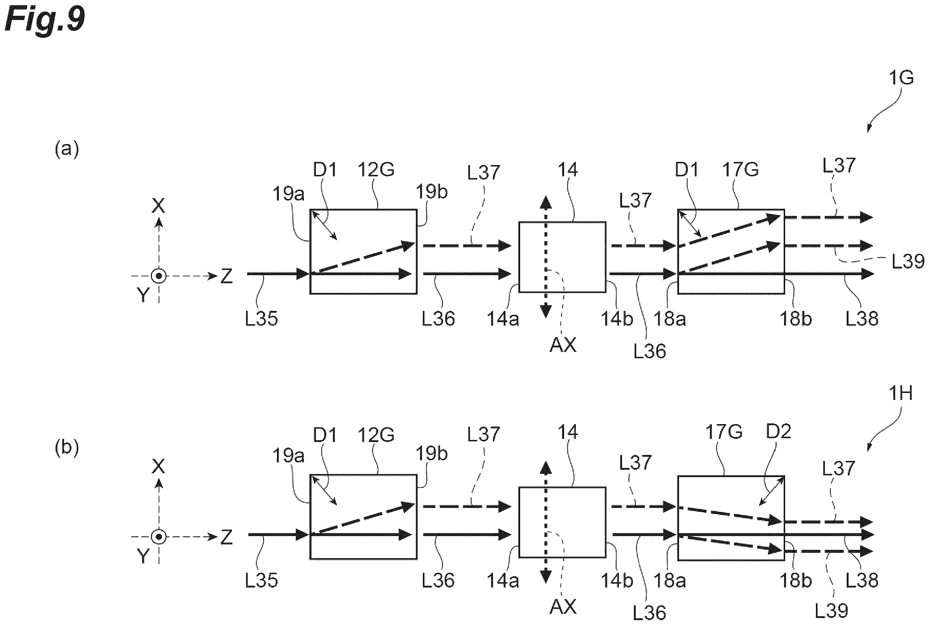

Next, optical devices 1G and 1H according to modification examples of this embodiment will be described with reference to FIGS. 9(a) and 9(b). FIG. 9(a) is a partially enlarged view illustrating a portion of an optical system of the optical device 1G. FIG. 9(b) is a partially enlarged view illustrating a portion of an optical system of the optical device 1H. These modification examples are substantially similar to or the same as the above-described embodiment. These modification examples differ from each other in the disposition of a pair of nonlinear optical elements. Hereinafter, the differences between the above-described embodiment and the modification examples will be described.

The optical device 1G corresponds to, for example, the optical devices 1, 1A, 1B, 1C, 1D, 1E, and 1F. A nonlinear optical element 12G corresponds to the nonlinear optical elements 12, 12C, 12D, 12E, and 12F. A nonlinear optical element 17G corresponds to the nonlinear optical elements 17, 17A, 17B, 17C, 17D, 17E, and 17F. For example, when the optical device 1G is the optical device 1, the nonlinear optical element 12G corresponds to the nonlinear optical element 12, and the nonlinear optical element 17G corresponds to the nonlinear optical element 17. The nonlinear optical element 12G is included in, for example, the light emitting unit 2. The nonlinear optical element 17G is included in, for example, the light generation unit 4.

The optical device 1H differs from the optical device 1G only in the disposition of the nonlinear optical element 17G. The nonlinear optical element 17G of the optical device 1H is disposed to be reversed with respect to the nonlinear optical element 17G of the optical device 1G in the Z-axis direction. In both the optical device 1G and the optical device 1H, the nonlinear optical element 12G and the nonlinear optical element 17G are made of, for example, the same material.

In the optical device 1G and the optical device 1H, the nonlinear optical element 12G emits light L36 and light L37 from an emission surface 19b using the nonlinear optical phenomenon, on the basis of the incidence of light L35 on an incident surface 19a. The light L36 and the light L37 emitted from the emission surface 19b are incident on the incident surface 14a of the birefringent element 14 and are emitted from the emission surface 14b. The light L36 and the light L37 emitted from the emission surface 14b are perpendicularly incident on an incident surface 18a of the nonlinear optical element 17G. For example, the light L36 and the light L37 are incident to be orthogonal to the optical axis AX of the birefringent element 14. The nonlinear optical element 17G emits the light L37, light L38, and light L39 from an emission surface 18b using the nonlinear optical phenomenon on the basis of the incidence of the light L36 and the light L37 on the incident surface 18a.

For example, in both the optical device 1G and the optical device 1H, the light L35, the light L36, and the light L38 are ordinary light with respect to the nonlinear optical elements 12G and 17G. In both the optical device 1G and the optical device 1H, the light L37 and the light L39 are extraordinary light with respect to the nonlinear optical elements 12G and 17G. In the nonlinear optical elements 12G and 17G, walk-off occurs between the light L36 and the light L38, and the light L37 and the light L39. The walk-off means a phenomenon in which only extraordinary light deviates from a desired traveling direction with respect to a crystal. In the optical device 1G and the optical device 1H, the desired traveling direction corresponds to the Z-axis direction. In these modification examples, the traveling direction of at least the light L35 is matched with the desired traveling direction.

In the optical device 1G, a direction D1 of the optical axis of the nonlinear optical element 12G with respect to the incident light is matched with a direction D1 of the optical axis of the nonlinear optical element 17G with respect to the incident light. In other words, the direction D1 of the optical axis of the nonlinear optical element 12G with respect to the incident surface 19a is the same as the direction D1 of the optical axis of the nonlinear optical element 17G with respect to the incident surface 18a and is different from the direction D1 of the optical axis of the nonlinear optical element 17G with respect to the emission surface 18b.

In this case, in both the nonlinear optical element 12G and the nonlinear optical element 17G, the traveling direction of the light L37, which is extraordinary light, deviates in the positive X-axis direction with respect to the Z-axis due to the walk-off. In the nonlinear optical element 17G, the traveling direction of the light L39, which is extraordinary light, also deviates in the positive X-axis direction with respect to the Z-axis due to the walk-off. In other words, in both the nonlinear optical element 12G and the nonlinear optical element 17G, the extraordinary light is separated from the ordinary light traveling straight in the Z-axis direction at a predetermined angle. The predetermined angle corresponds to a walk-off angle. The walk-off angle depends on, for example, the frequency of the incident light and the material and structure of the nonlinear optical element and is determined by them.

In the optical device 1H, the direction D1 of the optical axis of the nonlinear optical element 12G with respect to the incident light is opposite to the direction D2 of the optical axis of the nonlinear optical element 17G with respect to the incident light. In other words, the direction D1 of the optical axis of the nonlinear optical element 12G with respect to the incident surface 19a is different from the direction D2 of the optical axis of the nonlinear optical element 17G with respect to the incident surface 18a and is the same as the direction D2 of the optical axis of the nonlinear optical element 17G with respect to the emission surface 18b. The direction of the optical axis of the nonlinear optical element 12G with respect to the XY plane passing through the emission surface 19a is the same as the direction of the optical axis of the nonlinear optical element 17G with respect to the XY plane passing through the emission surface 18b. In the optical device 1H, the optical axis of the nonlinear optical element 12G and the optical axis of the nonlinear optical element 17G are disposed to be symmetric with respect to a line when viewed from a direction orthogonal to the traveling direction of the light L37.

In this case, the traveling direction of the light L37 deviates in the positive X-axis direction with respect to the Z-axis due to the walk-off in the nonlinear optical element 12G and deviates in the negative X-axis direction with respect to the Z-axis due to the walk-off in the nonlinear optical element 17G. Therefore, the deviation of the light L37 emitted from the nonlinear optical element 17G with respect to the Z-axis is smaller than the deviation of the light L37 emitted from the nonlinear optical element 12G with respect to the Z-axis. In other words, the deviation of the extraordinary light emitted from the nonlinear optical element 12G and the nonlinear optical element 17G with respect to the traveling direction is reduced. Further, in other words, the influence of the walk-off of the extraordinary light emitted from the nonlinear optical element 12G and the nonlinear optical element 17G is reduced.

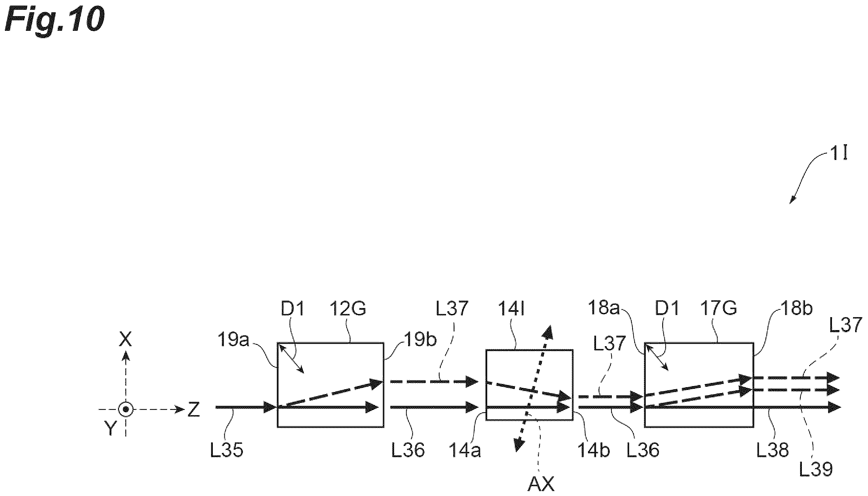

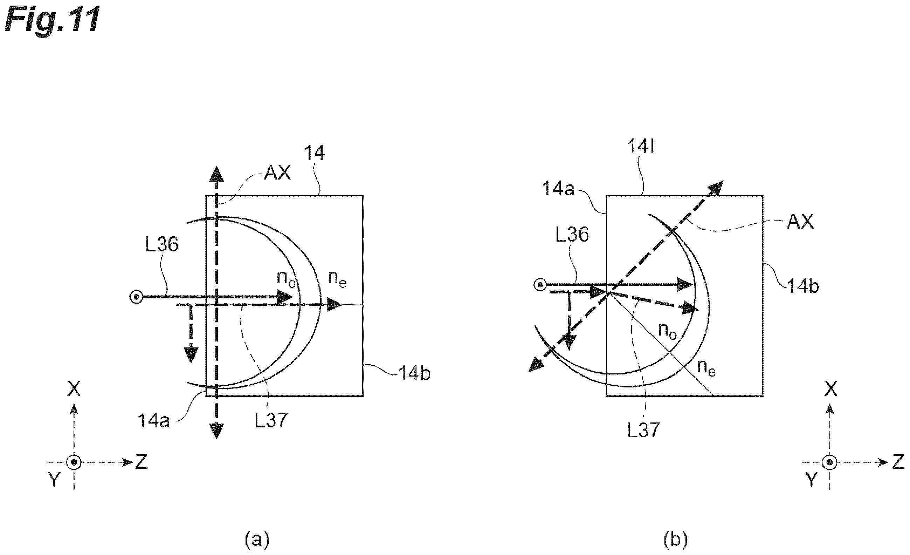

Next, an optical device 1I according to a modification example of this embodiment will be described with reference to FIG. 10 and FIGS. 11(a) and 11(b). FIG. 10 is a partially enlarged view illustrating a portion of an optical system of the optical device 1I. FIG. 11(a) is a plan view illustrating the birefringent element 14 in the optical device 1. FIG. 11(b) is a plan view illustrating a birefringent element 14I in the optical device 1I. This modification example is substantially similar to or the same as the above-described embodiment. The configuration illustrated in FIG. 10 and FIG. 11(b) differs from the configuration illustrated in FIG. 9(a) in the disposition of the optical axis of the birefringent element 14. Hereinafter, the differences from the configuration illustrated in FIG. 9(a) will be described.

The optical device 1I includes the birefringent element 14I instead of the birefringent element 14. Light L36 and light L37 emitted from the nonlinear optical element 12G are incident on an incident surface 14a of the birefringent element 14I and are emitted from an emission surface 14b. For example, the light L36 and the light L37 emitted from the emission surface 14b are incident perpendicularly on the incident surface 18a of the nonlinear optical element 17G.

As illustrated in FIG. 11(a), the optical axis AX of the birefringent element 14 is parallel to the incident surface 14a. However, as illustrated in FIG. 11(b), the optical axis AX of the birefringent element 14I is inclined with respect to the incident surface 14a. For example, the optical axis AX of the birefringent element 14 and the optical axis AX of the birefringent element 14I are orthogonal to the Y-axis direction.

In FIGS. 11(a) and 11(b), the light L36 and the light L37 are incident to be orthogonal to the incident surface 14a of each of the birefringent element 14 and the birefringent element 14I. The light L36 is ordinary light, and the light L37 is extraordinary light. The birefringent elements 14 and 14I have a refractive index nₒ with respect to the ordinary light and have a refractive index nₑ with respect to the extraordinary light.

In the birefringent element 14, the incident directions of the light L36 and the light L37 are perpendicular to the optical axis AX, and the light L36 and the light L37 travel straight in the Z-axis direction when viewed from the Y-axis direction. In the birefringent element 14I, the incident directions of the light L36 and the light L37 are inclined with respect to the optical axis AX. Therefore, in the birefringent element 14I, while the light L36 travels straight in the Z-axis direction when viewed from the Y-axis direction, the light L37 travels to be inclined with respect to the Z-axis direction when viewed from the Y-axis direction.

In the optical device 1I, as illustrated in FIG. 10, the optical axis AX of the birefringent element 14I is inclined with respect to the incident surface 14a such that the walk-off occurring in the nonlinear optical element 12G is reduced. In other words, in the optical device 1I, as illustrated in FIG. 10, the optical axis AX of the birefringent element 14I is inclined with respect to the incident surface 14a such that the walk-off occurring in the nonlinear optical element 12G is reduced. In other words, the optical axis AX of the birefringent element 14I is inclined with respect to the incident surface 14a such that the deviation between the light L36 and the light L37 emitted from the nonlinear optical element 12G is reduced. Therefore, in the nonlinear optical element 12G, the light L37 deviates from the traveling direction in the positive X-axis direction. However, in the birefringent element 14I, the light L37 deviates from the traveling direction in the negative X-axis direction.

The deviation of the light L37 emitted from the nonlinear optical element 17G with respect to the traveling direction is smaller than the deviation of the light L37 emitted from the nonlinear optical element 12G with respect to the traveling direction. In other words, the deviation of the extraordinary light with respect to the traveling direction in the nonlinear optical element 12G is reduced by the birefringent element 14I.

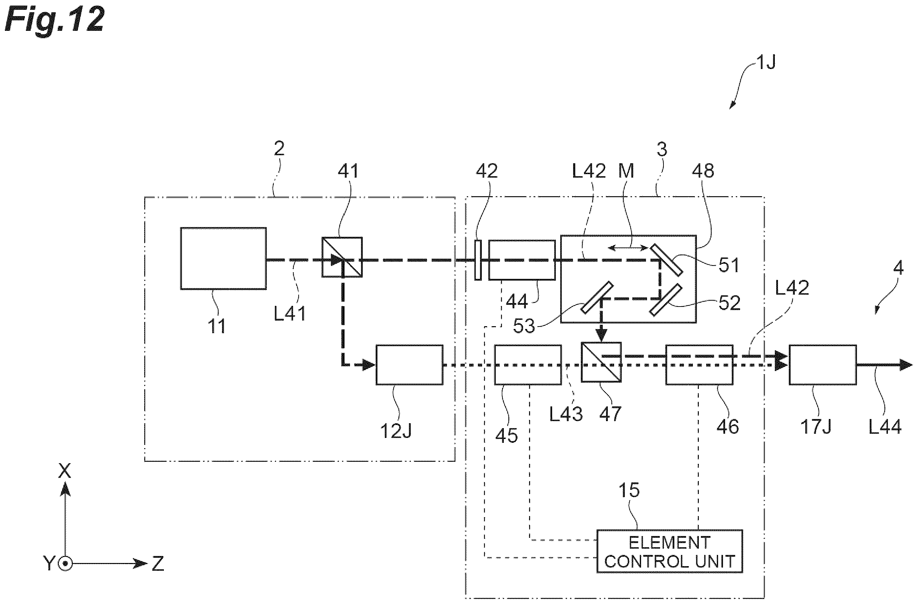

Next, an optical device 1J according to a modification example of this embodiment will be described in more detail with reference to FIG. 12. FIG. 12 is a partially enlarged view illustrating an optical system of the optical device 1J. This modification example is substantially similar to or the same as the above-described embodiment. This modification example differs from the above-described embodiment in that a delay mechanism 48 is provided and the disposition of the birefringent element 14 is different. Hereinafter, the differences between the above-described embodiment and the modification example will be described.

In the optical device 1J, a light emitting unit 2 includes a light source 11, a polarizing beam splitter (PBS) 41, and a nonlinear optical element 12J. A phase adjustment unit 3 includes an element control unit 15, a wave plate 42, birefringent elements 44, 45, and 46, a PBS 47, and a delay mechanism 48. A light generation unit 4 includes a nonlinear optical element 17J. The nonlinear optical element 12J corresponds to the nonlinear optical elements 12, 12C, 12D, 12E, 12F, 12G, 12H, and 12I. The nonlinear optical element 17J corresponds to the nonlinear optical elements 17, 17A, 17B, 17C, 17D, 17E, 17F, 17G, 17H, and 17I. For example, when the optical device 1J is the optical device 1, the nonlinear optical element 12J corresponds to the nonlinear optical element 12, and the nonlinear optical element 17J corresponds to the nonlinear optical element 17.

Light L41 emitted from the light source 11 is incident on the PBS 41. One of light components split by the PBS 41 is incident on the wave plate 42. The other of the light components split by the PBS 41 is incident on the nonlinear optical element 12J.

Light L42 transmitted through the wave plate 42 is transmitted through the birefringent element 44 and is incident on the delay mechanism 48. The delay mechanism 48 includes mirrors 51, 52, and 53. The light L42 is reflected by the mirrors 51, 52, and 53 and is incident on the PBS 47. The mirrors 51, 52, and 53 are movable and change an optical path length M of the light L42. The mirrors 51, 52, and 53 can adjust the optical path length M to adjust the phase of the light L42 incident on the PBS 47. The wave plate 42 can adjust the reflectance of the light L42 in the PBS 47. For example, the wave plate 42 is adjusted such that the reflectance of the light L42 in the PBS 47 is maximized.

Light L43 emitted from the nonlinear optical element 12J is transmitted through the birefringent element 45 and is incident on the PBS 47. The light L42 and the light L43 are combined in the PBS 47, and the combined light is emitted from the PBS 47. The light L42 and the light L43 emitted from the PBS 47 are transmitted through the birefringent element 46 and are incident on the nonlinear optical element 17J. The nonlinear optical element 17J emits light L44 on the basis of the incidence of the light L42 and the light L43.

The element control unit 15 controls the birefringence of at least one of the birefringent elements 44, 45, and 46. The element control unit 15 controls at least one of the temperature of at least one of the birefringent elements 44, 45, and 46 and the voltage applied to at least one of the birefringent elements 44, 45, and 46. The optical device 1J may include at least one of the birefringent elements 44, 45, and 46. The birefringent elements 44, 45, and 46 have the same configuration as the birefringent element 14 or the birefringent element 14I.

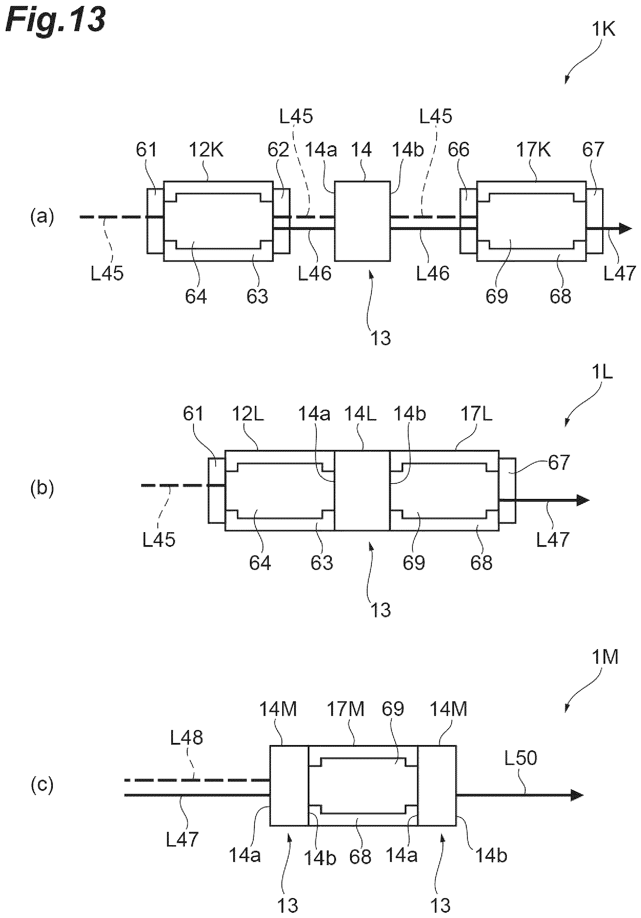

Next, optical devices 1K, 1L, and 1M according to modification examples of this embodiment will be described with reference to FIGS. 13(a), 13(b), and 13(c). FIG. 13(a) is a partially enlarged view illustrating a portion of an optical system of the optical device 1K. FIG. 13(b) is a partially enlarged view illustrating a portion of an optical system of the optical device 1L. FIG. 13(c) is a partially enlarged view illustrating a portion of an optical system of the optical device 1M. These modification examples differ from the above-described embodiment and modification examples in the configuration of the nonlinear optical element. Hereinafter, the differences between the above-described embodiment and the modification examples will be described.

The optical device 1K includes a nonlinear optical element 12K instead of the nonlinear optical element 12 as illustrated in FIG. 13(a). The optical device 1K includes a nonlinear optical element 17K instead of the nonlinear optical element 17. The nonlinear optical element 12K emits light L45 and light L46 on the basis of the incidence of the light L45. The light L45 and the light L46 emitted from the nonlinear optical element 12K are transmitted through the birefringent element 14 and are incident on the nonlinear optical element 17K. The nonlinear optical element 17K emits light L47 on the basis of the incidence of the light L45 and the light L46.

The nonlinear optical element 12K includes window members 61 and 62, a housing 63, and a nonlinear optical medium 64. The window members 61 and 62 are transparent to the light L45 and the light L46. The housing 63 is hermetically sealed by the window members 61 and 62. The inside of the housing 63 is filled with the nonlinear optical medium 64. The nonlinear optical medium 64 is gas, liquid, or solid. The light L45 is transmitted through the window member 61 and is incident on the nonlinear optical medium 64. The nonlinear optical medium 64 produces the nonlinear optical phenomenon on the basis of the incidence of the light L45 and emits the light L45 and the light L46. The light L45 and the light L46 emitted from the nonlinear optical medium 64 are transmitted through the window member 62 and are emitted from the nonlinear optical element 12K.

The nonlinear optical element 17K includes window members 66 and 67, a housing 68, and a nonlinear optical medium 69. The window members 66 and 67 are transparent to the light L45, the light L46, and the light L47. The housing 68 is hermetically sealed by the window members 66 and 67. The inside of the housing 68 is filled with the nonlinear optical medium 69. The nonlinear optical medium 69 is gas, liquid, or solid. The light L45 and the light L46 are transmitted through the window member 66 and are incident on the nonlinear optical medium 69. The nonlinear optical medium 69 produces the nonlinear optical phenomenon on the basis of the incidence of the light L45 and the light L46 and emits the light L47. The light L47 emitted from the nonlinear optical medium 64 is transmitted through the window member 67 and is emitted from the nonlinear optical element 17K.

The optical device 1L includes a nonlinear optical element 12L instead of the nonlinear optical element 12 as illustrated in FIG. 13(b). The optical device 1L includes a nonlinear optical element 17L instead of the nonlinear optical element 17. The optical device 1L includes a birefringent element 14L. The birefringent element 14L has the same configuration as the birefringent element 14 or the birefringent element 14I.

The nonlinear optical element 12L has a structure obtained by removing the window member 62 from the nonlinear optical element 12K. The nonlinear optical element 17L has a structure obtained by removing the window member 66 from the nonlinear optical element 17K. The nonlinear optical element 12L and the nonlinear optical element 17L are joined to the birefringent element 14L.

The nonlinear optical element 12L is joined to an incident surface 14a of the birefringent element 14L. The housing 63 of the nonlinear optical element 12L is hermetically sealed by the window member 61 and the birefringent element 14L. The nonlinear optical element 17L is joined to an emission surface 14b of the birefringent element 14L. The housing 68 of the nonlinear optical element 17L is hermetically sealed by the window member 67 and the birefringent element 14L.

Light emitted from the nonlinear optical medium 64 on the basis of the incidence of the light L45 is incident on the birefringent element 14L without coming into contact with the outside air of the nonlinear optical elements 12L and 17L. Light transmitted through the birefringent element 14L is incident on the nonlinear optical element 17L without coming into contact with the outside air of the nonlinear optical elements 12L and 17L. The nonlinear optical element 17L emits the light L47 on the basis of the incident light.

The optical device 1M includes a nonlinear optical element 17M instead of the nonlinear optical element 17 as illustrated in FIG. 13(c). The optical device 1M includes a pair of birefringent elements 14M. Each birefringent element 14M has the same configuration as the birefringent element 14 or the birefringent element 14I.

The nonlinear optical element 17M produces the nonlinear optical phenomenon on the basis of the incidence of light L48 and light L49 and emits light L50. The nonlinear optical element 17M has a structure obtained by removing the window member 66 and the window member 67 from the nonlinear optical element 17K. The nonlinear optical element 17M is joined to the pair of birefringent elements 14M and 14M. The nonlinear optical element 17M is joined to an emission surface 14b of one of the pair of birefringent elements 14M and an incident surface 14a of the other birefringent element 14N. The housing 68 of the nonlinear optical element 17M is hermetically sealed by the pair of birefringent elements 14M.

The light L48 and the light L49 are transmitted through one of the birefringent elements 14M and are incident on the nonlinear optical medium 69 without coming into contact with the outside air of the nonlinear optical element 17M. Light emitted from the nonlinear optical medium 69 is incident on the other birefringent element 14M without coming into contact with the outside air of the nonlinear optical element 17M. Light transmitted through the birefringent element 14M is emitted as light L50.

As a further modification example of this modification example, the nonlinear optical elements 12K, 17K, 12L, 17L, and 17M may include a birefringent element. In this case, the birefringent element included in the nonlinear optical elements 12K, 17K, 12L, 17L, and 17M may be a birefringent element corresponding to the birefringent element 14. In this case, at least one of the window members 61, 62, 66, and 67 may be the birefringent element.

As a further modification example of this modification example, the nonlinear optical media 64 and 69 may be disposed inside the housings 63 and 68, respectively. In this case, for example, the insides of the housings 63 and 68 are in a vacuum state. The housings 63 and 68 may be filled with inert gas. The inert gas is, for example, nitrogen. According to this configuration, deterioration of the state of the nonlinear optical media 64 and 69 due to deliquescence of the nonlinear optical media 64 and 69 is suppressed.

For example, the solid nonlinear optical media 64 and 69 may be disposed inside the housings 63 and 68 that are in a vacuum state or are filled with inert gas such that the light L45 and the light L46 are incident thereon. In these cases, the nonlinear optical medium 64 or 69 may be separated from at least one of the housing 63 or 68 and the window members 61, 62, 66, and 67 inside the housing 63 or 68.

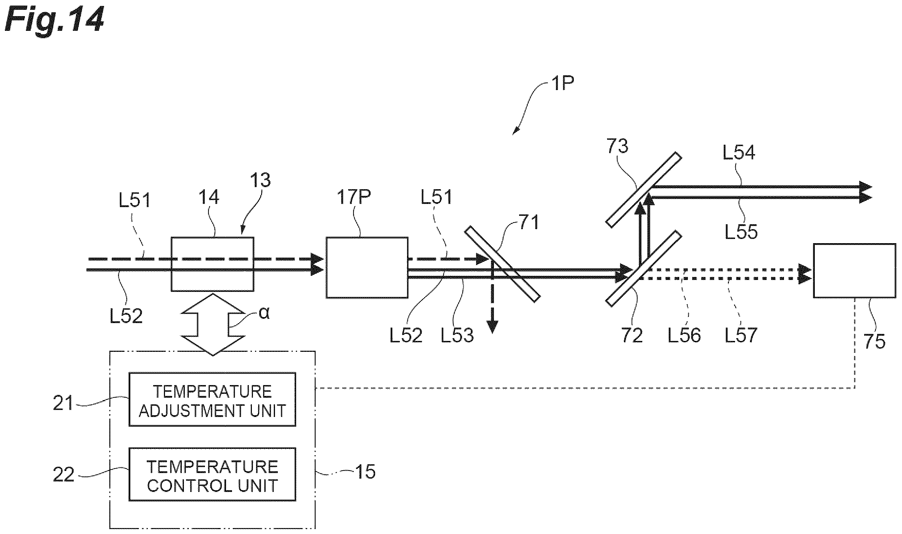

Next, a configuration of an optical device 1P according to a modification example of this embodiment will be described with reference to FIG. 14. FIG. 14 is a schematic diagram illustrating the configuration of the optical device 1P. This modification example is substantially similar to or the same as the above-described embodiment. This modification example differs from the above-described embodiment and modification examples in that the element control unit 15 is configured to perform feedback control. Hereinafter, the differences between the above-described embodiment and the modification example will be described.

The optical device 1P includes a nonlinear optical element 17P instead of the nonlinear optical element 17 as illustrated in FIG. 14. The optical device 1P further includes an optical filter 71, a beam splitter 72, a mirror 73, and a light detection unit 75. The nonlinear optical element 17P emits light L51, light L52, and light L53 on the basis of the incidence of the light L51 and the light L52 transmitted through the birefringent element 14. In the configuration illustrated in FIG. 14, the light L51, and the light L52 and the light L53 include different frequency components, and the light L52 and the light L53 include the same frequency component.

The optical filter 71 reflects the light L51 and transmits the light L52 and the light L53. For example, the optical filter 71 separates light according to the frequency. The optical filter 71 includes, for example, a dichroic mirror, a bandpass filter, a color filter, and the like. The beam splitter 72 is subjected to partially transmissive coating, reflects most of the light transmitted through the optical filter 71, and transmits a portion of the light. Light L54 and light L55 reflected by the beam splitter 72 are reflected by the mirror 73 and are emitted to the outside of the optical device 1P. Light L56 and light L57 transmitted through the beam splitter 72 are detected by the light detection unit 75.

As a further modification example of this modification example, a dichroic mirror may be used instead of the beam splitter 72. The disposition of the optical filter 71, the beam splitter 72, and the mirror 73 can be changed as appropriate. For example, the optical filter 71 may be disposed between the beam splitter 72 and the light detection unit 75.

The light detection unit 75 includes, for example, a photodiode, a camera, a power meter, or an energy meter. The light detection unit 75 detects, for example, the intensity of the light L56 and the light L57 emitted from the nonlinear optical element 17P. The detection result of the light detection unit 75 is input to the element control unit 15.

The element control unit 15 performs feedback control on the basis of the detection result of the light detection unit 75. The element control unit 15 performs feedback control on the birefringence of the birefringent element 14 on the basis of the detection result of the light detection unit 75. The element control unit 15 performs feedback control on at least one of the temperature of the birefringent element 14 and the voltage applied to the birefringent element 14 on the basis of the detection result of the light detection unit 75. For example, the element control unit 15 performs feedback control such that the intensity of the light detected by the light detection unit 75 is a predetermined value. For example, the element control unit 15 acquires a target value of the intensity of the light and performs feedback control on at least one of the temperature of the birefringent element 14 and the voltage applied to the birefringent element 14 such that the intensity of the light detected by the light detection unit 75 is matched with the acquired target value. For example, the target value is stored in advance. For example, the target value may be included in the above-described control data. The target value may be input by the user or may be acquired from the outside of the optical device via a network. As a modification example of this embodiment, for example, the element control unit 15 may perform feedback control such that the intensity of the light detected by the light detection unit 75 is maximized.

The element control unit 15 of the optical device 1P includes, for example, a temperature adjustment unit 21 and a temperature control unit 22. For example, the temperature control unit 22 performs feedback control on the temperature adjustment unit 21 on the basis of the detection result of the light detection unit 75. The temperature adjustment unit 21 transfers thermal energy α to the birefringent element 14 in response to a control signal from the temperature control unit 22.

The element control unit 15 of the optical device 1P may include a voltage application unit 23 and a voltage control unit 24 instead of the temperature adjustment unit 21 and the temperature control unit 22. The element control unit 15 may include the voltage application unit 23 and the voltage control unit 24 in addition to the temperature adjustment unit 21 and the temperature control unit 22.

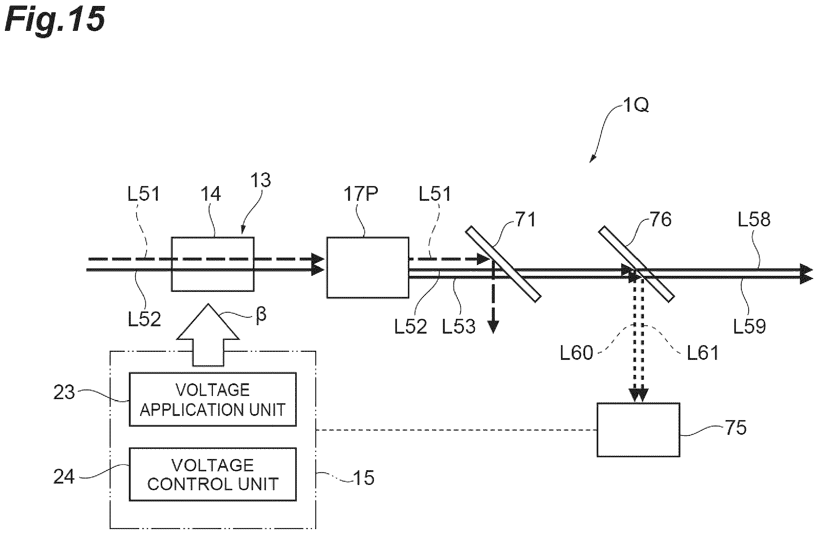

Next, a configuration of an optical device 1Q according to a modification example of this embodiment will be described with reference to FIG. 15. FIG. 15 is a schematic diagram illustrating the configuration of the optical device 1Q. This modification example is substantially similar to or the same as the optical device 1P. This modification example differs from the optical device 1P in the configuration of the element control unit 15 and an optical system. Hereinafter, the differences from the optical device 1P will be described.

The optical device 1Q includes a beam splitter 76 instead of the beam splitter 72 and the mirror 73 as illustrated in FIG. 15. The optical filter 71 reflects light L51 and transmits light L52 and light L53. The beam splitter 76 is subjected to partially transmissive coating, reflects a portion of the light transmitted through the optical filter 71, and transmits most of the light. Light L58 and light L59 transmitted through the beam splitter 76 are emitted to the outside of the optical device 1Q. Light L60 and light L61 reflected by the beam splitter 76 are detected by the light detection unit 75. The light detection unit 75 detects, for example, the intensity of the light L60 and the light L61 emitted from the nonlinear optical element 17P. The detection result of the light detection unit 75 is input to the element control unit 15.

The element control unit 15 of the optical device 1Q includes, for example, the voltage application unit 23 and the voltage control unit 24. For example, the voltage control unit 24 performs feedback control on the voltage application unit 23 on the basis of the detection result of the light detection unit 75. The voltage application unit 23 applies a voltage β to the birefringent element 14 in response to a control signal from the voltage control unit 24.

The element control unit 15 of the optical device 1Q may include the temperature adjustment unit 21 and the temperature control unit 22 instead of the voltage application unit 23 and the voltage control unit 24. The element control unit 15 may include the temperature adjustment unit 21 and the temperature control unit 22 in addition to the voltage application unit 23 and the voltage control unit 24.

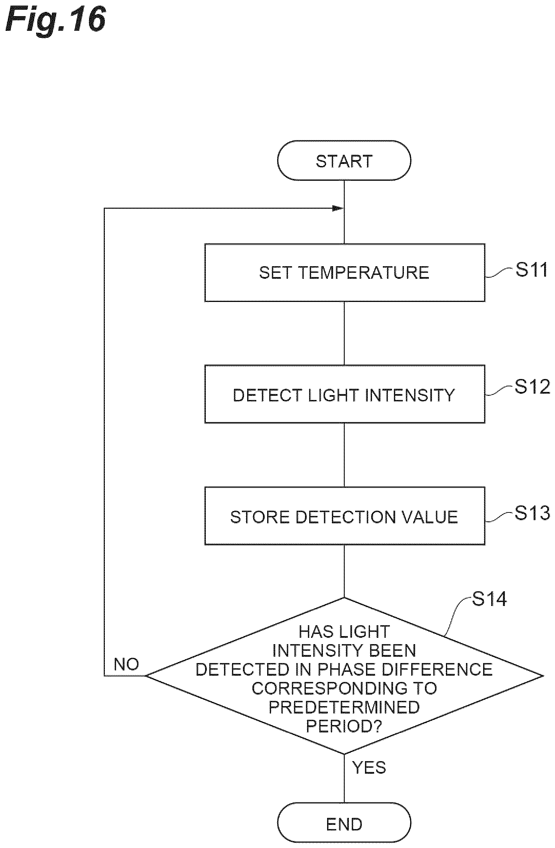

Next, an example of a light generation method will be described with reference to FIGS. 16 to 18. As an example, a light generation method using the optical device 1P or the optical device 1Q will be described. Hereinafter, the description will be made using the optical device 1P as an example.

In the light generation method, the light L51 and the light L52 having different polarization states are incident on the birefringent element 14. The light L51 and the light L52 emitted from the birefringent element 14 are incident on the nonlinear optical element 17P. Both the light L51 and the light L52 are incident on the nonlinear optical element 17P. The nonlinear optical element 17P generates the light L53 using the nonlinear optical phenomenon, combines the light L52 and the light L53, and emits the combined light.

The element control unit 15 controls at least one of the temperature of the birefringent element 14 and the voltage applied to the birefringent element 14 to adjust the phase difference between the light L51 and the light L52. As a result, the intensity of the light emitted from the nonlinear optical element 17P is adjusted, and the intensity of the light emitted from the optical device 1P or 1Q is adjusted. In the optical device 1P, the element control unit 15 controls the temperature of the birefringent element 14 to adjust the phase difference between the light L51 and the light L52.

The relationship between the intensity of the light emitted from the optical device 1P and the temperature of the birefringent element 14 is represented by Expression (103): I ∝ A + Bcos(Δφ_{ΔT} × ΔT + Δφ). "I" is the intensity of the light emitted from the optical device 1P. "Δφ_{ΔT}" is the rate of change in the phase difference caused by a change in the temperature of the birefringent element 14. "ΔT" is the temperature difference from the reference temperature. "Δφ" is a phase difference caused by factors other than the temperature. "A" and "B" are constants. The intensity of the light emitted from the optical device 1P is detected by the light detection unit 75. For example, "I" is calculated on the basis of the intensity of the light detected by the light detection unit 75. For example, the element control unit 15 calculates the intensity of the light emitted from the optical device 1P on the basis of the intensity of the light detected by the light detection unit 75 and a calibrated value of the intensity of the light split by the beam splitter 72. The calibrated value of the intensity of the light split by the beam splitter 72 is, for example, the calibrated value of the light L54 or the light L55 and the light L56 or the light L57. As a modification example, "I" may be, for example, the intensity of the light detected by the light detection unit 75.

As is clear from Expression (103), the intensity of the light emitted from the optical device 1P changes periodically according to a change in the temperature of the birefringent element 14. Therefore, when the relationship between the intensity of the light detected by the light detection unit 75 and the change in the temperature of the birefringent element 14 is acquired, the intensity of the light emitted from the optical device 1P can be controlled to be a desired light intensity by adjusting the temperature of the birefringent element 14. The relationship between the intensity of the light emitted from the optical device 1P and the change in the temperature of the birefringent element 14 is acquired and stored as control data.

An example of a method for acquiring the control data will be described with reference to FIG. 16. FIG. 16 is a flowchart illustrating the method for acquiring the control data.

First, the element control unit 15 sets the temperature of the birefringent element 14 (Process S11). The element control unit 15 sets the birefringent element 14 to any temperature. For example, when Process S11 is performed for the first time, the element control unit 15 sets a predetermined temperature. The element control unit 15 may set the temperature input by the user or acquired from the outside. For example, the element control unit 15 sets the difference between the reference temperature and the temperature set for the birefringent element 14.

Then, the light detection unit 75 detects the intensity of light (Process S12). The light detection unit 75 detects the intensity of the light incident on the light detection unit 75 when the birefringent element 14 is at a temperature related to the temperature set in Process S11. For example, the light detection unit 75 of the optical device 1P detects the intensity of the light L56 and the light L57.

Then, the element control unit 15 stores a detection value of the light detection unit 75 (Process S13). For example, the element control unit 15 stores the detection result in Process S12 in association with the temperature set in Process S11. The element control unit 15 may calculate the intensity of the light emitted from the optical device 1P on the basis of the intensity of the light detected in Process S12 and the calibrated value of the intensity of the light split by the beam splitter 72 and store the calculation result.

Then, the element control unit 15 determines whether the intensity of the light has been detected in a phase difference corresponding to a predetermined period (Process S14). For example, the element control unit 15 determines whether the intensity of the light has been detected for a phase difference corresponding to one period or more on the right side of Expression (103). When it is determined that the intensity of the light has not been detected in the phase difference corresponding to the predetermined period (NO in Process S14), the process returns to Process S11. When it is determined that the intensity of the light has been detected in the phase difference corresponding to the predetermined period (YES in Process S14), a series of processes is ended. When the process returns to Process S11, the temperature to be set is changed in Process S11. In other words, a temperature different from the previously set temperature is set in Process S11. For example, a temperature that deviates from the previously set temperature by a preset temperature is set.

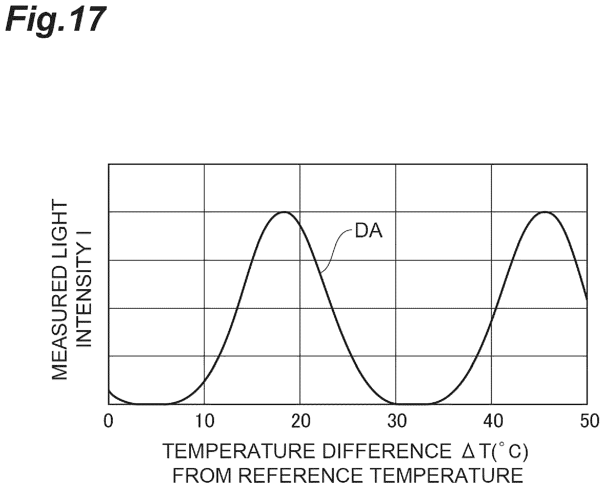

For example, control data DA illustrated in FIG. 17 can be acquired by executing Processes S11 to S14. The control data DA indicates the relationship between the intensity of the light emitted from the optical device 1P and a change in the temperature of the birefringent element 14. In FIG. 17, the horizontal axis indicates a temperature difference ΔT from the reference temperature, and the vertical axis indicates the measured light intensity I. The measured light intensity is, for example, the intensity of the light emitted from the optical device 1P calculated on the basis of the detection result of the light detection unit 75. The measured light intensity may be, for example, the detection result of the light detection unit 75.

Here, the acquisition of the control data indicating the relationship between the intensity of the light emitted from the optical device 1P and the change in the temperature of the birefringent element 14 has been described. However, the optical device 1Q may be used. For example, control data indicating the relationship between the intensity of the light emitted from the optical device 1Q and a change in the voltage applied to the birefringent element 14 may be acquired. In this case, the relationship between the intensity of the light emitted from the optical device 1Q and the voltage applied to the birefringent element 14 is represented by Expression (104): I ∝ A + Bcos(Δφ_{ΔE} × V + Δφ). "Δφ_{ΔE}" is the rate of change in the phase difference caused by a change in the voltage applied to the birefringent element 14, and "V" is a voltage value applied to the birefringent element 14.

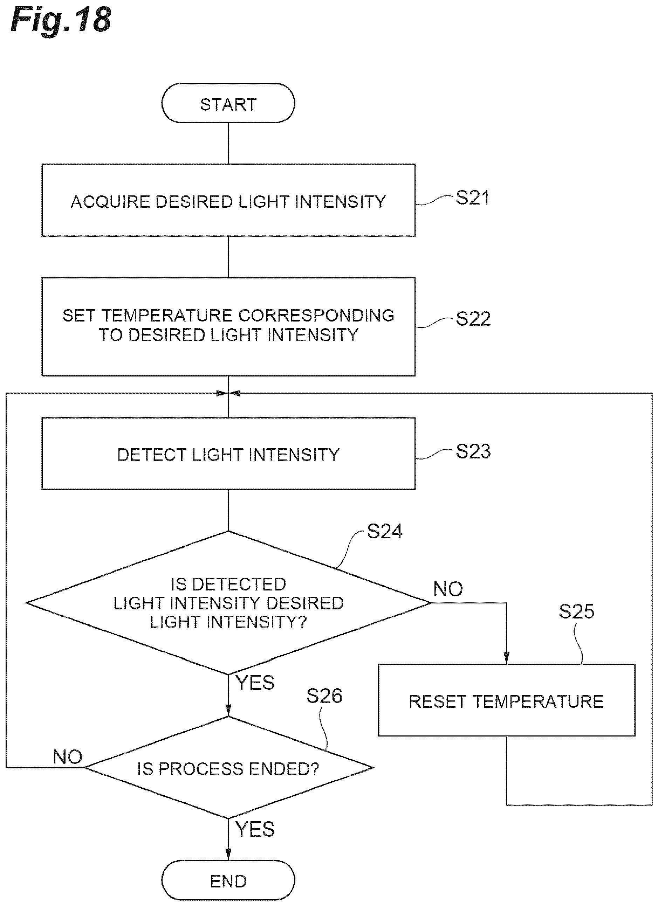

Next, a light generation method using the control data DA will be described with reference to FIG. 18. FIG. 18 is a flowchart illustrating an example of the light generation method.

First, the element control unit 15 acquires a desired light intensity (Process S21). The element control unit 15 acquires information input by the user or from the outside to acquire the desired intensity of the light emitted from the optical device 1P.

Then, the element control unit 15 sets a temperature corresponding to the desired light intensity (Process S22). For example, the element control unit 15 sets the temperature of the birefringent element 14 on the basis of the control data DA and the light intensity acquired in Process S21. For example, the element control unit 15 sets the temperature corresponding to the light intensity acquired in Process S21 as the temperature of the birefringent element 14 with reference to the control data DA. The element control unit 15 may set the voltage to be applied to the temperature adjustment unit 21.

Then, the light detection unit 75 detects the intensity of the light (Process S23). When the birefringent element 14 is at a temperature related to the temperature set in Process S22, the light detection unit 75 detects the intensity of the light incident on the light detection unit 75. For example, the light detection unit 75 of the optical device 1P detects the intensity of the light L56 and the light L57.

Then, the element control unit 15 determines whether or not the detected light intensity is the desired light intensity (Process S24). For example, the element control unit 15 determines whether or not the intensity of the light emitted from the optical device 1P is the light intensity acquired in Process S21. In Process S24, the element control unit 15 calculates the intensity of the light emitted from the optical device 1P on the basis of the intensity of the light detected in Process S23. For example, the element control unit 15 calculates the intensity of the light emitted from the optical device 1P on the basis of the intensity of the light detected in Process S12 and the calibrated value of the intensity of the light split by the beam splitter 72. When it is determined that the detected intensity of the light is not the desired light intensity (NO in Process S24), the process proceeds to Process S25. When it is determined that the detected intensity of the light is the desired light intensity (YES in Process S24), the process proceeds to Process S26.

When it is determined in Process S24 that the detected intensity of the light is not the desired light intensity, the element control unit 15 resets the temperature (Process S25). For example, the element control unit 15 sets the temperature of the birefringent element 14 to be changed by ±0.1°C from the current temperature. When Process S25 ends, the process returns to Process S23. The element control unit 15 repeats Processes S23 to S25 to achieve feedback control.

When it is determined in Process S24 that the detected intensity of the light is the desired light intensity, it is determined whether or not to end the series of processes (Process S26). When it is determined not to end the series of processes (NO in Process S26), the process returns to Process S23. When it is determined to end the series of processes (YES in Process S26), the series of processes is ended.

As described above, for example, Processes S11 to S14 are executed to acquire the control data, and Processes S21 to S26 are executed to generate light having a desired wavelength using the control data. Some of Processes S11 to S14 and Processes S21 to S26 may be omitted, or some of Processes S11 to S14 and Processes S21 to S26 may be replaced with different processes. The order of the processes is not limited to the order in the above description.

For example, the element control unit 15 may perform control such that the intensity of the light is maximized. In this case, for example, the desired light intensity may not be acquired in Process S21. In Process S24, the element control unit 15 may determine whether or not the intensity of the light is at the maximum value. For example, the element control unit 15 repeats Processes S23 to S25 to perform control such that the light intensity is maximized.

Next, an example of the operation and effect achieved by the optical devices 1, 1A, 1B, 1C, 1D, 1E, 1F, 1G, 1H, 1I, 1J, 1K, 1L, 1M, 1P, and 1Q, or combinations thereof will be described. Hereinafter, an example of the operation and effect will be described on the basis of a representative optical device among the optical devices 1 to 1Q and combinations thereof. However, optical devices having the same configuration among these optical devices or combinations thereof also have the same operation and effect.

The wavelength conversion efficiency of the nonlinear optical element depends on the phase relationship of light incident on the nonlinear optical element. For example, for wavelength conversion in the nonlinear optical element, when the phase matching condition of ΔK = 0 is established, as the working length of the nonlinear optical element is larger, the wavelength conversion efficiency is more improved. However, when the phase matching condition of ΔK = 0 is not established, there is a concern that, as the working length of the nonlinear optical element increases, the wavelength conversion efficiency will be attenuated. In addition, in a case where the light transmitted through the nonlinear optical element and the light generated in the nonlinear optical element are combined, when the phases of both light components deviate from each other in the emission surface of the nonlinear optical element, there is a concern that the intensity of the combined light will be reduced. When the phases of both light components are opposite to each other, the intensity of the combined light is minimized.

In the optical devices 1, 1A, 1B, 1C, 1D, 1E, 1F, 1G, 1H, 1I, 1J, 1K, 1L, 1M, 1P, and 1Q, the phase adjustment unit 3 adjusts the phase difference between the first light and the second light emitted from the light emitting unit 2. For example, in the optical device 1, the first light and the second light are incident on the birefringent element 14. The element control unit 15 controls at least one of the temperature of the birefringent element 14 and the voltage applied to the birefringent element 14.

The birefringent element has different refractive indices for light components having different frequencies or polarization directions. These refractive indices of the birefringent element change depending on the temperature of the birefringent element and the voltage applied to the birefringent element. For example, in the birefringent element, ordinary light and extraordinary light have different refractive indices. The rate of change in the refractive index according to the temperature of the birefringent element and the voltage applied to the birefringent element is different between the refractive index for the ordinary light and the refractive index for the extraordinary light.

Therefore, the phase difference between the first light and the second light incident on the birefringent element 14 can be adjusted by controlling at least one of the temperature of the birefringent element 14 and the voltage applied to the birefringent element 14. The first light and the second light emitted from the birefringent element are incident on the nonlinear optical element 17. According to this configuration, it is possible to control the phase difference between the first light and the second light incident on the nonlinear optical element 17 with higher accuracy. For example, the optical device 1 can achieve more accurate control than that in the configuration in which the phase difference is controlled by adjusting the working length of the optical element. Therefore, it is possible to easily and reliably generate light having a desired wavelength and a desired intensity. Further, according to these optical devices, any control can be performed from a state in which the wavelength conversion efficiency of the nonlinear optical element 17 is at its maximum to a state in which no light is generated in the nonlinear optical element 17, without changing the physical disposition of each element.

For the amount of change in the phase difference between light components according to a change in the temperature of the birefringent element 14 and a change in the voltage applied to the birefringent element 14, the amount of change in the phase difference between light components having different polarization states is larger than that between light components having different frequencies. Therefore, according to the optical device 1, the phase difference between the light components that have different polarization states and are incident on the birefringent element 14 can be easily adjusted by controlling at least one of the temperature of the birefringent element 14 and the voltage applied to the birefringent element 14. For example, according to the optical device 1, in the adjustment of a desired phase difference, the range of change in the temperature of the birefringent element 14 and the voltage applied to the birefringent element 14 can be reduced. According to the optical device 1, the range in which the phase difference can be adjusted can be expanded. In the adjustment of the desired phase difference, the working length of the birefringent element 14 can be reduced, and thus the size of the birefringent element 14 can also be reduced.

According to the optical device 1, even when the first light and the second light have the same frequency, the phase difference between the first light and the second light can be adjusted. Therefore, for example, in TYPE-2 second harmonic generation, the phase difference between the first light and the second light can be precisely adjusted by only the configuration in which the first light and the second light are incident on the birefringent element 14 on the upstream side of the nonlinear optical element.

Since the first light and the second light are incident on the birefringent element 14, the phases of both the first light and the second light can be controlled by one birefringent element at the same time. Therefore, it is possible to adjust the phases of the first light and the second light while easily achieving the spatial overlap between light components. In other words, it is possible to easily achieve the adjustment of the phases of the first light and the second light and the suppression of beam overlap and a change in divergence angle.

For example, in the optical device 1, the birefringent element 14 is disposed such that the propagation direction of at least one of the first light and the second light in the birefringent element and the optical axis AX of the birefringent element 14 intersect each other. In this case, the phase of the light transmitted through the birefringent element 14 can be adjusted by the difference between the rate of change in the refractive index for the ordinary light and the rate of change in the refractive index for the extraordinary light. Therefore, the phase difference between the first light and the second light having different polarization states can be adjusted with higher accuracy and over a wider range by controlling at least one of the temperature of the birefringent element 14 and the voltage applied to the birefringent element 14.

For example, the optical axis AX of the nonlinear optical element 17 of the light generation unit 4 is disposed to be parallel to the first virtual plane or the second virtual plane. The first virtual plane is parallel to the optical axis AX of the birefringent element 14 and the propagation direction of at least one of the first light and the second light in the birefringent element 14. The second virtual plane is orthogonal to the first virtual plane and is parallel to the propagation direction of the at least one light component. In this case, the phase difference between the first light and the second light incident on the nonlinear optical element 17 can be controlled with higher accuracy and over a wider range. The desired intensity of the light emitted from the nonlinear optical element 17 can be improved. In the configuration illustrated in FIG. 2, the birefringent element 14 is a uniaxial crystal. The nonlinear optical element 17 of the light generation unit 4 is a uniaxial crystal.

For example, the polarization state of one of the first light and the second light incident on the birefringent element 14 is linearly polarized light parallel to a virtual plane parallel to the propagation direction of the one light component and the optical axis AX of the birefringent element 14. In this case, the phase difference between the first light and the second light having different polarization states can be controlled with higher accuracy and over a wider range. The polarization state of the other of the first light and the second light incident on the birefringent element 14 is linearly polarized light orthogonal to the optical axis AX of the birefringent element 14 with respect to a virtual plane parallel to the propagation direction of the other light and the optical axis AX of the birefringent element 14. In this case, the phase difference between the first light and the second light having different polarization states can be controlled with higher accuracy and over a wider range.

The first light and the second light have different frequencies. In this case, it is possible to more easily generate light having a desired wavelength and a desired intensity.

The nonlinear optical element 17 of the light generation unit 4 includes the incident surface 18a on which the first light and the second light are incident. The element control unit 15 controls at least one of the temperature of the birefringent element 14 and the voltage applied to the birefringent element to adjust the phase difference between the first light and the second light in the incident surface 18a of the nonlinear optical element 17 of the light generation unit 4. In this case, the intensity of the third light generated in the nonlinear optical element 17 is adjusted.

The element control unit 15 controls at least one of the temperature of the birefringent element 14 and the voltage applied to the birefringent element 14 such that the phases of the first light and the second light are matched with each other in the incident surface 18a of the nonlinear optical element 17 of the light generation unit 4. In this case, the intensity of the third light generated in the nonlinear optical element 17 can be improved.

The third light has a frequency different from the frequencies of the first light and the second light. In this case, it is possible to more easily generate light having a desired wavelength and a desired intensity.

For example, in the optical devices 1, 1A, 1C, 1D, and 1E, the nonlinear optical element of the light generation unit 4 may generate the third light using the nonlinear optical effect corresponding to the first light and the second light. In this case, it is possible to more easily generate light having a desired wavelength.

For example, in the optical devices 1, 1C, 1D, and 1E, the frequency of the third light is the sum of the frequency of the first light and the frequency of the second light. In this case, it is possible to more easily generate light having a desired wavelength and a desired intensity.

For example, in the optical device 1A, the frequency of the third light is the difference between the frequency of the first light and the frequency of the second light. In this case, it is possible to more easily generate light having a desired wavelength and a desired intensity.

For example, in the optical device 1B, the first light incident on the nonlinear optical element 17B of the light generation unit 4 is pump light. The second light incident on the nonlinear optical element 17B of the light generation unit 4 is signal light having a lower intensity than the pump light. The nonlinear optical element 17B of the light generation unit 4 emits, as the third light, light obtained by adjusting the intensity of the signal light on the basis of the incident first light and second light. In this case, the intensity of the signal light output from the light generation unit 4 is adjusted by adjusting the phase difference.

The light emitting unit 2 includes the nonlinear optical element 12 emitting the first light and the second light. In this case, it is possible to more easily generate light having a desired wavelength and a desired intensity.

For example, in the optical device 1C, the nonlinear optical element 12C of the light emitting unit 2 generates, as the second light, a second harmonic having a polarization state different from the polarization state of the fundamental wave on the basis of the fundamental wave and emits the fundamental wave as the first light together with the second light. The nonlinear optical element 17C of the light generation unit 4 generates a second harmonic as the third light on the basis of the incident first light and combines the second light and the third light. In this case, the intensity of the second harmonic output from the light generation unit 4 can be adjusted by adjusting the phase difference.

For example, in the optical device 1D, the nonlinear optical element 12D of the light emitting unit 2 generates the fourth light having a polarization state different from the polarization state of the first light or the second light on the basis of the first light and the second light and emits the first light and the second light together with the fourth light. The nonlinear optical element 17D of the light generation unit 4 is disposed such that the first light, the second light, and the fourth light emitted from the birefringent element 14 are incident thereon and combines the third light and the fourth light. In this case, it is possible to adjust the intensity of light generated by combining the third light and the fourth light.

For example, in the optical device 1D, the frequency of the third light and the frequency of the fourth light may be the sum of the frequency of the first light and the frequency of the second light. In this case, the intensity of the sum frequency output from the light generation unit 4 is adjusted by adjusting the phase difference. In the optical device 1D, the frequency of the third light and the frequency of the fourth light may be the difference between the frequency of the first light and the frequency of the second light. In this case, the intensity of the difference frequency output from the light generation unit 4 is adjusted by adjusting the phase difference.

For example, the nonlinear optical element 12D of the light emitting unit 2 may generate, as the second light, light having a polarization state different from the polarization state of the first light or the fourth light on the basis of the first light and the fourth light having the same polarization state as the first light and may emit the first light, the second light, and the fourth light together. The nonlinear optical element 17D of the light generation unit 4 may be disposed such that the first light, the second light, and the fourth light emitted from the birefringent element 14 are incident thereon and may combine the second light and the third light. In this case, it is possible to adjust the intensity of light generated by combining the second light and the third light. Even in this case, the frequency of the second light and the frequency of the third light may be the sum of the frequency of the first light and the frequency of the fourth light. In this case, the intensity of the sum frequency output from the light generation unit 4 is adjusted by adjusting the phase difference. The frequency of the second light and the frequency of the third light may be the difference between the frequency of the first light and the frequency of the fourth light. In this case, the intensity of the difference frequency output from the light generation unit 4 is adjusted by adjusting the phase difference.

For example, in the optical device 1E, the nonlinear optical element 12E of the light emitting unit 2 generates a second harmonic as the fourth light on the basis of the fundamental wave. The fundamental wave includes polarized components in first and second directions orthogonal to each other. The nonlinear optical element 12E of the light emitting unit 2 emits the polarized component of the fundamental wave in the first direction as the first light and the polarized component of the fundamental wave in the second direction as the second light together with the fourth light. The nonlinear optical element 17E of the light generation unit 4 is disposed such that the first light, the second light, and the fourth light emitted from the birefringent element 14 are incident thereon, generates a second harmonic as the third light on the basis of the incident first light and second light, and combines the third light and the fourth light. In this case, the intensity of the second harmonic output from the light generation unit 4 is adjusted by adjusting the phase difference.

For example, in the optical device 1F, the nonlinear optical element 12F of the light emitting unit 2 generates the second light and the fourth light on the basis of the pump light and emits the pump light as the first light together with the second light and the fourth light. The second light has a polarization state different from the polarization state of the pump light. The fourth light has a polarization state different from the polarization state of the pump light and has a frequency different from the frequency of the second light. The nonlinear optical element 17F of the light generation unit 4 is disposed such that the first light, the second light, and the fourth light emitted from the birefringent element 14 are incident thereon and generates the fifth light and the sixth light on the basis of the incident first light, second light, and fourth light. The nonlinear optical element 17F combines the second light and the fifth light and combines the fourth light and the sixth light to amplify the intensity of at least one of the second light and the fourth light, and emits the combined light as the third light. The fifth light has the same polarization state and frequency as the second light. The sixth light has the same polarization state and frequency as the fourth light. In this case, it is possible to select which of the combination of the second light and the fifth light and the combination of the fourth light and the sixth light is to be improved in light intensity.

For example, the nonlinear optical element 12F of the light emitting unit 2 may generate the second light and the fourth light on the basis of the pump light and emit the pump light as the first light together with the second light and the fourth light. The fourth light may have the same polarization state as the pump light. The second light may have a polarization state different from the polarization state of the pump light and have a frequency different from the frequency of the fourth light. The nonlinear optical element 17F of the light generation unit 4 may be disposed such that the first light, the second light, and the fourth light emitted from the birefringent element 14 are incident on the nonlinear optical element 17F and may generate the fifth light and the sixth light on the basis of the incident first light, second light, and fourth light. The nonlinear optical element 17F may combine the second light and the fifth light and combine the fourth light and the sixth light such that the intensity of at least one of the fifth light and the sixth light is amplified, and may emit the combined light as the third light. The fifth light may have the same polarization state and frequency as the second light. The sixth light may have the same polarization state and frequency as the fourth light. In this case, it is possible to select which of the combination of the second light and the fifth light and the combination of the fourth light and the sixth light is to be improved in light intensity.

For example, in the optical device 1F, the element control unit 15 controls at least one of the temperature of the birefringent element 14 and the voltage applied to the birefringent element 14 such that the phases of the first light and the second light are matched with each other and the phases of the first light and the fourth light deviate from each other. In this case, the light intensity of the combination of the second light and the fifth light is improved, and the light intensity of the combination of the fourth light and the sixth light is reduced.

For example, in the optical device 1H, the nonlinear optical element 12G of the light emitting unit 2 and the nonlinear optical element 17G of the light generation unit 4 are made of the same material. The direction D1 of the optical axis of the nonlinear optical element 12G of the light emitting unit 2 with respect to the incident light and the direction D2 of the optical axis of the nonlinear optical element 17G of the light generation unit 4 with respect to the incident light are reversed. In this case, the influence of the walk-off is reduced by a simple configuration.

For example, in the optical device 1I, the optical axis AX of the birefringent element 14I is inclined with respect to the incident surface 14a of the birefringent element 14I such that the walk-off occurring in the nonlinear optical element 12G of the light emitting unit 2 is reduced. In this case, the influence of the walk-off is reduced without depending on the disposition of the nonlinear optical element.

For example, in the optical device 1L, the nonlinear optical element 17L of the light generation unit 4 and the birefringent element are joined to each other. In this case, a propagation path in the air is reduced, and the deviation between the phases caused by air dispersion is reduced.

For example, the optical devices 1P or 1Q further include the light detection unit 75 detecting the light emitted from the nonlinear optical element 17P of the light generation unit 4. The element control unit 15 performs feedback control on at least one of the temperature of the birefringent element 14 and the voltage applied to the birefringent element 14 on the basis of the detection result of the light detection unit 75. In this case, it is possible to generate light having a desired wavelength with higher accuracy and stability.

For example, in the optical devices 1P and 1Q, the element control unit 15 acquires the target value of light intensity and performs feedback control on at least one of the temperature of the birefringent element 14 and the voltage applied to the birefringent element 14 such that the intensity of the light detected by the light detection unit 75 is matched with the acquired target value. In this case, light having a desired wavelength and a desired intensity can be output more stably.

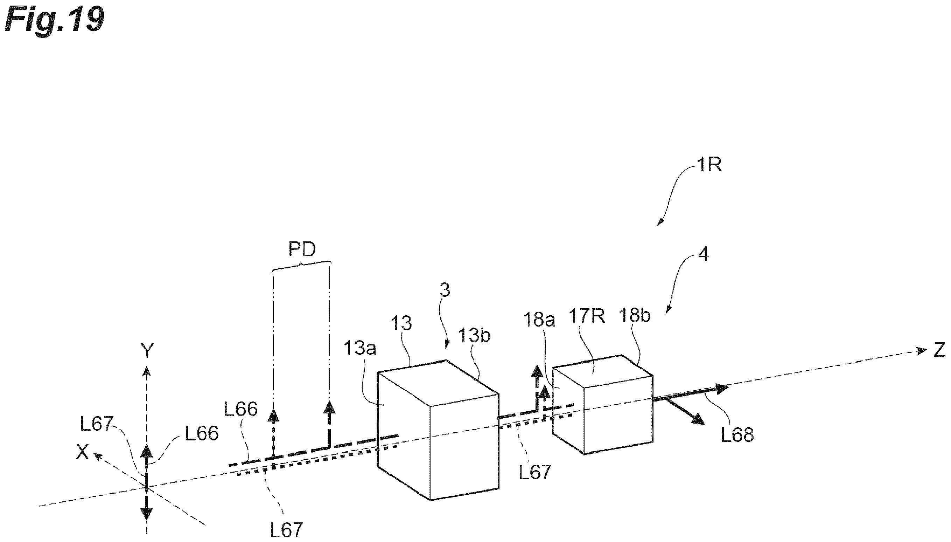

Next, an optical device 1R according to a modification example of this embodiment will be described in more detail with reference to FIG. 19. FIG. 19 is a partially enlarged view illustrating an optical system of the optical device 1R. This modification example is substantially similar to or the same as the above-described embodiment. This modification example differs from the above-described embodiment in that only light components having the same polarization direction are incident on the phase control element 13. Hereinafter, the differences from the above-described embodiment will be described.

In this modification example, the phase control element 13 of the phase adjustment unit 3 may not include the birefringent element 14. For example, the phase control element 13 of the optical device 1R is made of glass. The light generation unit 4 includes a nonlinear optical element 17R instead of the nonlinear optical element 17.

As a further modification example of this modification example, the phase control element 13 of the optical device 1R may be made of a crystal having birefringence and axiality or a crystal that has birefringence but does not have axiality. The phase control element 13 of the optical device 1R may be configured by the birefringent element 14.

The phase control element 13 of the optical device 1R includes an incident surface 13a on which light is incident and an emission surface 13b from which light is emitted. The incident surface 13a and the emission surface 13b are opposite to each other. The incident surface 13a and the emission surface 13b correspond to the incident surface 14a and the emission surface 14b in the embodiment and other modification examples, respectively.

Light L66 and light L67 are incident on the incident surface 13a of the phase control element 13. The light L66 has the same configuration as the light L1 except for the frequency and the configuration for the nonlinear optical element 17R. The light L67 has the same configuration as the light L2 except for the frequency and the configuration for the nonlinear optical element 17R.

In this modification example, the light L66 and the light L67 have different frequencies. The light L66 and the light L67 have, for example, the same polarized component. The light L66 and the light L67 are, for example, linearly polarized light components having the same polarization direction parallel to the incident surface 13a. For example, the light L66 and the light L67 are polarized in the Y-axis direction.

The light L66 and the light L67 emitted from the phase control element 13 of the optical device 1R are incident on the nonlinear optical element 17R. The nonlinear optical element 17R generates a sum frequency using, for example, the phase matching or the quasi-phase matching. The nonlinear optical element 17R generates the sum frequency on the basis of the TYPE-1 phase matching. When the phase matching or the quasi-phase matching is satisfied, the nonlinear optical element 17R generates light L68 as the sum frequency as the light L66 and the light L67 are incident on an incident surface 18a and emits the generated light L68 from an emission surface 18b. The nonlinear optical element 17R transmits a portion of the incident light L66 and light L67 and emits the transmitted light together with the light L68 from the emission surface 18b, which is not illustrated in FIG. 19. The light L68 has a frequency different from the frequency of at least one of the light L66 and the light L67. In the example illustrated in FIG. 19, the light L66 corresponds to the first light, the light L67 corresponds to the second light, and the light L68 corresponds to the third light.

As a further modification example of this modification example, the nonlinear optical element 17R may be, for example, a nonlinear optical element generating a nonlinear optical process other than the sum frequency using the phase matching or the quasi-phase matching. For example, the nonlinear optical element 17R may be a nonlinear optical element generating a difference frequency using the phase matching or the quasi-phase matching or may be a nonlinear optical element generating an optical parametric process. The nonlinear optical element 17R may be, for example, a nonlinear optical element generating a difference frequency on the basis of the TYPE-1 phase matching.

Even in this modification example, the element control unit 15 controls at least one of the temperature of the phase control element 13 and the voltage applied to the phase control element 13. For example, the element control unit 15 controls at least one of the temperature of the phase control element 13 and the voltage applied to the phase control element 13 such that a phase difference PD between the light L66 and the light L67 is reduced in the incident surface 18a of the nonlinear optical element 17R of the light generation unit 4.

For example, the element control unit 15 controls the refractive index of the phase control element 13 such that the phase difference between the light L66 and the light L67 is reduced in the incident surface 18a of the nonlinear optical element 17R of the light generation unit 4. For example, the element control unit 15 controls the refractive index of the phase control element 13 such that the phase difference between the light L66 and the light L67 is zero in the incident surface 18a of the nonlinear optical element 17R of the light generation unit 4.

As a further modification example of this modification example, the element control unit 15 may control the refractive index of the phase control element 13 such that the intensity of the light L68 is reduced. In this case, for example, the element control unit 15 controls the refractive index of the phase control element 13 such that the phases of the light L66 and the light L67 deviate from each other in the incident surface 18a of the nonlinear optical element 17R of the light generation unit 4.

As a further modification example of this modification example, the element control unit 15 may control the refractive index of the phase control element 13 such that the intensity of the light L68 is maximized or minimized. In this case, the intensity of the light L68 may be detected by a light detection unit (not illustrated). For example, the element control unit 15 may control the refractive index of the phase control element 13 on the basis of the detection result of the light detection unit such that the intensity of the light L68 is maximized or minimized.

Next, an example of the operation and effect achieved by the optical device 1R will be described. Hereinafter, an example of the operation and effect will be described on the basis of the optical device 1R. However, optical devices having the same configuration among combinations of the optical device 1R and the optical devices 1 to 1Q also have the same operation and effect.

When the phase of light related to the nonlinear optical process is adjusted by adjusting the working length of an optical element made of a dispersion medium, strict adjustment of the working length of the optical element is required. The magnitude of phase modulation in the optical element differs depending on the frequency of light. Therefore, it is particularly difficult to adjust the phases of a plurality of light components having different frequencies by adjusting the working length of the optical element.

The first light and the second light are incident on the phase control element 13 of the optical device R. In the optical device R, the light L66 corresponding to the first light and the light L67 corresponding to the second light have different frequencies. The phase control element 13 has different refractive indexes for at least light components having different frequencies. In the optical device R, the element control unit 15 controls at least one of the temperature of the phase control element 13 and the voltage applied to the phase control element 13 to change the refractive index of the phase control element 13. As a result, the phase difference between the first light and the second light incident on the phase control element 13 can be adjusted by controlling at least one of the temperature of the phase control element 13 and the voltage applied to the phase control element 13. Since the first light and the second light emitted from the phase control element 13 are incident on the nonlinear optical element 17R, it is possible to control the phase difference between the first light and the second light incident on the nonlinear optical element 17R with higher accuracy. The optical device R can achieve more accurate control than that in the configuration in which the phase difference is controlled by adjusting the working length of the optical element. According to the optical device R, any control can be performed from a state in which the wavelength conversion efficiency of the nonlinear optical element 17R is at its maximum to a state in which no light is generated in the nonlinear optical element 17R, without changing the physical disposition of each element.

Since the first light and the second light are incident on the phase control element 13, the phases of both the first light and the second light can be controlled by one phase control element 13 at the same time. Therefore, it is possible to adjust the phases of the first light and the second light while easily achieving the spatial overlap between the light components. In other words, it is possible to easily achieve the adjustment of the phases of the first light and the second light and the suppression of beam overlap and a change in divergence angle.

According to the optical device 1R, even when the first light and the second light have the same polarization direction, it is possible to adjust the phase difference between the first light and the second light. Therefore, for example, the phase difference between the first light and the second light can be precisely adjusted by only the configuration in which the first light and the second light are incident on the phase control element 13 on the upstream side of the nonlinear optical element in TYPE-1 sum frequency generation or difference frequency generation.

The embodiment and the modification examples of the present invention have been described above. However, the present invention is not necessarily limited to the above-described embodiment, and various modifications can be made without departing from the gist of the present invention.

For example, the light emitting unit 2 may not include the light source 11. In this case, the light emitting unit 2 acquires light from the outside of the optical device 1. For example, the light emitting unit 2 may emit the light acquired from the outside of the optical device 1 to be incident on the nonlinear optical element 12.

The light emitting unit 2 may not include the nonlinear optical element 12. In this case, the light emitting unit 2 emits light generated by at least one light source 11 without passing through the nonlinear optical element 12. The light emitting unit 2 may emit light acquired from the outside without passing through the nonlinear optical element 12.

The light emitting unit 2 may include a plurality of light sources 11. In this case, the plurality of light sources 11 may emit light components having different polarization states. For example, the plurality of light sources 11 emit linearly polarized light components orthogonal to each other.

The light source 11 may emit light components having different frequency components. For example, one light source 11 emits light having a discrete spectrum. When the light emitting unit 2 includes a plurality of light sources 11, the plurality of light sources 11 may emit light components having different spectra.

A phase control element that is the same as the phase control element 13 may be provided on the further upstream side of the nonlinear optical element 12, 12C, 12D, 12E, 12F, 12G, 12H, 12I, 12J, 12K, or 12L. The "upstream side" means a light source side on the optical path and has the same meaning as the previous stage. The light emitted from the phase control element is incident on the corresponding nonlinear optical element 12, 12C, 12D, 12E, 12F, 12G, 12H, or 12I. The phase adjustment unit 3 controls the refractive index of the phase control element in the same manner as the phase control element 13 to adjust the phase of the light transmitted through the phase control element.

For example, in the optical device 1E, the birefringent element may be provided on the upstream side of the nonlinear optical element 12E, and the birefringent element may emit the polarized components L21 and L22, whose phase difference has been adjusted, to be incident on the incident surface 19a of the nonlinear optical element 12E. The phase adjustment unit 3 may control the birefringence of the birefringent element in the same manner as the birefringent element 14 to adjust the phase difference between the incident polarized components L21 and L22.

The wavelengths of the light components L1 to L31 described in the above-described embodiment and modification examples are only examples. The wavelengths of the light components L1 to L31 can be appropriately changed as long as they can be applied in the nonlinear optical process according to each example.

The configurations of the optical devices 1, 1A, 1B, 1C, 1D, 1E, 1F, 1G, 1H, 1I, 1J, 1K, 1L, 1M, 1P, 1Q, and 1R may be appropriately combined. Wavelength conversion may be performed repeatedly by arranging three or more nonlinear optical elements. For example, a nonlinear optical element emits light generated by the nonlinear optical effect as light output from a nonlinear optical element disposed on the further upstream side thereof is incident. Even in this case, a phase control element is disposed on an optical path between adjacent nonlinear optical elements, and the refractive index of the disposed phase control element is controlled by the element control unit 15. For example, the nonlinear optical element and the phase control element controlled by the element control unit 15 may be disposed alternately.

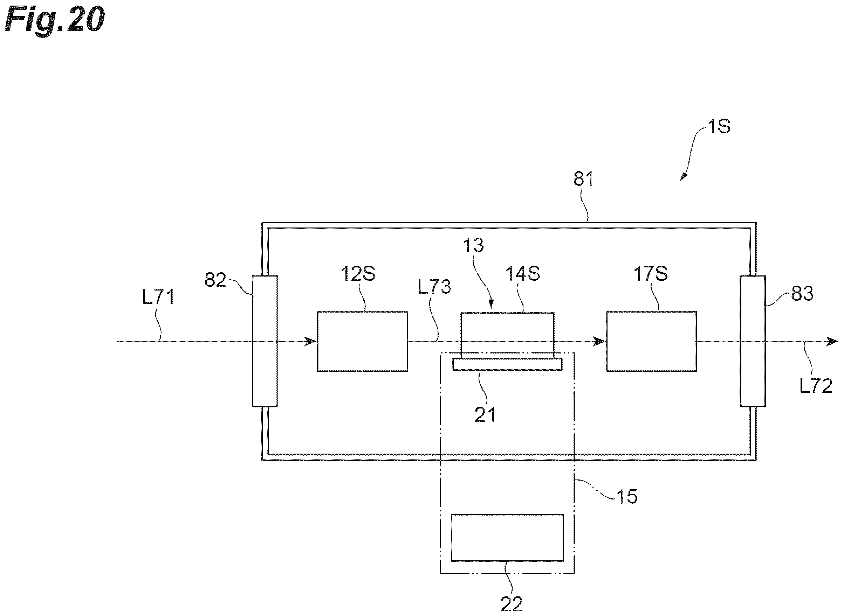

In the optical devices 1, 1A, 1B, 1C, 1D, 1E, 1F, 1G, 1H, 1I, 1J, 1K, 1L, 1M, 1P, 1Q, and 1R and combinations thereof, the nonlinear optical element and the phase control element may be disposed in a hermetically sealed housing. The housing has, for example, a configuration that can be evacuated or filled with inert gas. For example, the inside of the housing may be evacuated in advance or may be filled with inert gas in advance. The inert gas is, for example, nitrogen. FIG. 20 is a partially enlarged view illustrating an optical device 1S corresponding to an example of the optical device having these configurations.

In FIG. 20, the optical device 1S includes a housing 81, window members 82 and 83, a nonlinear optical element 12S, a birefringent element 14S, a nonlinear optical element 17S, and an element control unit 15. The housing 81 is hermetically sealed by the window members 82 and 83. For example, the inside of the housing 81 is in a vacuum state. The housing 81 may be filled with inert gas. The inert gas is, for example, nitrogen.

The nonlinear optical element 12S, the birefringent element 14S, and the nonlinear optical element 17S are arranged in the housing 81. The nonlinear optical element 12S is provided on the upstream side of the birefringent element 14S. The nonlinear optical element 12S corresponds to, for example, the nonlinear optical element 12. The birefringent element 14S is disposed between the nonlinear optical element 12S and the nonlinear optical element 17S. The birefringent element 14S corresponds to, for example, the birefringent element 14. The nonlinear optical element 17S is provided on the downstream side of the birefringent element 14S. The nonlinear optical element 17S corresponds to, for example, the nonlinear optical element 17. According to this configuration, the deterioration of the states of the nonlinear optical element 12S, the birefringent element 14S, and the nonlinear optical element 17S caused by, for example, the deliquescence of the nonlinear optical element 12S, the birefringent element 14S, and the nonlinear optical element 17S is suppressed.

For example, the window member 82 is transparent to light L71 incident on the nonlinear optical element 12S. For example, the window member 83 is transparent to light L72 emitted from the nonlinear optical element 17S.

The light L71 is, for example, light emitted from the light source 11. For example, the nonlinear optical element 12S emits light L73 as the light L71 is incident. The light L73 emitted from the nonlinear optical element 12S is incident on the nonlinear optical element 17S through the birefringent element 14S. For example, the nonlinear optical element 17S emits the light L72 as the light L73 is incident.

A temperature adjustment unit 21 of the element control unit 15 is disposed in the housing 81. In the configuration illustrated in FIG. 20, the temperature adjustment unit 21 is in contact with the birefringent element 14R. For example, the temperature adjustment unit 21 is connected to a temperature control unit 22 disposed outside the housing 81 wirelessly or in a wired manner.

### Reference Signs List

1, 1A, 1B, 1C, 1D, 1E, 1F, 1G, 1H, 1I, 1J, 1K, 1L, 1M, 1P, 1Q, 1R, 1S: optical device, 2: light emitting unit, 3: phase adjustment unit, 4: light generation unit, 12, 12C, 12D, 12E, 12F, 12G, 12H, 12I, 12J, 12K, 12L, 12, 12S, 17, 17A, 17B, 17C, 17D, 17E, 17F, 17G, 17H, 17I, 17J, 17K, 17L, 17P, 17R, 17S: nonlinear optical element, 14, 14I, 14L, 14M, 14N, 14S, 44, 45, 46: birefringent element, 14a, 18a: incident surface, L1, L2, L3, L4, L5, L6, L7, L8, L9, L10, L11, L12, L13, L14, L15, L16, L17, L18, L19, L20, L23, L24, L25, L26, L27, L28, L29, L30, L31, L35, L36, L37, L38, L39, L41, L42, L43, L44, L45, L46, L47, L48, L49, L50, L51, L52, L53, L54, L55, L56, L57, L58, L59, L60, L61, L66, L67, L68, L71, L72, L73: light, AX: optical axis, D1, D2: direction, I: intensity, L21, L22: polarized component, PD: phase difference, β: voltage.

## Claims

1. An optical device comprising:
a light emitting unit emitting first light and second light having different polarization states;
a phase adjustment unit adjusting a phase difference between the first light and the second light emitted from the light emitting unit; and
a light generation unit generating third light on the basis of the first light and the second light whose phase difference has been adjusted by the phase adjustment unit,
wherein the phase adjustment unit includes a birefringent element on which the first light and the second light are incident and a control unit controlling at least one of a temperature of the birefringent element and a voltage applied to the birefringent element,
the light generation unit includes a nonlinear optical element generating the third light on the basis of at least one of the first light and the second light, and
the first light and the second light emitted from the birefringent element are incident on the nonlinear optical element of the light generation unit.

2. The optical device according to claim 1,
wherein the birefringent element is disposed such that a propagation direction of at least one of the first light and the second light in the birefringent element and an optical axis of the birefringent element intersect each other.

3. The optical device according to claim 1 or 2,
wherein the nonlinear optical element of the light generation unit is disposed such that an optical axis of the nonlinear optical element of the light generation unit is parallel to a first virtual plane parallel to the optical axis of the birefringent element and the propagation direction of the at least one of the first light and the second light in the birefringent element or is parallel to a second virtual plane that is orthogonal to the first virtual plane and is parallel to the propagation direction of the at least one light component.

4. The optical device according to any one of claims 1 to 3,
wherein the polarization state of one of the first light and the second light incident on the birefringent element is linearly polarized light that is parallel to a virtual plane parallel to the propagation direction of the one light component and the optical axis of the birefringent element.

5. The optical device according to any one of claims 1 to 4,
wherein the polarization state of one of the first light and the second light incident on the birefringent element is linearly polarized light that is orthogonal to a virtual plane parallel to the propagation direction of the one light component and the optical axis of the birefringent element.

6. The optical device according to any one of claims 1 to 5,
wherein the first light and the second light have different frequencies.

7. The optical device according to any one of claims 1 to 6,
wherein the nonlinear optical element of the light generation unit has an incident surface on which the first light and the second light are incident, and
the control unit controls at least one of the temperature of the birefringent element and the voltage applied to the birefringent element to adjust the phase difference between the first light and the second light in the incident surface of the nonlinear optical element of the light generation unit.

8. The optical device according to claim 7,
wherein the control unit controls at least one of the temperature of the birefringent element and the voltage applied to the birefringent element such that phases of the first light and the second light are matched with each other in the incident surface of the nonlinear optical element of the light generation unit.

9. The optical device according to any one of claims 1 to 8,
wherein the third light has a frequency different from the frequencies of the first light and the second light.

10. The optical device according to any one of claims 1 to 9,
wherein the nonlinear optical element of the light generation unit generates the third light using a nonlinear optical effect according to the first light and the second light.

11. The optical device according to any one of claims 1 to 10,
wherein the frequency of the third light is a sum of the frequency of the first light and the frequency of the second light.

12. The optical device according to any one of claims 1 to 10,
wherein the frequency of the third light is a difference between the frequency of the first light and the frequency of the second light.

13. The optical device according to any one of claims 1 to 10,
wherein the first light incident on the nonlinear optical element of the light generation unit is pump light,
the second light incident on the nonlinear optical element of the light generation unit is signal light having a lower intensity than the pump light, and
the nonlinear optical element of the light generation unit emits, as the third light, light obtained by adjusting the intensity of the signal light on the basis of the incident first light and second light.

14. The optical device according to any one of claims 1 to 13,
wherein the light emitting unit includes a nonlinear optical element emitting the first light and the second light to be incident on the birefringent element.

15. The optical device according to any one of claims 1 to 8,
wherein the light emitting unit includes a nonlinear optical element that generates a second harmonic as the second light on the basis of a fundamental wave and emits the fundamental wave as the first light together with the second light, and
the nonlinear optical element of the light generation unit generates a second harmonic as the third light on the basis of the incident first light and combines the second light and the third light.

16. The optical device according to any one of claims 1 to 13,
wherein the light emitting unit includes a nonlinear optical element that generates fourth light having a polarization state different from the polarization state of the first light or the second light on the basis of the first light and the second light and emits the first light and the second light together with the fourth light, and
the nonlinear optical element of the light generation unit is disposed such that the first light, the second light, and the fourth light emitted from the birefringent element are incident thereon and combines the third light and the fourth light.

17. The optical device according to claim 16,
wherein the frequency of the third light and the frequency of the fourth light are the sum of the frequency of the first light and the frequency of the second light.

18. The optical device according to claim 16,
wherein the frequency of the third light and the frequency of the fourth light are the difference between the frequency of the first light and the frequency of the second light.

19. The optical device according to any one of claims 1 to 13,
wherein the light emitting unit includes a nonlinear optical element that generates, as the second light, light having a polarization state different from the polarization state of the first light or fourth light having the same polarization state as the first light on the basis of the first light and the fourth light and emits the first light, the second light, and the fourth light together, and
the nonlinear optical element of the light generation unit is disposed such that the first light, the second light, and the fourth light emitted from the birefringent element are incident thereon and combines the second light and the third light.

20. The optical device according to claim 19,
wherein the frequency of the second light and the frequency of the third light are a sum of the frequency of the first light and a frequency of the fourth light.

21. The optical device according to claim 19,
wherein the frequency of the second light and the frequency of the third light are a difference between the frequency of the first light and a frequency of the fourth light.

22. The optical device according to any one of claims 1 to 11,
wherein the light emitting unit includes a nonlinear optical element that generates, as fourth light, a second harmonic having a polarization direction different from a second direction on the basis of a fundamental wave including polarized components in a first direction and the second direction orthogonal to each other and emits the polarized component of the fundamental wave in the first direction as the first light and the polarized component of the fundamental wave in the second direction as the second light together with the fourth light, and
the nonlinear optical element of the light generation unit is disposed such that the first light, the second light, and the fourth light emitted from the birefringent element are incident thereon, generates a second harmonic as the third light on the basis of the incident first light and second light, and combines the third light and the fourth light.

23. The optical device according to any one of claims 1 to 10, 12, and 13,
wherein the light emitting unit includes a nonlinear optical element that generates the second light having a polarization state different from a polarization state of pump light and fourth light having a polarization state different from the polarization state of the pump light and having a frequency different from the frequency of the second light on the basis of the pump light and emits the pump light as the first light
together with the second light and the fourth light, and
the nonlinear optical element of the light generation unit is disposed such that the first light, the second light, and the fourth light emitted from the birefringent element are incident thereon, generates fifth light having the same polarization state and frequency as the second light and sixth light having the same polarization state and frequency as the fourth light on the basis of the incident first light, second light, and fourth light, combines the second light and the fifth light and combines the fourth light and the sixth light to amplify an intensity of at least one of the second light and the fourth light, and emits the combined light as the third light.

24. The optical device according to any one of claims 1 to 10, 12, and 13,
wherein the light emitting unit includes a nonlinear optical element that generates fourth light having the same polarization state as pump light and the second light having a polarization state different from the polarization state of the pump light and having a frequency different from a frequency of the fourth light on the basis of the pump light and emits the pump light as the first light together with the second light and the fourth light, and
the nonlinear optical element of the light generation unit is disposed such that the first light, the second light, and the fourth light emitted from the birefringent element are incident thereon, generates fifth light having the same polarization state and frequency as the second light and sixth light having the same polarization state and frequency as the fourth light on the basis of the incident first light, second light, and fourth light, combines the second light and the fifth light and combines the fourth light and the sixth light to amplify an intensity of at least one of the second light and the fourth light, and emits the combined light as the third light.

25. The optical device according to claim 23 or 24,
wherein the control unit controls at least one of the temperature of the birefringent element and the voltage applied to the birefringent element such that the phases of the first light and the second light are matched with each other and the phase of the first light and the phase of the fourth light deviate from each other.

26. The optical device according to any one of claims 14 to 25,
wherein the nonlinear optical element of the light emitting unit and the nonlinear optical element of the light generation unit are made of the same material, and
a direction of an optical axis of the nonlinear optical element of the light emitting unit with respect to incident light is opposite to a direction of the optical axis of the nonlinear optical element of the light generation unit with respect to incident light.

27. The optical device according to any one of claims 14 to 26,
wherein the birefringent element includes an incident surface on which the first light and the second light are incident, and
the optical axis of the birefringent element is inclined with respect to the incident surface of the birefringent element such that walk-off occurring in the nonlinear optical element of the light emitting unit is reduced.

28. The optical device according to any one of claims 1 to 27,
wherein the nonlinear optical element of the light generation unit and the birefringent element are joined to each other.

29. The optical device according to any one of claims 1 to 28, further comprising:
a light detection unit detecting the light emitted from the nonlinear optical element of the light generation unit,
wherein the control unit performs feedback control on at least one of the temperature of the birefringent element and the voltage applied to the birefringent element on the basis of a detection result of the light detection unit.

30. The optical device according to claim 29,
wherein the control unit acquires a target value of an intensity of light and performs the feedback control on at least one of the temperature of the birefringent element and the voltage applied to the birefringent element such that the intensity of the light detected by the light detection unit is matched with the acquired target value.

31. An optical device comprising:
a light emitting unit emitting first light and second light having different frequencies;
a phase adjustment unit adjusting a phase difference between the first light and the second light emitted from the light emitting unit; and
a light generation unit generating third light on the basis of the first light and the second light whose phase difference has been adjusted by the phase adjustment unit,
wherein the phase adjustment unit includes a phase control element on which the first light and the second light are incident and a control unit controlling at least one of a temperature of the phase control element and a voltage applied to the phase control element,
the light generation unit includes a nonlinear optical element generating the third light on the basis of at least one of the first light and the second light, and
the first light and the second light emitted from the phase control element are incident on the nonlinear optical element of the light generation unit.

32. A light generation method comprising:
allowing first light and second light having different polarization states to be incident on a birefringent element;
allowing the first light and the second light to be incident on a nonlinear optical element; and
controlling at least one of a temperature of the birefringent element and a voltage applied to the birefringent element to adjust a phase difference between the first light and the second light,
wherein the first light and the second light emitted from the birefringent element are incident on the nonlinear optical element.

33. A light generation method comprising:
allowing first light and second light having different frequencies to be incident on a phase control element;
allowing the first light and the second light to be incident on a nonlinear optical element; and
controlling at least one of a temperature of the phase control element and a voltage applied to the phase control element to adjust a phase difference between the first light and the second light,
wherein the first light and the second light emitted from the phase control element are incident on the nonlinear optical element.
